# EUROPEAN PATENT SPECIFICATION

(11) **EP 0 520 034 B1**
(45) Date of publication and mention of the grant of the patent: **10.01.1996**
(21) Application number: 91907338.7
(22) Date of filing: 13.03.1991
(51) Int. Cl.: G01N 21/89, G06T 7/40

(54) **WEB INSPECTION SYSTEM**
GEWEBEBAND-INSPEKTIONSSYSTEM
SYSTEME D'INSPECTION DE BANDES

(30) Priority: 13.03.1990 US 493011
(43) Date of publication of application: 30.12.1992
(73) Proprietor: E.I. DU PONT DE NEMOURS AND COMPANY, Wilmington, DE 19880-0017 (US)
(72) Inventor: GUAY, Jean-Louis, C., Columbus, OH 43228 (US)
(74) Representative: Driver, Virginia Rozanne
(86) International application number: US9101666
(87) International publication number: WO9114173

(56) References cited:
- EP-A- 0 350 680
- EP-A- 0 366 235
- EP-A- 0 369 585
- DE-A- 3 833 752
- DE-C- 3 636 192
- US-A- 4 223 346

## Description

### Background of the Invention

### Technical Field

The present invention relates to an apparatus for detecting defects in moving webs such as sheets of plastic film, and particularly to web inspection systems which can scan the web and detect defects in real time as the web is being manufactured.

### Description of the Prior Art

The prior art, as exemplified in U.S. Patents No. 3,781,117, No. 4,170,419 and No. 4,752,897, contains a number of web inspection systems which employ a linear array of photodiodes or a linear array of light sensitive charge coupled devices (CCD) upon which an image of a crosswise strip of the moving film is projected. Each photodiode or light sensitive device corresponds to one pixel (picture element) of the strip and generates an electrical charge which is proportional to the light impinging upon the sensing element. The electrical charges are transferred in parallel from the sensing elements into shift registers and are then serially read out and processed. Generally prior art inspection systems can detect only relative large area defects, i.e. larger than 0.1 inches (2.5 mm) in diameter, or must be operated off line at low web speeds to detect smaller defects. The above mentioned patent 4,170,419 discloses an array of twelve cameras viewing a field of 76.8 inches, 6.4 inches each. The cameras are grouped into groups of four, each group connected to a printed circuit board containing an amplifier and an analog to digital converter for each camera. A multiplexer and shift register arrangement combines the outputs of the twelve analog to digital converters into data streams for each strip of pixels which are fed to a shift memory holding several lines of pixels. Logic circuitry sums blocks of pixel values and compares with multiples of selected test pixel values to determine a defect. The above mentioned patents 3,781,117 and 4,752,897 detect transitions in the serial output signals and store counts of pixel counters which are processed. The patent 4,752,897 utilizes four parallel processors to receive and process respective successive 64 byte segments of the stored data and transmit analysis data to a host computer.

The prior art also contains time delay integration (TDI) charge coupled devices, as exemplified in U.S. Patent 4,433,346 and German Patentschrift DE 3,636,192, which employ two-dimensional sensing arrays with facilities for transferring charges from row to row in correspondence with movement of images projected on the arrays. The above mentioned patent 4,433,346 employs a TDI CCD in a document or picture scanner where either the movement of a document over a scanning aperture, or the sweep of a beam over the document is controlled to correspond to the line to line transfer charge frequency of the CCD array. The above mentioned German DE 3,636,192 discloses an analog tachometer producing a voltage which is linearized and converted to a frequency proportional to travel speed of a workpiece to control scanning speed of the CCD sensor. The charge for each image pixel is continuously integrated as it moves in the corresponding column of the array. When a row of charges reaches the edge of the array, the charges in the row are transferred in parallel to four shift registers and outputted in four serial streams. A TDI CCD array provides increased scanning speed and sensitivity to low light conditions relative to linear arrays or frame exposure arrays.

The prior art contains disclosures relative to trainability of programs to recognize different types of defects, such as disclosed in U.S. Patent 4,237,539. Sets of detected features are saved, and then correlated, off line, with known visual defects to refine inspection acceptance limits.

In spite of recent increases in electronic data processing speeds and functionability, the prior art moving web inspection techniques are not capable of detecting sufficiently small defects (e.g. defects with a diameter of one mil or 25.4 microns) in plastic film at production speeds (e.g. 300 feet or 100 meters per minute).

According to the present invention there is provided an apparatus for detecting defects in a moving web comprising an encoder for generating pulses at a frequency proportional to the speed of the moving web, a charge coupled two dimensional array sensor having means for operating in a time-delay-and-integration mode, means for imaging an area of the moving web on the array sensor, said time-delay-and-integration operating means including means responsive to the pulses generated by the encoder for transferring charges in the array to adjacent rows in correspondence with movement of the image across the array, said time-delay-and-integration operating means further including means for outputting an end row of pixel values between the times of the transfer of charge to adjacent rows, and means for analyzing the pixel values to detect defects; characterized in that said means for analyzing the pixel values comprises an area of memory for setting a range of acceptable values to initial values, testing means for determining whether the pixel values lie outside the acceptable range of values, and means responsive to the indication of out of range values for determining whether to redetermine the acceptable range of values based on the out of range values.

Preferably, said means responsive to the indication of out of range values comprise means to determine whether the pixel values fall within a broader range of values, and to redetermine the acceptable range if the pixel values fall within this broader range.

The apparatus for detecting defects in a moving web may employ a change coupled device (CCD) two dimensional array sensor with an image of the moving web projected thereon. The sensor is operated in a time-delay-and-integration (TDI) mode with vertical transfer of charges in response to pulses generated by an encoder detecting the speed of the moving web. The time interval for integrating light induced charge during each cycle is fixed at a predetermined interval such that the charge integration time does not vary with changes in speed of the moving web.

The apparatus may include an illumination system for a web inspection station characterized by an elongated rotatable support mounted perpendicular to the path of movement of the web, a plurality of fluorescent tubular lamps mounted longitudinally in spaced relationship about the axis of the rotatable support for being selectively moved by rotation of the support into juxtaposition with the web, means for sensing the illumination of the web to produce a signal when the illumination drops below a predetermined level, and means responsive to the signal from the sensing means for rotating the support to move another lamp into juxtaposition with the web.

The illumination system for a web inspection station may include a plurality of fluorescent tubular lamps mounted longitudinally in spaced relationship about the axis of a rotatable support extending perpendicular to the path of movement of the web. When sensed illumination of the web drops below a predetermined level, the support is rotated to move another lamp into juxtaposition with the web.

The web inspecting system may include scanning means for producing a plurality of analog scanning signals indicating a transmissivity or reflectivity condition of the web, means for converting the plurality of analog scanning signals into respective streams of digital signals indicating magnitude of the condition of the web at respective pixels thereof, memory means for temporarily storing the streams of digital signals, first digital processing means for processing the stored digital signals to detect variations of the digital signals from a predetermined value to generate an identification of the location of a defect in the stored digital signals, and second processing means responsive to the identification of the location of a defect in the stored digital signals for processing the stored digital signals to produce and temporarily store values indicating pixels above and below respective values to identify the type of defect.

An object of the invention is to construct a system for real time inspection of a moving web at resolutions suitable to detect relatively small defects.

Another object of the invention is to construct a web inspection system utilizing a charge coupled device operating in a time-delay-and-integration mode.

Still another object of the invention is to construct a web inspection system providing on line classification of defect types.

### Brief Description of the Drawings

Fig. 1 is a diagrammatic cross-sectional view of a system for inspecting webs in accordance with the invention.

Fig. 2 is a section view taken at line 2-2 in Fig. 1.

Fig. 3 is a section view taken at line 3-3 in Fig. 1.

Fig. 4 is block diagram of the electronic circuitry of the apparatus of Fig. 1.

Fig. 5 is a plan view of a modification of bus connection which can be used in Fig. 4.

Fig. 6 is an electrical schematic of a counting and logic circuit employed in Fig. 8.

Fig. 7 is an enlarged view of a broken away portion of Fig. 1 showing fields of view of two cameras.

Fig. 8 is a block diagram of circuitry on a master synchronization board in the circuitry of Fig. 4.

Fig. 9 is diagram of a CCD array with associated circuitry in one of the cameras of Fig. 1.

Fig. 10 is an enlarged view of broken away portions of the CCD array of Fig. 9.

Fig. 11 is an electrical schematic of circuitry in one of the cameras of Figs 1 and 4.

Fig. 12 is a waveform diagram of several pulse signals generated by the circuit of Fig. 11.

Fig. 13 is a modified waveform diagram of transfer and integration pulses of Fig. 12.

Fig. 14 is a further modified waveform diagram of transfer and integration pulses of Fig. 12.

Fig. 15 is an electrical schematic of a modification of the circuit of Fig. 11.

Fig. 16 is a waveform diagram of several pulse signals generated by the modified circuit of Fig. 15.

Fig. 17 is a modified waveform diagram of transfer and integration pulses of Fig. 16.

Fig. 18 is an exploded view of a video processing unit for processing the outputs of one camera unit in the apparatus of Figs. 1 and 4.

Fig. 19 is an end view of the processing unit of Fig. 18.

Fig. 20 is a block diagram of the processing circuitry of the video processing unit of Figs. 18 and 19.

Fig. 21 is a detail view of a portion of the circuitry of Fig. 20 for capturing video display images of defects and detecting defects.

Fig. 22 is a diagram illustrating the relative arrangement of memory units as mapped into the memory address of a processor of Fig. 21.

Fig. 23 is a flow diagram of program steps in an interrupt procedure employed in the processor of Fig. 21.

Fig. 24 is a flow diagram of initial program steps in a main defect sensing procedure employed in the processor of Fig. 21.

Fig. 25 is a flow diagram of a first portion of the program steps in a main defect sensing procedure employed in the processor of Fig. 21 and following the steps of Fig. 24.

Fig. 26 is a flow diagram of a second portion of the program steps in the main defect sensing procedure employed in the processor of Fig. 21 and called from Fig. 25.

Fig. 27 is a flow diagram of a third portion of the program steps in the main defect sensing procedure employed in the processor of Fig. 21 and called from Fig. 25.

Fig. 28 is a flow diagram of program steps of a first portion of an area of interest search procedure called from the procedure of Figs. 25 and 27.

Fig. 29 is a flow diagram of program steps of a second portion of the area of interest search procedure called from the procedure of Fig. 28.

Fig. 30 is a flow diagram of program steps of a third portion of the area of interest search procedure called from the procedure of Fig. 29.

Fig. 31 is a flow diagram of program steps of a fourth portion of the area of interest search procedure called from the procedure of Fig. 29.

Fig. 32 is an illustration of line pixel segments defining a defect and the area of interest employed in the procedures of Figs. 28-31.

Fig. 33 is an illustration of line pixel segments defining another defect and the area of interest employed in the procedures of Figs. 28-31.

Fig. 34 is a flow diagram of a modified portion of the procedure of Fig. 25 particularly used in processing of signals from a first camera for sensing the edge of the web being scanned.

Fig. 35 is a flow diagram of a modified portion of the procedure of Fig. 25 particularly used in processing of signals from a twelfth camera or end most camera.

Fig. 36 is a detailed diagram of a broken away portions of the circuitry of Fig. 20 used to process and identify web defects by single instruction multiple data processing techniques.

Fig. 37 is an electrical schematic of circuitry in a parallel processor unit employed in the circuit of Fig. 36.

Fig. 38 is an electrical schematic of an output arrangement for the parallel processors of Fig. 36.

Fig. 39 is a flow diagram of an interrupt procedure employed in a control processor of the circuit of Fig. 36.

Fig. 40 is an illustration of a defect window employed in procedures of the control processor of Fig. 36.

Fig. 41 is a flow diagram of a first portion of a main processing control procedure employed in the control processor of Fig. 36 to operate the parallel processors of Figs. 36, 37 and 38.

Fig. 42 is a flow diagram of a second portion of a main processing control procedure employed in the control processor of Fig. 36 to operate the parallel processors of Figs. 36, 37 and 38.

Fig. 43 is a flow diagram of a third portion of a main processing control procedure employed in the control processor of Fig. 36 to operate the parallel processors of Figs. 36, 37 and 38.

Fig. 44 is a flow diagram of a fourth portion of a main processing control procedure employed in the control processor of Fig. 36 to operate the parallel processors of Figs. 36, 37 and 38.

Fig. 45 is a flow diagram of a fifth portion of a main processing control procedure employed in the control processor of Fig. 36 to operate the parallel processors of Figs. 36, 37 and 38.

Fig. 46 is a flow diagram of a sixth portion of a main processing control procedure employed in the control processor of Fig. 36 to operate the parallel processors of Figs. 36, 37 and 38.

Fig. 47 is a flow diagram of a seventh portion of a main processing control procedure employed in the control processor of Fig. 36 to operate the parallel processors of Figs. 36, 37 and 38.

Fig. 48 is a graphical representation of typical registers on the video processing boards used to transfer data to the main computer.

Fig. 49 is a graphical representation of typical registers on the video processing boards used to provide access and control to the main computer.

Fig. 50 is a flow diagram of an interrupt procedure in the program of the system computer by which defect records are flagged for being received from the video processing boards.

Fig. 51 is a flow diagram of a procedure in the program of the system computer by which the defect data is read by the system computer.

Fig. 52 is a flow diagram of a procedure for changing defect definition data utilized by the system computer in response to data from a remote computer.

Fig. 53 is a flow diagram of a main defect analysis program in the system computer.

Fig. 54 is a view, with portions broken away, of a printout of defects in a film inspected by the inspection apparatus of Figs. 1-53.

Fig. 55 is a view, with portions broken away, of a printout of a summary of defects contained in the printout of Fig. 54.

### Description of the Preferred Embodiment

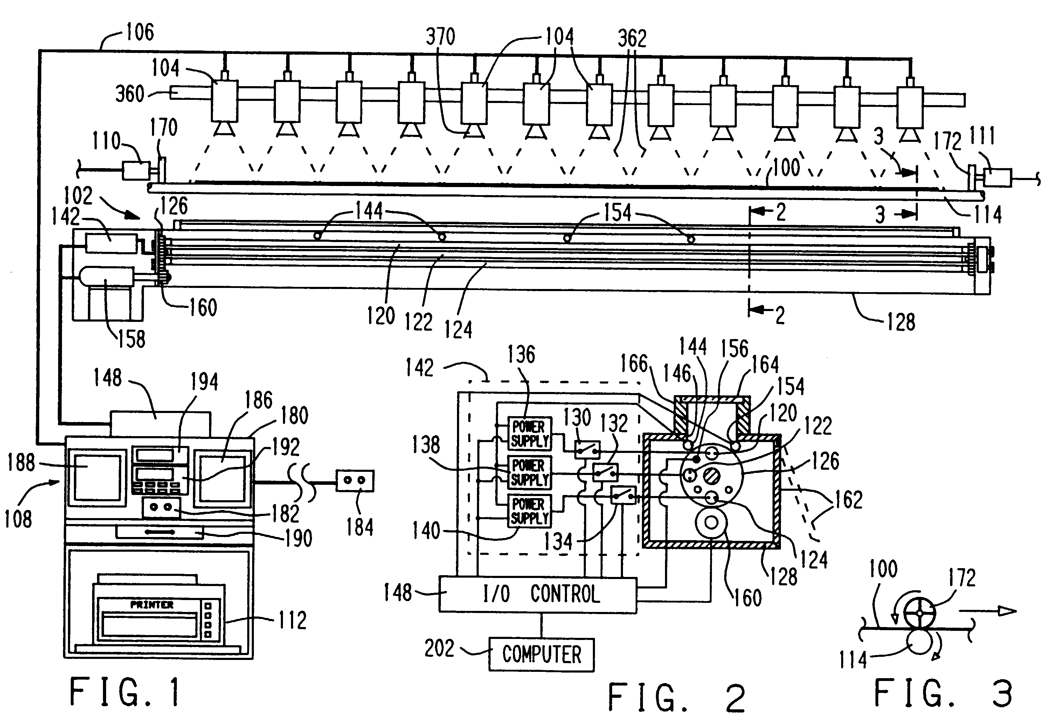

One embodiment of an apparatus, as shown in Fig. 1, for inspecting a moving web 100 in accordance with the invention includes a web illumination mechanism, indicated generally at 102, extending transversely across the web 100 for illuminating a strip of the web. One or more cameras 104 are positioned so as to view the illuminated strip of the web and to generate electrical signals in cables 106 connected to computerized defect detecting circuitry indicated generally at 108. Web speed sensors 110 and 111 generate respective trains of electrical pulses at a frequency proportional to the speed of movement of the web to control the timing of the cameras 104 and the defect detecting circuitry 108 as well as to provide pulses for counting to indicate a longitudinal position of the web at the inspection or defect sensing station. A printer 112 is provided to record and/or map the locations of all the defects in the web 100.

The web 100 being inspected is any continuous or elongated sheet material which is manufactured by a continuous or batch process and which is to be inspected for defects including small defects such as those less than 0.1 inches (2.54 mm) down to 0.001 inches (0.0254 mm) or less in diameter. Typically the web is a film of transparent or translucent polymer, for example a cast polyimide film, which needs to be inspected for defects, such as holes, bubbles, impurities, heat blisters, specks and spots, which are undesirable in certain applications, such as high temperature dielectric or electrical insulation applications, etc. The inspection station is preferably integrated with the web manufacturing station (not shown) to inspect the web output of the manufacturing station, but may be separate from the manufacturing station and employ unwinding and rewinding apparatus (not shown) to pass the web through the inspection station. A conveyor 114 carries the web 100 from the manufacturing station through the inspection station at a generally fixed speed which may be in the range from 5 to 3000 feet per minute (1.5 to 914.4 meters per minute), typically for polyimide production at about 85 feet per minute (26 meters per minute); speed variations may be about ±0.01 or less feet per minute (±0.003 meters per minute). The described embodiment positions the illumination source 102 below the moving web 100 with the cameras 104 positioned above the web so as to utilize the light transmission properties of the web to detect the defects. For some types of web materials, it is more suitable to position the illumination source 102 on the same side of the web 100 as the cameras 104 and to utilize the light absorption and/or reflection properties of the web to detect defects.

As illustrated in Figs. 1 and 2, the illumination system 102 includes three slit lamp type fluorescent tubes 120, 122 and 124 which are mounted in spaced, angular relationship, ninety degrees apart, around the periphery of a rotatable support 126 contained in a housing 128. The lamps 120, 122 and 124 are selectively connected by switches 130, 132 and 134 to respective controlled power supplies 136, 138 and 140 which, when activated, automatically control the illumination output of the respective lamps. The switches 130, 132 and 134 and the power supplies 136, 138 and 140 form a light control circuit 142. A pair of light sensors 144 are mounted in an elongated top opening 146 of the housing 128 to sense the light flux output of the uppermost lamp. These sensors 144 are connected to inputs of the power supplies 136, 138 and 140. Outputs of an input-output unit 148 operated by a computer 202 in the circuitry 108 are connected to second inputs of the power supplies to provide signals controlling the output voltage to the slit lamp type fluorescent tubes 120, 122 and 124.

The power supplies 136, 138 and 140 are conventional direct current or high frequency (60 KHz) sources designed to maintain, by feedback from the sensors 144, a constant non-flickering light flux output from the energized fluorescent lamp at the light intensity level commanded by the input-output control unit 148. The input-output unit 148 is also a conventional computer input-output unit for receiving and transmitting a plurality of digital and analog control signals.

A second pair of sensors 154 are connected to the input-output control 148 to enable the computer 202 to determine if the lamp at the uppermost position is burned out. The input-output control 148 is connected to the switches 130, 132 and 134, a solenoid of a retractable locking pin 156, and a motor 158 which is connected by gear 160 to the rotating support 126 so that, when the lamp 120 is burned out, the computer via the input-output control can release and rotate the support 126 to position the next lamp 122 into the uppermost position where the support 126 is again locked in position by the pin 156. Simultaneously with the movement of the new lamp into position, the switch 130 is deenergized, the switch 132 is energized, the power supply 136 is deactivated, and the power supply 138 is activated. In the event that the lamp 122 burns out, the lamp 124 is rotated into the uppermost position and is energized by activating the power supply 140 and the switch 134. A door 162 on the side of the housing 128 provides access to replace the lamps 120, 122 and 124. A light diffuser plate 164 is mounted by a support 166 over the opening 146 to provide uniform illumination of the illuminated transverse strip of web.

The speed sensors 110 and 111 are conventional pulse encoders with respective wheels 170 and 172 driven by the web or the conveyor rollers 114, see also Fig. 3. The encoders generate pulses indicating each increment or pixel of movement of the web. For a pixel size of 2.5 mil (0.064 mm), 4800 pulses are generated for each foot (15,749 pulses per meter) of movement of the web; for a pixel size of 5 mil (0.127 mm), 2400 pulses are generated for each foot (7,874 pulses per meter) of movement of the web; and for a pixel size of 10 mil (0.254 mm), 1200 pulses are generated for each foot (3,937 pulses per meter) of movement of the web.

A cabinet 180, Fig. 1, contains the signal processing circuitry 108. Push button switches 182 and remote 184 control the start and end of an inspection run of the inspection station. Mounted in the front of the cabinet are a defect display monitor 186, a computer control monitor 188, a computer keyboard drawer 190, a footage or length display 192 to indicate the length of the web having passed through the inspection station, and a velocity display 194 for indicating the speed of the web passing through the inspection station.

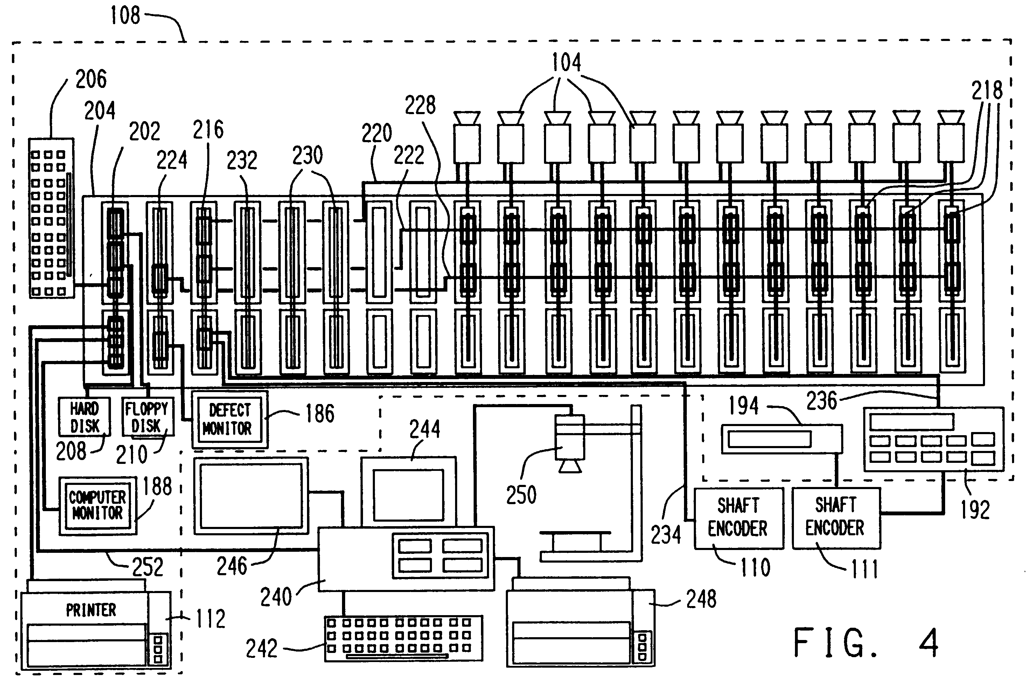

As shown in Fig. 4, the signal processing circuitry 108 includes a conventional single board computer, such as an 80286 type computer 202, installed in a connector slot of a twenty slot passive AT type commercial back plane 204. The back plane is in a conventional industrial rack mount chassis with power supply (not shown). The computer board 202 is connected to a keyboard 206 within the drawer 190 of Fig. 1, the monitor 188, the printer 112, a hard disk drive 208 and a floppy disk drive 210. A master timing and synchronization board 216 occupies another slot while data image processing boards 218 for each of the cameras 104 take up another 12 slots. Cables 220 and 222 connect the timing and synchronization board to the cameras and the image processing boards 218. An RS-170 display board 224, connected in one slot of the backplane, drives the video display 186 and is accessible over a high speed or common image transfer bus 228 by the image processing boards 218 to display defects uncovered by the image processing units 218. The board 224 is a conventional board with a FIFO input buffer designed to receive several video data frames. The other slots are spares or are occupied by memory boards such as CMOS disk emulator boards 230 and an expansion adapter 232 for attaching to another bus plane if needed. The speed sensor or encoder 110 is connected to the master synchronization board 216 by a cable 234 for providing the timing to control the system. The speed sensor or encoder 111 is connected to the counter unit 192 which displays the amount of web that has passed the encoders and provides the count to the master synchronization board over cable 236 for indicating the pixel line position on the web.

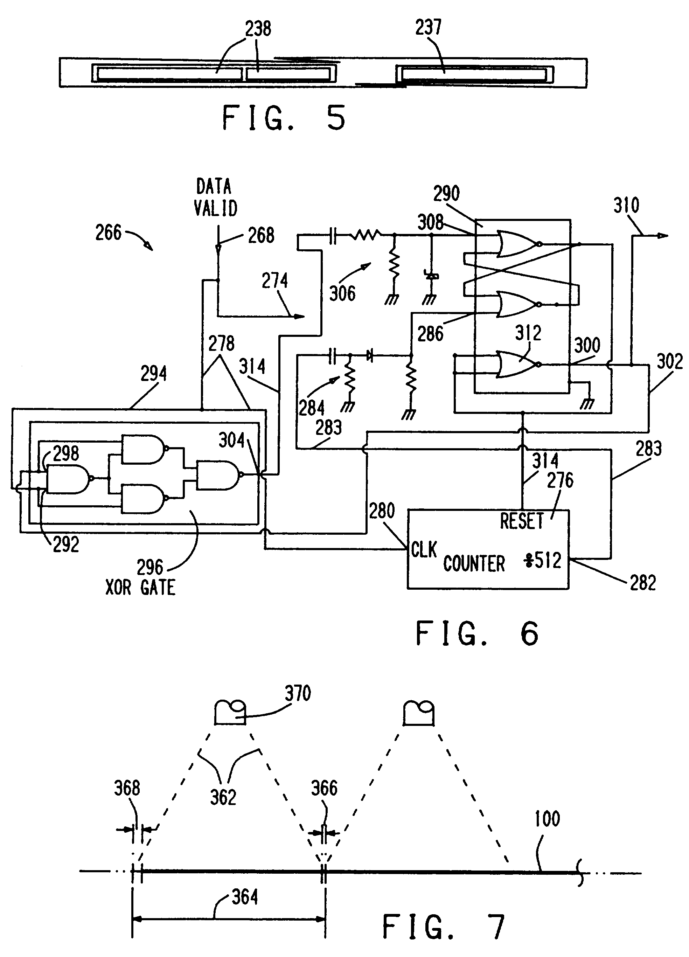

As an alternative to the AT-type backplane and high speed bus 228, one of several conventional 32-bit data path backplanes can be employed. These units employ additional bus lines and additional connectors, such as connector 237 shown in Fig. 5, in addition to the normal 16-bit data path AT-type bus lines and dual connectors 238. The dual AT-type connectors 238 have one hundred and ten pins (sixty-two and thirty-eight pins, respectively) which are controlled by the computer board 202. In the alternative 32-bit data path backplane, the additional bus lines 237 can form the common image transfer bus connecting the image processing boards 218 to the defect video display board 224 and/or the timing signal bus from the master timing board to the image processing boards 218.

A remote computer 240 having a keyboard 242, a computer monitor 244, a defect display monitor 246, a printer 248 and a camera similar to camera 104 configured as a frame type camera 250 are connected to the inspection system computer 202 by cable 252. Remote computer 240 can receive information about defects from the computer 202 as well as from the camera 250 and can send information back to the inspection system computer. For example, the remote computer 240 can be used to teach the system computer the values associated with different types of defects, as examined using camera 250, so that the main computer can print out summaries of the defects.

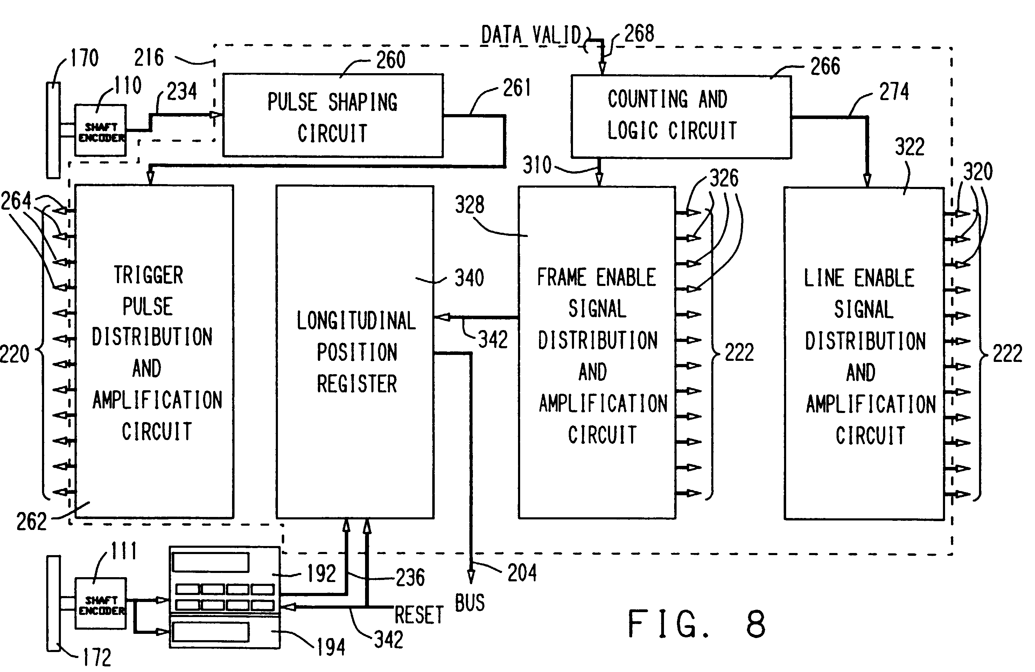

The master timing and synchronization board 216, as shown in Fig. 8, includes circuits responsive to the encoder pulses for providing suitable shaped pulses for distribution to the cameras and to the processing boards. All the cameras and the processing boards are operated in synchronism by the pulses from the encoder 110. The timing and synchronization board 216 includes a conventional pulse shaping circuit 260 which receives the pulses from the shaft encoder 110. The processed pulses on line 261 from circuit 260 are applied to a pulse distribution and amplification circuit 262 which applies the trigger pulses to lines 264 in the cable 220 to the cameras 104. Data valid signal pulses on line 268 from the second camera 104 are applied to a counting and logic circuit 266.

As illustrated in Fig. 6, the counting and logic circuit 266 includes a line 274 whereat the data valid pulse becomes a line enable high signal which has a precise high duration of 100% of the time period the output clock CR2 is active thereafter going to a low state. The latter is a line enable low signal period. There is one line enable high pulse for each horizontal line scan of the cameras and there is one line enable low period between each horizontal line scan of the cameras. A counter 276 counts the data valid high pulses from line 268, supplied over line 278 to its input 280, to five hundred and twelve. For each horizontal scan line of the second camera 104, the data valid high pulse 268 is applied so that after 512 data high pulses the counter 276 produces an output 282 which is applied via line 283 and a differentiating circuit 284 to a first input 286 of a flip-flop circuit 290 to change the state of the flip-flop. The data valid high pulse 268 is also applied to a first input 292 of an exclusive-or (XOR) gate 296, via line 294, and a second input 298 of the XOR gate 296 is received from the output 300 of the flip-flop circuit 290, via line 302. The output 304 of the XOR gate 296 is applied by a second differentiating circuit 306 to a second input 308 of the flip-flop 290 so that the flip-flop is reset. A frame enable high pulse is produced on line 310 via the output 300 from inverter 312 for the duration that the counter 276 counts five hundred and twelve data valid pulses 268. A new cycle to count five hundred and twelve data pulses 268 is triggered when line 310 is at a low state by the counter 276 being reset over line 314 output after a prior count of data valid pulses 268 or at a start of an inspection run. The frame enable signal is at a low state for only one line enable period.

Referring back to Fig. 8, the line enable high and line enable low signals on line 274 are distributed to lines 320 in the cable 222 to the image processing boards 218 by line enable signal distribution and amplification circuit 322. Similarly, the frame enable high and frame enable low signals on line 310 are distributed to lines 326 in cable 222 to the image processing boards 218 by the frame enable signal distribution and amplification circuit 328.

The master timing and synchronization board 216 receives the data on line 236 concerning the Y-position or the current length position of the web in the inspection station. This data is applied to a register circuit 340 which is updated every frame enable signal over line 342 from the circuit 328 so that the beginning web position of the current frame being processed can be read by the computer 202 over bus 204 connected to the register 340. The register 340 and the position counter 192 are reset by a signal on line 342 from the video processing unit 218 connected to the second camera 104.

The cameras 104 are mounted on a support 360, Fig. 1, over the web 100 to view respective segments of the illuminated transverse strip of the web. Preferably fields of view slightly overlap the field of view of the adjacent camera as illustrated by dashed lines 362 in Figs. 1 and 7. Also the field of view of the endmost cameras extends past the nominal edge of the web to account for variations in the web edges, and side to side movement of the moving web. In one example, a continuous sheet being inspected has a nominal width of 60.0 inches (1.52 meters), and twelve cameras each have a field of view 364 of 5.12 inches (13.004 cm) with an overlap 366 of 20 mil (0.5 mm) or eight 2.5 mil pixel between cameras to cover a total field of 61.22 inches (1.56 meters) to give a view which extends a distance 368 of about 0.61 inches (1.55 cm) past each edge of the sheet.

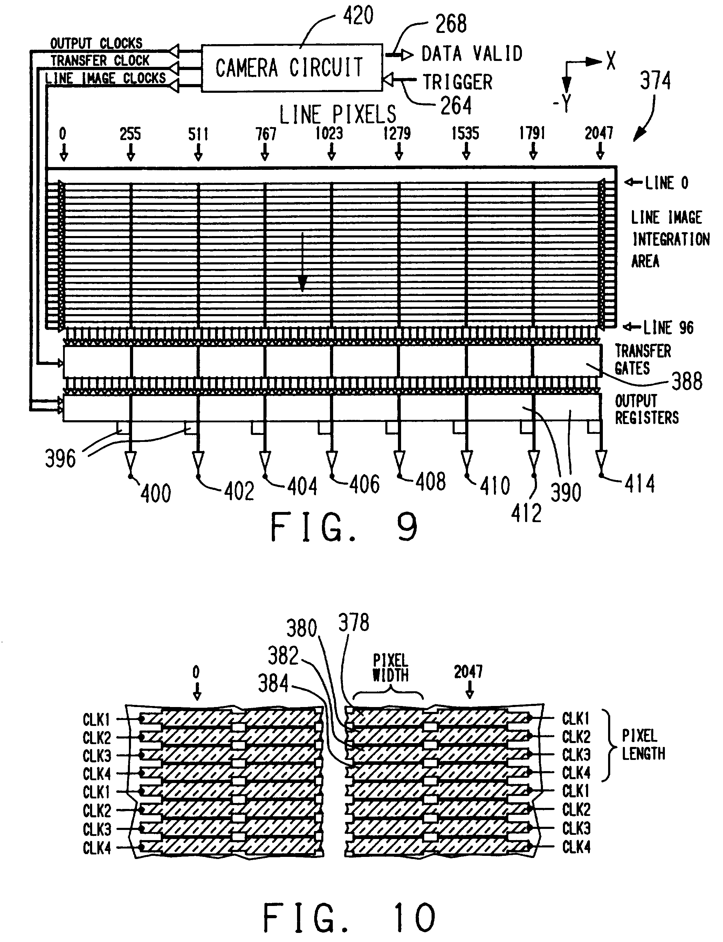

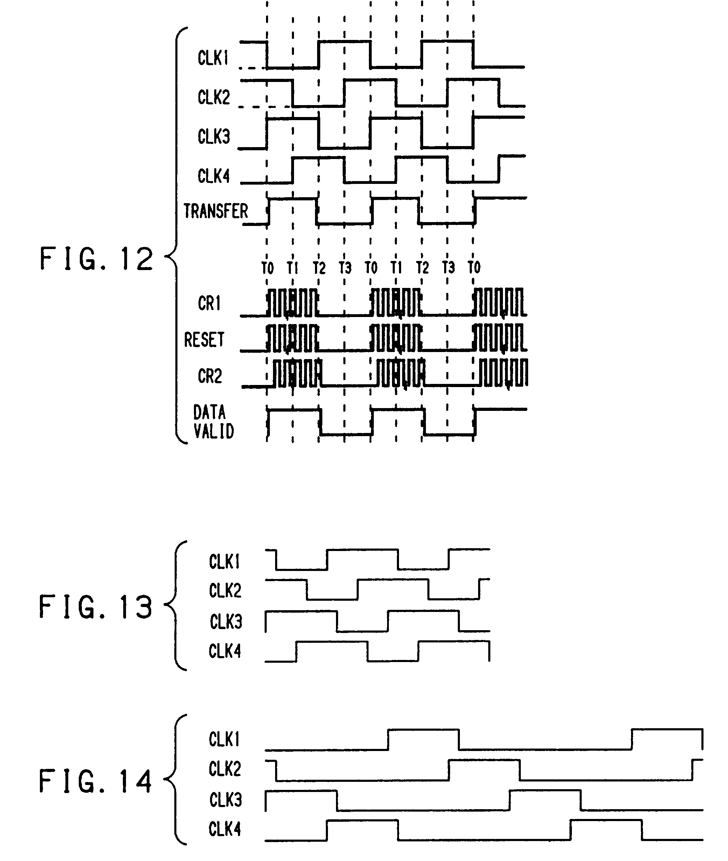

Each camera 104 includes conventional optics 370 to project the image of the respective strip segment onto a two-dimensional charged coupled device (CCD) array which is operated in a time-delay-and-integration (TDI) mode. A typical CCD array suitable for TDI is illustrated generally at 374 in Fig. 9 and includes a plurality of columns, for example 2048 columns, of pixels or photosites in the X direction (i.e. perpendicular to the direction of movement of the web) and a plurality of rows or lines, for example 96 rows or lines, of pixels or photosites in the -Y direction. Each exposed pixel or photosite, is formed by one or more electrodes, for example four transparent polysilicon electrodes 378, 380, 382 and 384 shown in Fig. 10, which when energized by an appropriate voltage or voltages, results in the accumulation of a charge proportional to an integral of the intensity of light impinging on that photosite. The first electrode in the next pixel forms a continuation of the electrode pattern in the previous pixel so that each column is a continuous pattern of electrodes. Operation in the TDI mode involves moving all of the charges in the -Y direction in correspondence with movement of the web, such as by four phase square wave signals CLK1, CLK2, CLK3 and CLK4 (see Fig. 12) to the electrodes 378, 380, 382 and 384, so that each charge continues to accumulate as it advances to the end of its column.

At the end of the column, the charges accumulated for one row of pixels are transferred by transfer gates 388 to output registers such as eight output registers 390; each register receiving the pixel charges for a corresponding segment of the row such as a 256 pixel segment of a 2047 pixel row. Each accumulated charge corresponds to the light intensity of one pixel of the web exposed 96 times. Between transfer cycles, the charges in each of the registers 390 are serially outputted through a corresponding floating diffusion area 396 and a corresponding channel or output 400, 402, 404, 406, 408, 410, 412 or 414 as an analog voltage. The outputs 400, 402, 404, 406, 408, 410, 412 and 414 produce parallel streams of pulse voltages whose analog values represent the transmissivities of corresponding web pixels in the respective row segment.

One suitable CCD TDI sensor is model IT-E2048 from Dalsa Inc., Waterloo, Ontario, Canada, which can produce eight channels 400, 402, 404, 406, 408, 410, 412 and 414 of analog signals at a frequency of up to 40 MHz per channel. For four phase square wave signals CLK1 to CLK4 having 50% duty cycle working at a speed 1/256 of the output signals, the camera line frequency would be 156,250 cycles per second. For pixels which are 2.5 mil (0.0635 mm) square, the inspection system can inspect web at a speed up to 1,953 feet per minute (595 meters per minute) of web.

Although the accumulation of a charge by a camera in the TDI mode of operation is an integration function, the light intensities and exposure times are selected so that each charge is essentially the sum of the charges produced in all the photosites in the corresponding column by the photons from the corresponding pixel on the web. The TDI mode enables a greater light integration time (96 times greater) compared to linear array or frame type cameras since with TDI the charge accumulation occurs during movement of the image of each web pixel through 96 stages or photosites whereas with linear array or frame type cameras the charge accumulation for each web pixel occurs at one fixed photosite of the CCD.

Although the advantages of speed and light integration that TDI offers over other CCD cameras is known within a limited group within the industry and the prior art, it has generally been unsuitable for application to inspection systems for moving web. Prior art TDI application, none of which are for web or surface inspection of any kind, are in the form of technical publications and literature wherein a recommended mode of operation states that the speed of movement of the image on the CCD imager's plane be controlled to equal the speed of the charge movement corresponding to the moving image passing under the camera. However, no camera exists within the prior art whereby such recommended mode of operation can be physically achieved. Generally, it is recommended, within the technical publications and literature, that charge movement down each column be conducted by applying three or more phases of pulses to the corresponding electrodes at each photosite such that the leading edge of the pulse at each succeeding electrode overlaps the trailing edge of each pulse at the preceding electrode in order to advance the charge from electrode to electrode. Generally the recommended duty cycles of the prior art phases are fixed. Although theoretically the speed of movement of the charges can be changed, by changing the recommended frequency of the phases, this would change the pulse width and integration time which could result in variation and inaccuracy in the measurement of light intensity.

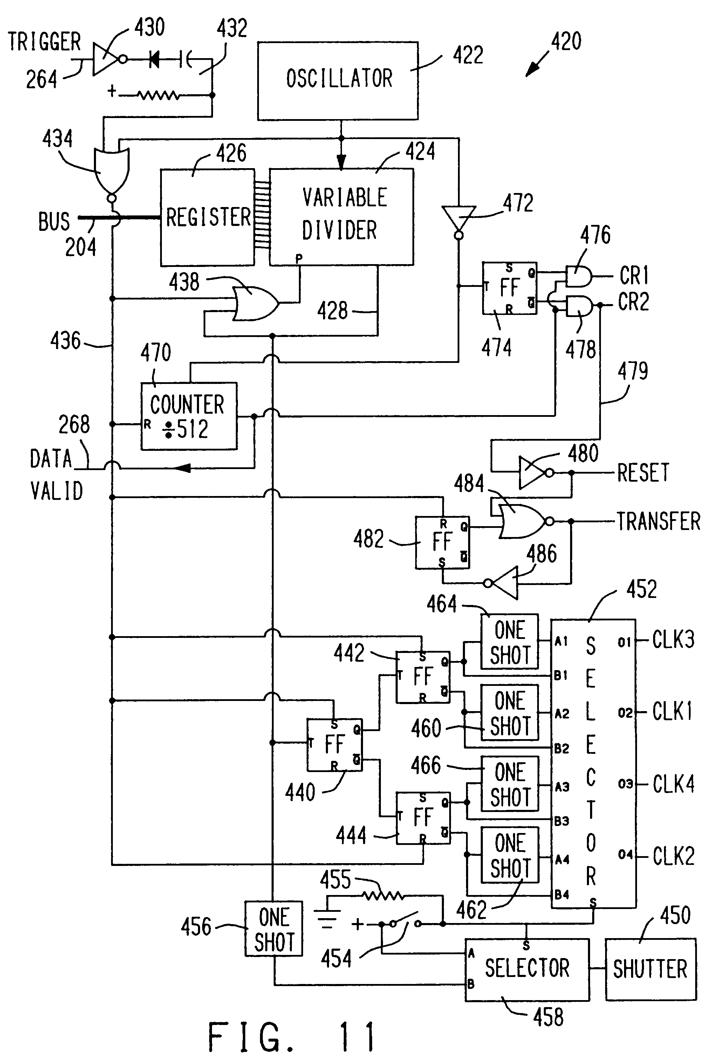

In the present CCD TDI camera in Fig. 9, a pulse generating circuit 420 receives the trigger pulses 264 from the timing and synchronization circuit 216 and generates the TDI operating signals in synchronism therewith. As shown in Fig. 11, the circuit 420 includes a clock or oscillator 422 which is connected to a variable divider 424 controlled by a register 426. The register 426 is initially set by the computer 202 over the bus 204 so that the divider 424 produces pulses on line 428 at a frequency substantially equal to four times the frequency of the trigger pulses 264. The clock 422 has a frequency which is at least 512 times the trigger pulse 264 frequency, and preferably at least 1024 times the trigger pulse 264 frequency, so the divider divides the clock by 128, or 256, or more.

The trigger pulses on line 264 pass through inverter 430 and are differentiated by differentiating circuit 432 to operate one input of a NOR gate 434 which receives the clock from oscillator 422 on its other input. The timing period of the differentiating circuit 432 is set to pass one clock pulse through the gate 434. The trigger sync signal on the output 436 of the NOR gate 434 is applied by OR gate 438 to the preset input of the divider 424 to maintain every fourth output pulse of the divider 424 in synchronism with the trigger pulse. The divider output 428 is divided by two by flip-flop 440. Non-inverting and inverting outputs of the flip-flop 440 are further divided by two by respective flip-flops 442 and 444. The non-inverting and inverting outputs of the flip-flops 442 and 444 constitute the basic timing signals from which are derived the four phase imager signal clocks CLK1, CLK2, CLK3 and CLK4 utilized to drive each group of four imager gate electrodes of the CCD TDI sensor typically exemplified in Fig. 10 by gate electrodes 378, 380, 382 and 384.

At slow web speeds, a shutter 450 in the camera may be used to maintain a uniform exposure time of each pixel equivalent to the exposure time of a higher speed. When a shutter is employed, the outputs of the flip-flops 442 and 444 are applied to the CLK1, CLK2, CLK3 and CLK4 inputs of the CCD TDI sensor by a selector 452 which is operated by a switch 454 and bias resistance 455. Such four phase clock signals CLK1, CLK2, CLK3 and CLK4 having 50% duty cycles are illustrated in Fig. 12. The signal on line 428 operates a one-shot 456 which is applied by selector 458 to the shutter 450. The selector 458 is also operated by the switch 454.

At higher web speeds, the shutter 450 can not operate sufficiently fast to provide uniform exposure for each pixel. Under these circumstances, the selector 458 passes a constant voltage to disable the shutter 450. The shutter 450 is also used, when no motion is sensed by the system, for the camera to output directly to a monitor a frame of 512 pixels on the horizontal axis by 96 lines on the vertical axis via standard RS-170 timing circuitry (not shown). Selector 452 connects the outputs of one-shots 460, 462, 464 and 466 to the CLK1, CLK2, CLK3 and CLK4 inputs of the CCD TDI sensor. These one-shots are triggered by the corresponding non-inverting and inverting outputs of flip-flops 442 and 444. The operating time delays of the one-shots 460, 462, 464 and 466 are selected to provide the desired integration and exposure time for each pixel. At very high web speeds the positive electrode activation time can be substantially greater than 50% of the electrode signals as shown in Fig. 13 while at lesser web speeds the positive electrode activation time can be substantially less than 50% of the electrode signals as shown in Fig. 14 provided that under all circumstances the leading edge of the positive pulse on each succeeding electrode overlaps the trailing edge of the positive pulse on its preceding electrode and that all four electrodes cannot be positive at the same time.

The trigger sync pulse on line 436 is applied to set inputs of flip-flops 440 and 442 and is applied to the reset input of flip-flop 444 to provide proper synchronization of the signals CLK1, CLK2, CLK3 and CLK4.

A counter 470 is also synchronized by the trigger sync pulse on line 436 and receives the output of the clock oscillator 422 via inverter 472. The output of the counter 470 is the data valid signal 268 which is positive during the time that the 256 pixels are being outputted in the channels 400, 402, 402, 406, 408, 410, 412 and 414. The inverted clock signal from inverter 472 operates flip-flop 474 which has its non-inverted and inverted outputs gated by AND gates 476 and 478 to produce the signals CR1 and CR2 applied to the CCD TDI sensor. The signals CR1 and CR2 operate the shift registers 390 of the sensor. Inversion of the signal CR2 on line 479 by inverter 480 produces the RESET signal used by the CCD TDI sensor to remove residual charge from the output diffusion areas 396. A flip-flop 482 is reset by the trigger sync signal on line 436 to operate a NOR gate 484 and pass the first RESET signal as the TRANSFER signal applied to the sensor. The TRANSFER signal operates the transfer gates 388 to transfer the charges in the bottom row of the sensing area 374 to the output registers 390. The flip-flop 482 is set at the trailing edge of the TRANSFER pulse via inverter 486 to disable the gate 484 until the next trigger pulse.

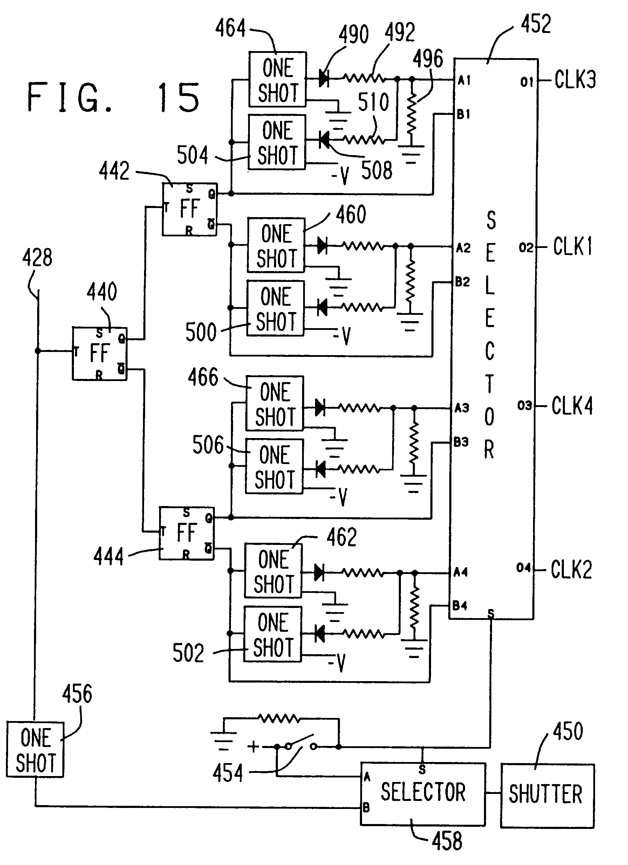

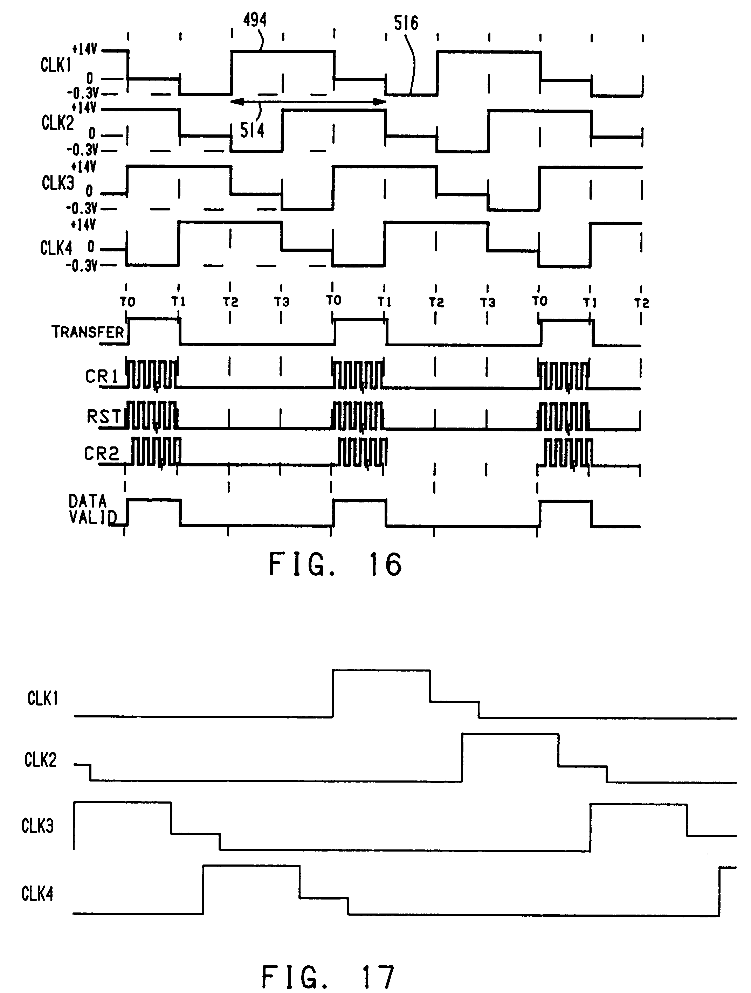

A variation of a portion of the camera circuit is illustrated in Fig. 15 wherein a series isolating diode 490 and resistance 492 connect each output of the one-shots 460, 462, 464 and 466 to the corresponding A inputs of selector 452 for producing the normal positive electrode signal portions 494, Fig. 16. The A inputs are biased to ground potential by resistances 496. One-shots 500, 502, 504 and 506 are connected in parallel with the one shots 460, 462, 464 and 466 and have outputs connected by series negative voltage passing diodes 508 and resistances 510 to the A inputs. Operating durations of the one-shots 500, 502, 504 and 506, shown by the duration 514 in Fig. 16, are set longer than the durations of the one-shots 460, 462, 464 and 466. The negative voltage supply pins of the one-shots 500, 502, 504 and 506 are connected to a negative voltage, instead of to ground as are the negative supply pins of the one-shots 460, 462, 464 and 466, so that upon expiration of the timing periods, of the one shots 500, 502, 504 and 506 negative signal portions 516 are passed to the A inputs via the diodes 508 and resistances 510.

The variation of Fig. 15 is usable with buried channel type CCD TDI sensors to eliminate the requirement that the trailing edge of each positive electrode pulse must overlap the leading edge of positive pulse of the succeeding electrode. The negative voltage portions 516 of the CLK signals, about -0.3 volts, provides a barrier to scattering of the electrons in the channel to maintain the charge under electrodes which have 0 potential. Longer durations between positive pulses are made possible as shown in Fig. 17. The duration of the positive pulse portion plus the zero potential portion must overlap the positive portion of the pulse on the succeeding electrode as shown in Figs. 16 and 17.

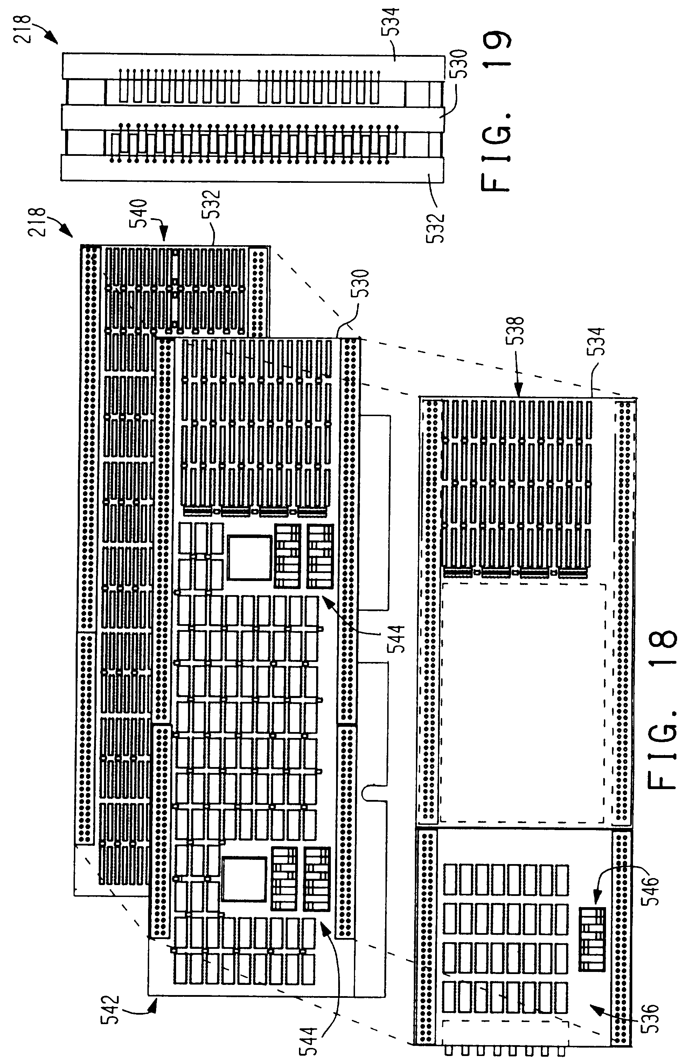

Referring now to Figs. 18 and 19, each of the video processing units 218 is formed by one or more circuit boards, such as a mother board 530 and a pair of daughter boards 532 and 534 mounted on opposite sides of the mother board. Interleaving of circuit components, as shown in Fig. 19, may enable a video processing unit to occupy only one connector slot of the computer backplane 204. Each unit 218 includes circuitry 536 for receiving the eight streams or channels of analog pixel signals from the corresponding camera circuit and converting these analog pulse streams to digital signals. Memory circuitry 538 and 540 receives and temporarily stores the digitized video signals. Processor circuitry 542 processes the stored digital signals to determine the presence of defects. Switches 544 provide for selection of memory address locations of registers in the units 218 used to communicate over the bus 204.

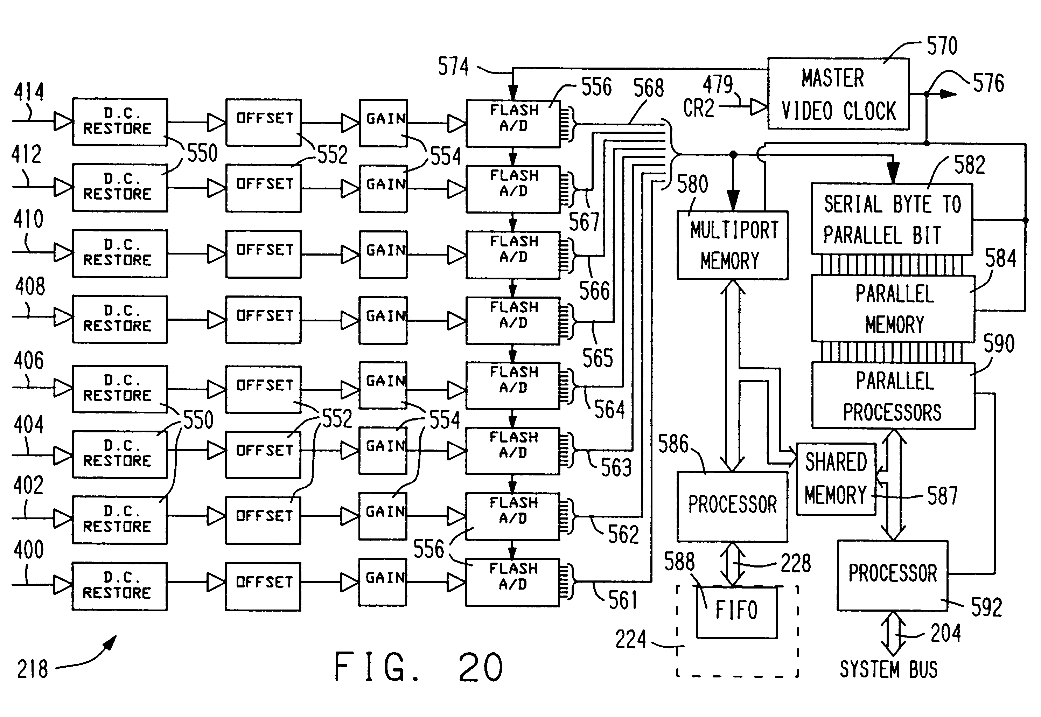

As illustrated in Fig. 20, the streams of analog signals, which represent an analog value for each pixel in the streams which is proportional to the amount of light absorbed by that pixel, on channels 400, 402, 404, 406, 408, 410, 412 and 414 pass through D.C. restore circuits 550, offset circuits 552 and gain circuits 554 to flash analog-to-digital converters (A/D) 556. The D.C. restore, offset and gain circuits 550, 552 and 554 are conventional circuits for adjusting the level and amplitude of the analog signals for the analog inputs of the A/D units 556.

A video processing unit master clock circuit 570 controls the digitizing rate of the A/D units 556 by cable 574 in synchronism with the output rate clock CR2 of the camera 104 as received on line 479.

The A/D converters 556 convert the value of each element in the streams of analog values according the configuration of the dip switches block 546 which defines whether digitization will be 8 bit or 16 bit deep representing 256 or 1024 levels of gray, respectively. Presently the streams of analog values are converted to streams of digital values which are 8 bits deep and proportional to its analog value on a gray scale of 0 to 255, thereby performing a first stage processing, which are applied over channels 561, 562, 563, 564, 565, 566, 567 and 568 to multiport memory 580 and via serial byte to parallel bit converter 582, to parallel memory 584. The master clock circuit 570 generates pulses on line 576 in synchronism with the clock CR2 to control input of the digital values into memories 580 and 584.

After the input of a series of digital pixel values corresponding to one image line, a processor 586 reads each digitized pixel value from memory 580 and compares the value with high and low limits to determine the presence of any defect in the web. If a defect is encountered, the processor 586 traces the periphery of the defect to determine the area or size of the defect as well as the length of the perimeter. The area, the start-X and start-Y location, the intensity at the start, the perimeter and window coordinates enclosing the defect are stored in a shared memory 587. The processor 586 also selects and transfers a block of data, containing the defect, via common bus 228 to a FIFO buffer 588 in the video card 224. The video card 224 is a conventional graphic display unit which contains a plurality of circular arranged FIFO buffers for receiving a series of digitized images and displaying the images on the monitor 186 as they are received. The video card can be controlled by the computer 202 to prevent automatic replacement of the display image by new images received in the FIFO buffers to stop rapid screen changes caused by detection of a series of closely spaced defects, or to display previous defect images still stored in FIFO buffers.

In response to the indication in the shared memory 587 of a defect in a line, a processor 592 operates parallel processors 590 to read a whole line of data at one time from the parallel memory 584. Under the control of a processor 592, the parallel processors 590 and the processor 592 determines, within the window containing the defect as defined by processor 586, whether the defect is black with a white background or white with a black background, a threshold value, a white count, a black count, a ratio of the black count over the white count, a brightness value, a ratio of area over brightness, an histogram value and a classification defining whether the defect is a speck, a dark spot, a light spot, an undefined spot, a hole, a bubble, a gel, a heat blister with no oxidation, a heat blister with oxidation, or an undefined bubble type defect. These values and the defect location and size are output to registers which include an interrupt to the system computer 202 to enable the system computer to read the register values over the system bus 204.

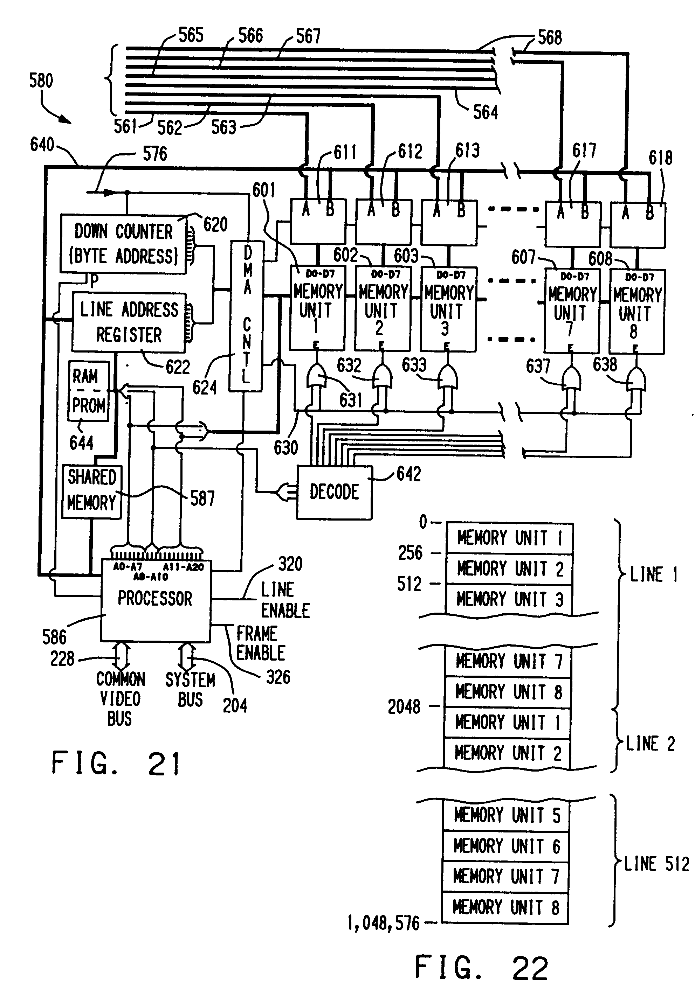

For sake of brevity, only broken away portions of the circuitry is shown in Figs. 21 and 22. In the following description, a series of periods "..." is used to indicate repetitive units which are not shown in the drawings.

The arrangement of the multiport memory 580 is illustrated in Fig. 21. Eight memory units (only memory units 601, 602, 603, 607 and 608 are shown) are connected by bus selectors 611, 612, 613, ... 617 and 618 to the respective channels 561, 562, 563 ... 567 and 568 when DMA control unit 624 grants access to the memory units in response to a pulse on line 576. During the pulse 576, the processor 586 is placed on hold by the DMA control 624 and address inputs of the memory units are supplied from outputs of a down counter or byte address unit 620 and a line address register 622 through the DMA control 624. The line address register 622 is set by the processor 586 to select the same block of memory in each of the units 601-608 to receive and store the corresponding 256 pixel segment of the 2048 digitized pixels forming a single line sensed by the camera sensor. The counter 620 is stepped by the clock pulses on line 576 from the master clock circuit 570 of the video processing unit 218 at a rate equal to the camera clock pulses on line 479, which equals the camera 104 clocking signal CR2, to step through the memory addresses within the memory blocks set by unit 622 in synchronism with receipt of the incoming digitized video pixels on the channels 561-568. Simultaneously to the granting of access to the memory units 601-608, line 630 from the DMA control 624 activates OR gates 631, 632, 633, ... 637 and 638 so that each group of eight pixel words on the channels 561-568 are simultaneously stored at each corresponding memory address in the memory units 600-608 as the series of 256 digitized pixels on each channel are received. Thus data is inputted to the memory sixty-four bits at a time.

In the illustrated embodiment of Fig. 21, the pixels are received in forward order so that the memory addresses are stepped up; e.g. the pixels on channel 561 are received in the order 0, 1, 2, 3, ... 254, 255. Alternatively, the pixels can be outputted from the camera in reverse order so that counter 620 counts downward. At the beginning of each line enable signal on line 320, the processor 586 sets the line address register to the next memory block by a data bus 640 and presets or resets the counter 620 depending upon whether the counter is counting down or up.

The processor 586 has its data bus 640 connected in common to the data input/outputs of the memory units 601-608 by selectors 611-618 when there is no pulse on line 576. Three memory address outputs of the processor 586 define eight address blocks corresponding to the memory units 601-608 and are applied to a decoder 642 which has its outputs connected to second inputs of the respective OR gates 631-638 so that only one memory unit is selected for each address from processor 586. Other memory address lines from the processor are connected to the memory units 601-608. As shown in Fig. 22, the processor 586 addresses the memory units 601-608 as a continuous memory wherein each line of pixels is stored in order in a corresponding block of memory.

In the illustrated embodiment, the processor reads eight bits at a time from one of the memory units 601-608. Alternatively, conventional addressing arrangements could be employed to read sixteen or thirty-two bit words at a time if the processor can input such words.

Memory 644, which includes both RAM and EEPROM, contains the operating program, parameter values, and variable storage areas for the processor 586.

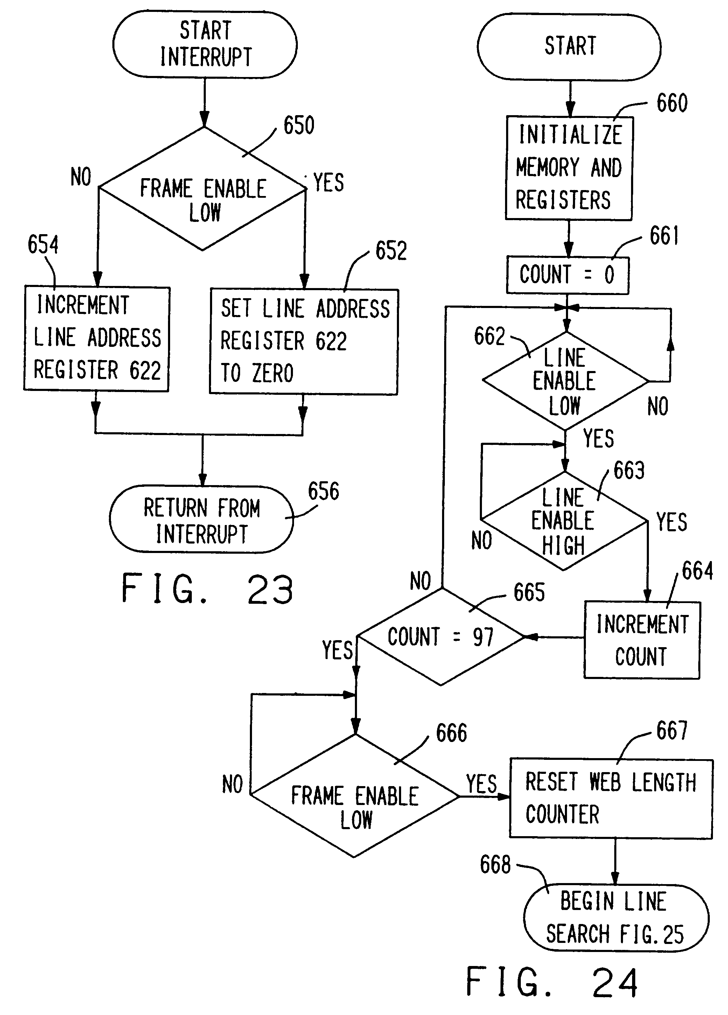

The operating program includes a hardware interrupt procedure illustrated in Fig. 23 which is called when the line enable signal becomes high. In step 650, the processor 586 reads and determines if the frame enable signal is low. If true, the line address register 622 is set to zero in step 652. If false, the line address register is incremented in step 654 so that the next groups of digital pixel values will be stored in the next blocks of memory units 601-608. At point 656, the program returns from the interrupt procedure.

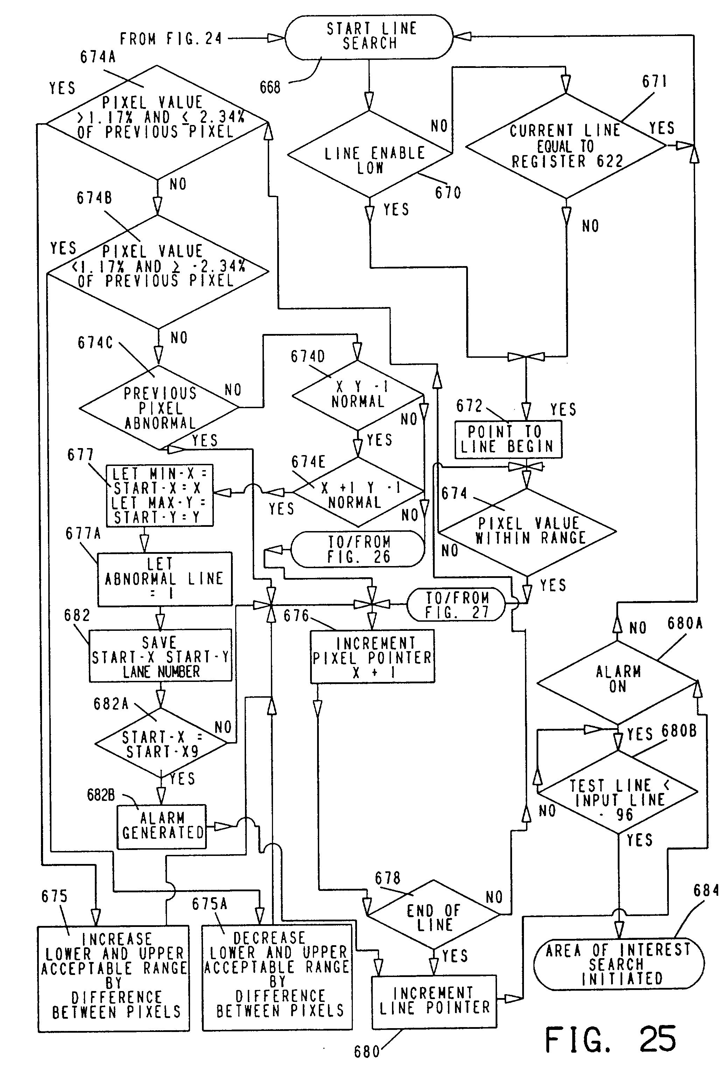

At startup or at the beginning of a new testing run, the processor 586 begins with the procedure of Fig. 24 wherein the memory and registers are initialized in step 660. In step 661, count is set to zero. Then the line enable signal is tested in step 662 until it is found low. The program then waits in step 663 until the line enable signal returns high before proceeding to step 664 where count is incremented and step 665 where it is determined if count is equal to ninety-seven. From step 665 the program recycles through steps 662, 663 and 664 until count ninety-seven is reached. This insures that the CCD in the camera 104 is flushed of any prior signals before processing of the signals occur. Furthermore the camera output to the video processing boards can be inhibited. The inhibition of the input to the boards is achieved by inhibiting the reset pulse which clears the diffusion 396 and the output clock registers CR2 for each camera 104 while the transfer from line to line is maintained along with the transfer pulses for the transfer gates 388 which transfer the data from the last TDI line into the first output structure registers CR1. The latter is continuously overwritten by each line transfer until 97 lines have been transferred.

Then in step 666, the program waits for a frame enable low signal to indicate the start of a new frame and proceeds to point 668 where line processing begins. As noted by the step 667, the processor 586 for the second camera 104 resets the line count over line 342 of Fig. 8.

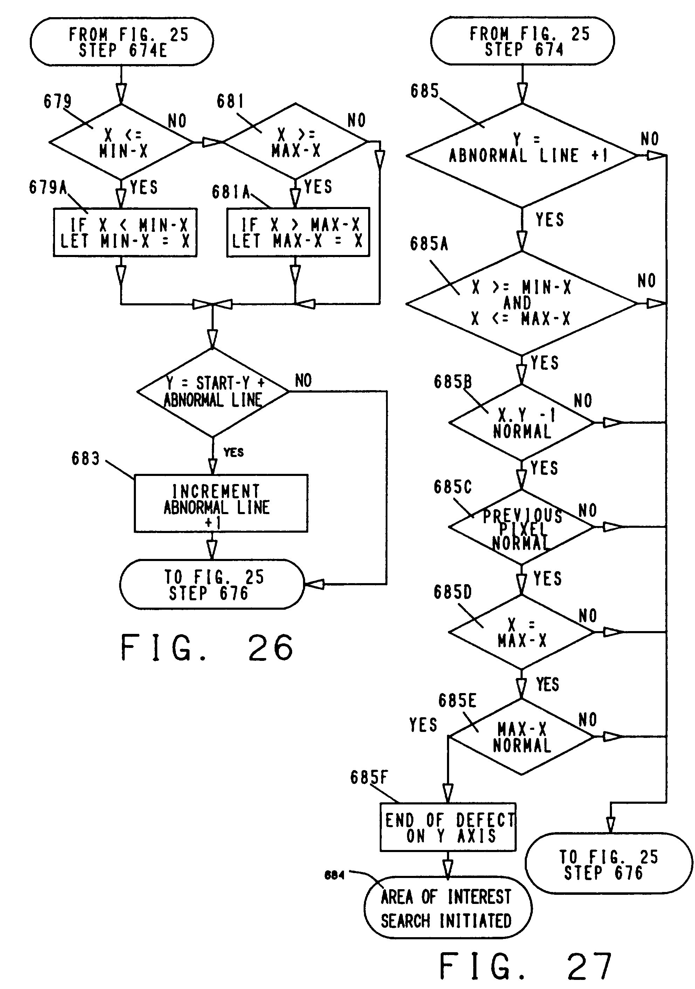

The main line processing program for the processor 586 is illustrated in Figs. 25, 26, 27, 28, 29, 30 and 31. At step 670 of Fig. 25, the processor determines if the line enable signal is low. When line enable is high, a line of pixels is being inputted to the memory 580 and the program branches to step 671 where it is determined if the current line under test is equal to the line being inputted. If true, some of the data in that line may not be correct so the program recycles to step 670 until the line enable signal goes low indicating that the inputting of the line of pixels is complete. In step 672 a pixel pointer is set to the first pixel of the line under test. Then in step 674, the value of the pixel selected by the pixel pointer is tested to determine if the value is within a predetermined range, for example if the initial pixel is greater than 120 and less than 123, a range of 3 levels.

The predetermined range is established at system start-up by firmware downloaded into the EEPROM area of memory 644 according to the type of web to be inspected and as from time to time amended during processing. The acceptable range is re-determined (incremented or decremented) according to the value obtained when the prior pixel was processed.

When step 674 is false the program branches to step 674A. If the pixel being processed has a value greater than 1.17% (representing 3.0 levels of gray of a total gray scale having 256 gray levels) and less than or equal to 2.34% (representing 6.0 levels of gray of a total gray scale having 256 gray levels) of the value of the prior pixel processed (initialized value if the first pixel), the program branches to step 675 whereat the lower and upper acceptable range values are increased by that difference between the pixels. For example, the prior pixel had a value of 122 and the pixel just processed has a value of 125, a difference of 3 levels of gray which is considered a normal increase due to web thickness, the new acceptable range then becomes 123 to 126. If the pixel being processed has the same value or a value outside that range the program branches to step 674B.

At step 674B if the pixel being processed has a value less than 1.17% (3.0 levels of gray) and greater than or equal to -2.34% (-6.0 levels of gray) of the prior pixel processed, the program branches to step 675A whereat the lower and upper acceptable range values are decreased by that difference between the pixels. For example, the prior pixel had a value of 122 and the pixel just processed has a value of 119, a difference of 3 levels of gray which is considered a normal decrease due to web thickness, the new acceptable range then becomes 117 to 120.

This allows the program to compensate for variations in thickness of the web, gradual increases and decreases, which is normal and differentiate between the latter and defects which create sudden changes greater than 6 levels of gray. For example, at the left edge of the web the normal value may be 120 whereas at the center of the web the normal value may be 130 due to gradual increases in thickness.

If the pixel value is within the acceptable range indicating the absence of any defect, the program proceeds from step 674 to step 676 where the pixel pointer is incremented. Actually the program calls the procedure of Fig. 27 after step 674 is true, but in the absence of any detected defect, the program returns step 676. In the following step 678, the program branches back to step 674 if the pixel pointer is less than or equal to the last pixel on the line being tested, or branches through step 680, where the line pointer is incremented, and to step 670 if the pixel pointer is past the last pixel of the line under test.

If the pixel value is found either below or above the acceptable range in steps 674 to 674B, the program proceeds to step 674C where it is determined if the previous pixel was abnormal. If the previous pixel was also below or above the acceptable range, thus abnormal, in step 674C, the present pixel is ignored and the program branches to step 676. If the previous pixel was normal the program proceeds through steps 674D and 674E wherein it is determined if the pixel in the line above (X,Y-1) and the pixel in the line above and in the column to the right (X+1,Y-1), respectively, are normal. If both are true the program continues to step 677 where a START-X value is set equal to the pixel pointer value and a START-Y value is set equal to the line under test to identify the starting point for a defect. In step 677A a variable ABNORMAL_LINE is set to 1 to indicate that the defect is found on at least one line. Then in step 682 the values START-X and START-Y are saved along with a lane value as determined from the value of START-X in the next available register or record space in shared memory 587. The number of defects being processed is determined by determining if the register is greater than nine in step 682A. If not, the programs then branches to point 676 to continue the testing of that line. If after one or more pixels on that line is found to be within the acceptable range and another pixel value is found either below or above the acceptable range in step 674, the program proceeds through steps 674A to 682A as before, where the pixel pointer value as the initial START-X1 value for that other defect and the line under test as the START-Y value for that other defect are saved in the next register of shared memory 587, and then to point 676 to continue the testing of that line. In this manner, the system creates a mapping of the starting location or locations of a defect or defects within the memory 587. Up to START-X9,START-Y can be saved or the starting locations of 10 defects having the same starting point on the Y axis in step 682. However, this maximum generates an alarm in step 682B which indicates that too many defects are present within a pre-established area, the width of the field of view of camera 104, and the program stops processing whole lines, i.e. 2048 pixels, and concentrates on the area where the first defect, START-X, START-Y, was detected.

In the latter case, the program goes to step 680 where the line pointer is incremented and then to step 680A where it is determined if the alarm condition is on. If yes, the program branches to step 680B whereat, the processor determines if the memory units 601-608 contain a predetermined full video frame for that condition, 96 lines, by comparing the current line under test to the next input line address minus 96. If the current test line is not 96 lines less than the next input line, then the program waits in step 680B until sufficient lines are inputted. When sufficient lines have been inputted in step 680B the program proceeds to step 684 which initiates an area of interest search.

The reason for the 96 line frame is that at a resolution of 2.5 mils on the web this frame is equivalent to 240 mils (0.24 inches) in the vertical direction (Y axis). Since all defects equal to or greater than 99 mils are similarly reported, i.e. SP99 for a spot equal to or greater than 99 mils, no need exists to go any further for defects which have the same starting location on that axis.

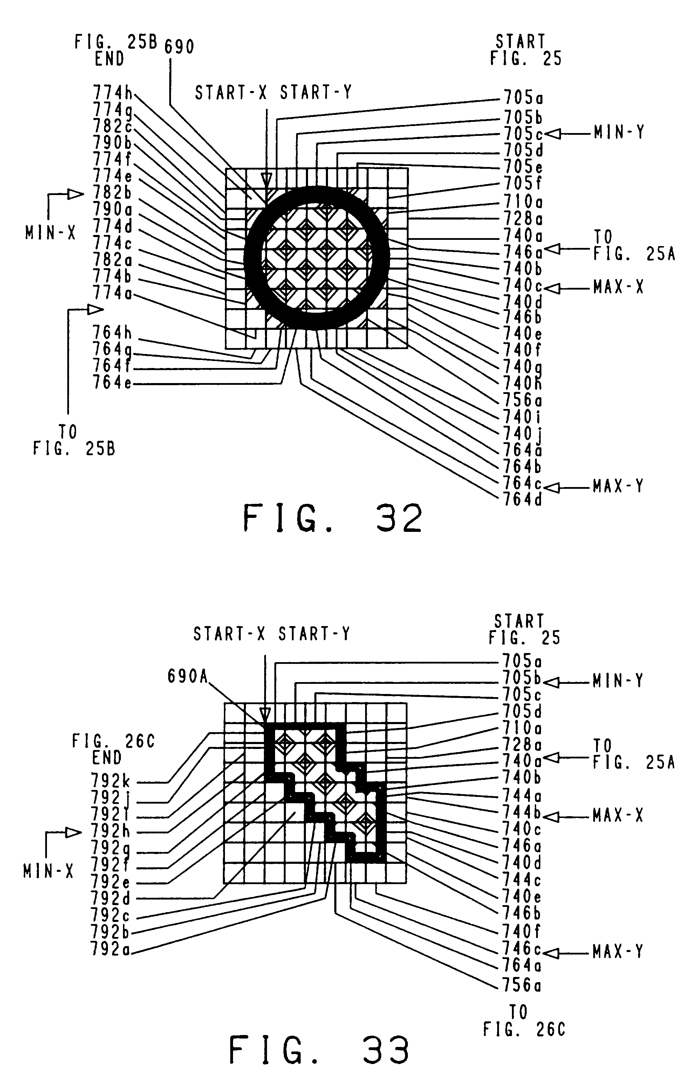

In step 684 the processor 586 goes directly to location START-X,START-Y and performs the routine TRACE_EDGE, START-X,START-Y,RIGHT whereby all the abnormal pixels on the outer edge of the defect, which are adjacent to one another in whatever direction, are traced (located) starting from the aforementioned location going in the clockwise direction until back to the starting location START-X,START-Y. This routine returns the MIN-X, MAX-X, MIN-Y and MAX-Y values of the defect. Once completed, this routine is followed by the routine WINDOW, MIN-X, MAX-X, MIN-Y, MAX-Y which forms a window enclosing the defect. A defect 690 is shown in Fig. 32 which has points 705c, 764c, 782b and 740c as the respective MIN-Y, MAX-Y, MIN-X and MAX-X values. However, point 705c is initially identified for all the MIN-Y values of all defects which have their starting location on that line.

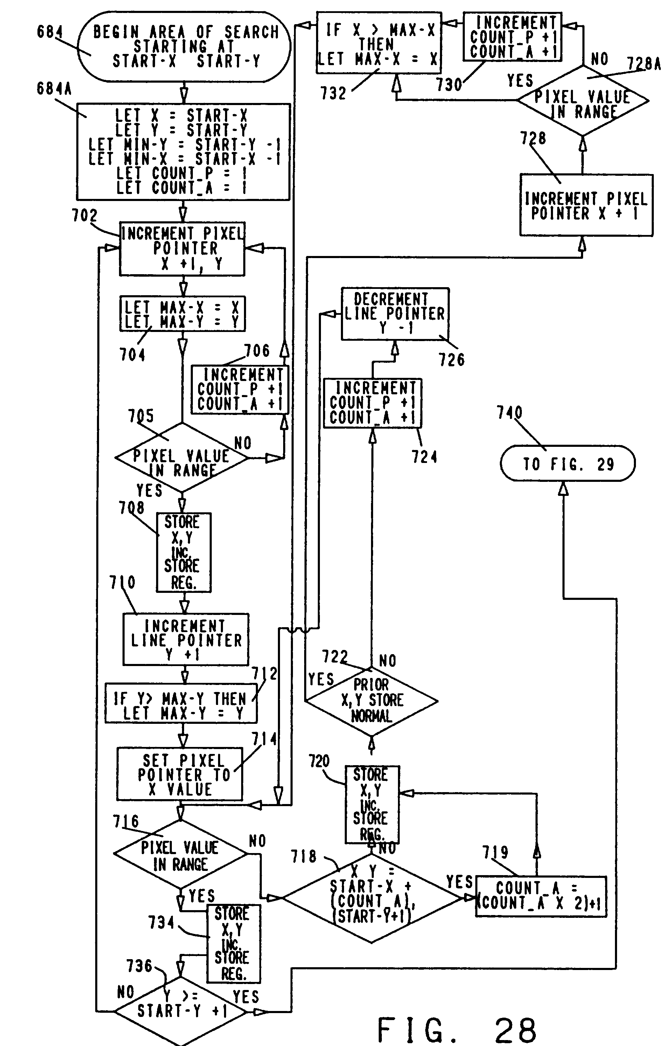

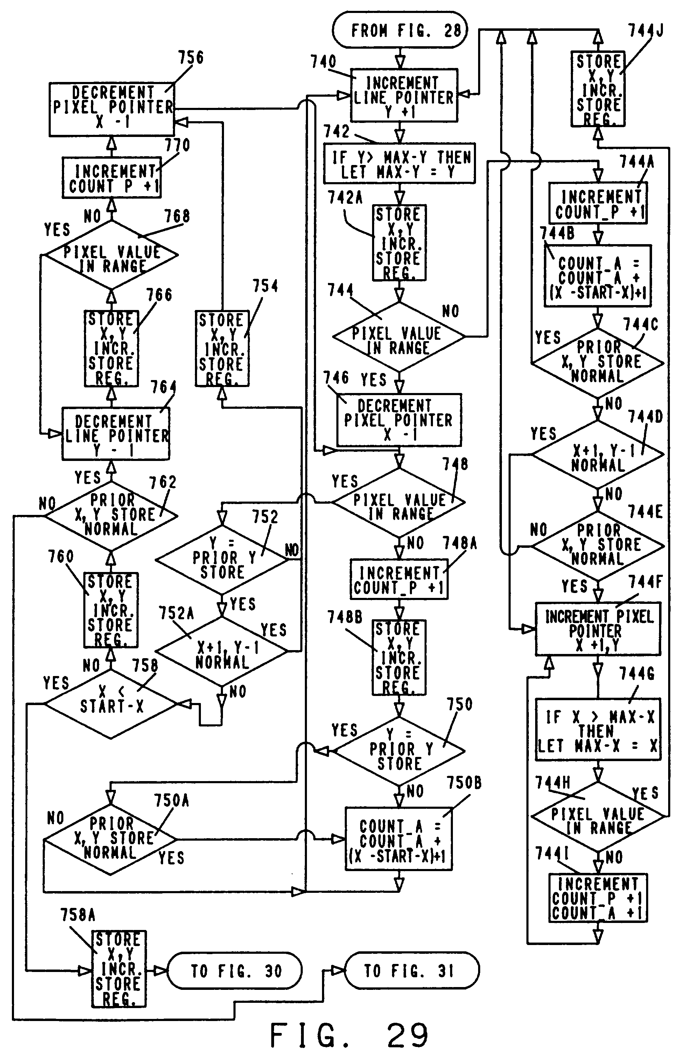

As shown in Fig. 28, step 684, the processor goes directly to the START-X,START-Y location which is the starting location of the leftmost defect within the buffer 601-608. At step 684A the initial values X, Y, MIN-Y, MIN-X, COUNT_A and COUNT_P are established. In step 702 the pixel pointer is incremented by one to the right on that line (X +1,Y) and in step 704 the values for MAX-X and MAX Y are established and thereat re-established when the values changes. Referring to Fig. 32, points 705a-705f correspond to the first loop of the search segment wherein, the pixel pointer is incremented by one for each abnormal pixel found after, in step 706, the COUNT_P and COUNT_A is incremented by one. These latter values are used to kept track of the abnormal pixels forming the perimeter and the area of the defect respectively. The pixel pointer is incremented until a normal pixel is found on that line. When a normal pixel is found the program then branches to step 708 where the location of that normal pixel is stored in register allocated for that purpose in the processor 586 RAM memory 644. The program then branches to step 710 where the line pointer is incremented by one, to step 712 where the value for MAX_Y is adjusted and to step 714 where the pixel pointer is set to the X value for that Y line thereby being located at 710a. In step 716 it is determined if the pixel is normal or abnormal. Since it is abnormal, the programs branches to step 718 where it is determined if that location, X,Y, is equal, as a value, to the START-X value plus the COUNT_A value and the Y line value plus one. Since it is, the program branches to step 719 where to the COUNT_A is added all the pixels in that second line from that location back to the START-X location and including START-X for that line which are assumed to be abnormal. The program then branches to step 720 where that location is stored and then branches to step 722 to determine if the prior X,Y location stored was normal. Since it was, the programs branches to step 728 where the pixel pointer is incremented by one to location 728a. The program then branches to step 728A where the program determines if the pixel is in range. Since it is the program proceeds to step 732 where the MAX-X value is readjusted. The programs then branches back to step 716 where it is determined if the pixel is normal or abnormal. Since it is normal, that location is stored in step 734 and the program branches to step 736 to determine if that Y location is equal to or greater than START-Y +1 or one line downward from the initial line. Since it is, the program branches to step 740 in FIG. 29.

In step 740 the line pointer is incremented by one to location 740a. In step 742 the MAX-Y value is adjusted and in step 742A that new X,Y location is stored. In step 744 it is determined if the pixel is normal or abnormal. Since it is normal, the program branches to step 746 where the pixel pointer is decremented to location 746a. In step 748 it is determined if the pixel is normal or abnormal. Since it is abnormal, the program branches to step 748A where the COUNT_P is incremented by one, to step 748B where that location is stored and to step 750 where it is determined if the prior Y value stored is the same as the Y value just stored. Since it is, the program branches to step 750A where it is determined if the prior pixel stored was normal. Since it was, the program branches to step 750B whereat, the COUNT_A is increased by the adding the number of pixels between the present X location and the START-X location plus 1 assuming that all these pixels are abnormal.

The program then proceeds back to step 740 where the line pointer is again incremented by one, to location 740b, for a similar sequence except that at step 744, since the pixel is abnormal, the program branches to step 744A where the COUNT_P value is incremented by one, to step 744B whereat the COUNT_A is increased by the number of pixels between the present X location and the START-X location plus one assuming that all these pixels are abnormal. The program then branches to step 744C where it is determined if the prior pixel stored was normal. Since it was not, the program branches to step 744D where it is determined if the location X +1,Y -1 (740a) was normal. Since it was, the program branches to step 744F where the pixel pointer is incremented by one to location 740c, to step 744G where the value for MAX-X is adjusted and to step 744H were it is determined if the pixel 740c was normal. Since it was, the program branches to step 744J whereat the last location is stored thereafter branching back to step 740.

At step 740 the line pointer is again incremented by one, to location 740d, for a similar sequence except that in step 744 it is determined that the pixel is normal therefore as before, the program proceed to step 746 where the pixel pointer is decremented by one to location 746b. In step 748 it is determined if the pixel value is in range. Since it is not, the program branches to step 748A where the COUNT_P is incremented by one, to step 748B where that location is stored and to step 750 where it is determined if the location on the Y axis has changed. Since it did not, the program branches to step 750A where it is determined if the prior X,Y store is normal. Since it is the program proceeds to step 750B whereat the COUNT_A is increased by the number of pixels between the present X location and the START-X location plus one assuming that all these pixels are abnormal. The program then branches back again to step 740.

At step 740 the line pointer is again incremented by one, to location 740e, for a similar sequence except that in step 744 it is determined that the pixel is abnormal therefore as before, the program proceed to step 744A where again COUNT_P in step 744A and COUNT_A in step 744B are incremented accordingly. In step 744C it is determined that the prior location stored (746b) is not normal therefore the program branches to step 744F where the pixel pointer is incremented by one to location 740f. In step 744G the MAX-X value is adjusted accordingly and in step 744H, since it is determined that the pixel is normal, the program branches to step 744J where that location is stored and again back to step 740.

Once again at step 740 the line pointer is again incremented by one, to location 740g, for a similar sequence except that in step 744 it is determined that the pixel is normal therefore as before, the program proceed to step 746 where the pixel pointer is decremented to location 740h. Since in step 748 it is determined that the new location is also normal the program branches to step 752 where it is determined if the Y value is the same as for the prior location. Since it is, the program branches to step 752A whereat it is determined if the location X +1,Y -1 (740f) is normal. Since it is, the program branches to step 754 where the new location is stored and to step 756 where the pixel pointer is decremented to location 756a. The program then branches to step 748 where it is determined that the pixel value is not in range. Therefore, the program proceeds to step 748A where the COUNT_P value is incremented and to step 748B where that new location is stored and the program proceeds to step 750.

In step 750 it is determined that the Y value as not changed therefore, the program branches to step 750A where it is determined if the prior location was normal. Since it was, the program branches to step 750B to add to the COUNT_A value as before and the program branches back to step 740. At step 740 the line pointer is incremented by one to location 740i for a similar procedure whereat step 746 the pixel pointer is decremented to location 740j and at step 748 the pixel is determined to be in range.

Therefore, the program again branches to step 752 and to step 752A except that at that last step it is determined that location X +1,Y -1 (756a) was not normal thus, the program branches to step 758 where it is determined if the X location is less than the START-X location. Since it is not, the program branches to step 760 where the last location is stored and to step 762 where it is determined if the prior location stored is normal. Since it is, the program branches to step 764 where the line pointer is decremented by one to location 764a, to step 766 where that location is stored, to step 768 where it is determined that the pixel value is not in range, to step 770 where the COUNT_P is incremented by one and to step 756 whereat the pixel pointer is decremented by one to location 764b. The program then branches to step 748 where it is determined that the pixel is not in range thus, the program branches to step 748A whereat the COUNT_P is incremented by one, to step 748B where the new location is stored and to step 750 where it is determined that the Y value is the same as the prior stored value.

Therefore, the program branches to step 750A whereat it is determined that the prior value stored is not normal thus, the program branches back once again to step 740. At step 740 the line pointer is again incremented by one to location 764c for a similar sequence whereat step 746 the pixel pointer is decremented by one to location 764d and at step 748 the program branches again to steps 752, 752A, 758, 760, 762 and 764 whereat the line pointer is decremented by one to location 764e. In step 766 that new location is stored. In step 768, since the pixel is not within the normal range, the program advances to step 770 where COUNT_P is incremented by one and again to step 756 whereat the pixel pointer is decremented by one to location 764f and the program branches back once again to step 748. At step 748, since the pixel value is not in range, the program branches to step 748A to increment the COUNT_P value by one, to step 748B to store that new location and to step 750 whereat it is determined that the Y value is the same as the value in the prior store. Therefore, the program branches to step 750A whereat it is determined that the value stored in the prior store step was not normal thus, the program branches back to step 740.

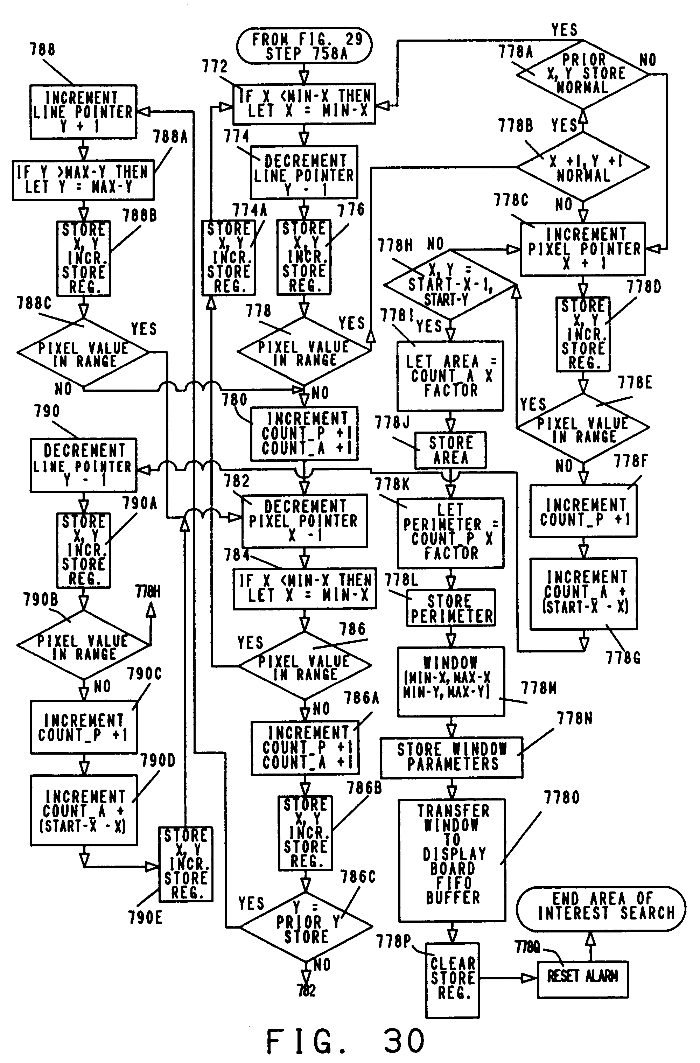

At step 740, the line pointer is incremented by one to location 764g and the program steps through the same steps, 742 to 746, whereat step 746 the pixel pointer is decremented to location 764h. The program as before branches to step 752 and 752A except that at step 758 it is determined that the X value of the present location is less than START-X thus, the program branches to step 758A, whereat the new location is stored, and to step 772 of Fig. 30.

At step 772 of Fig. 30, the value MIN-X is adjusted if the value X is less than the existing MIN-X value. ln step 774 the line pointer is decremented by one to location 774a and in step 776 that value is stored. The program then branches to step 778 whereat the pixel at location 774a is evaluated. Since it is in range, the program branches to step 778B whereat it is determined if the location X+1,Y+1 (764g) is normal. Since it is, the program proceeds to step 778A whereat it is determined if the preceding location (764h) stored was normal. Since it was, the program branches back to step 772 for a similar procedure whereat step 774 the line pointer is again decremented to location 774b, the location is stored in step 776 except that in step 778 it is determined that the pixel is not within the normal range.

Therefore, the program branches to step 780 whereat the pixel count in COUNT_P and COUNT_A are incremented by one and to step 782 where the pixel pointer is decremented by one to location 782a. In step 784 the MIN-X value is adjusted if less than the existing value for MIN-X and in step 786 the pixel is evaluated to determine if it is normal. Since it is, the program branches back to step 772 after that new location has been stored in step 774A. In step 772 the MIN-X value is adjusted if required and the program proceeds to step 774 whereat the line pointer is decremented by one to location 774c. In step 776 that new location is stored and in step 778 the pixel is evaluated. Since it is normal, the program branches to step 778B whereat it is determined if the location X +1, Y +1 (774b) is normal. Since it is not, the program branches to step 778C whereat the pixel pointer is incremented by one to location 774d, to step 778D whereat the new location is stored and to step 778E whereat it is determined if the pixel is normal. Since it is not, the program proceeds to step 778F whereat the COUNT_P is incremented by one and to step 778G whereat the COUNT_A is increased by the amount of location(s) prior to START-X, in this case one.

The program then proceeds to step 790 whereat the line pointer is decremented by one to location 790a, to step 790A whereat that new location is stored and to step 790B whereat it is determined if the pixel is normal. Since it is not, the program proceeds to step 790C whereat the COUNT_P is incremented by one and to step 790D whereat the COUNT_A is increased by the amount of location(s) prior to START-X, in this case one. The program then proceeds to step 782 after the new location is stored in step 790E.

At step 782 the pixel pointer is decremented by one to location 782b, at step 784 the MIN-X value is adjusted if required and at step 786 it is determined if the pixel is normal. Since it is, the program branches back to step 772 after the new location is stored in step 774A.

At step 772 the MIN-X value is adjusted if required and in step 774 the line pointer is decremented by one to location 774e. In step 776 that new location is stored and in step 778 it is determined if the pixel is normal. Since it is, the program branches to step 778B where it is determined if the location X +1,Y +1 (790a) is normal. Since it is not, the program branches to step 778C whereat the pixel pointer is incremented by one to location 774f, to step 778D whereat that new location is stored and to step 778E whereat it is determined if the pixel is normal. Since it is not, the program branches to step 778F whereat the COUNT_P value is incremented by one, to step 778G whereat the COUNT_A is incremented by the amount of location(s) prior to START-X, in this case one.

The program then proceeds to step 790 whereat the line pointer is decremented by one to location 790b, to step 790A whereat that new location is stored and to step 790B whereat it is determined if the pixel is in range. Since it is not, the program branches to step 790C whereat the COUNT_P is incremented by one, and to step 790D whereat the COUNT_A is incremented by the amount of location(s) prior to START-X, in this case one. The program then proceeds to step 782 whereat the pixel pointer is decremented by one to location 782c, to step 784 whereat the MIN-X value is adjusted if required and to step 786 whereat it is determined if the pixel is normal. Since it is, the program branches back to step 772 after that new location is stored in step 774A.

At step 772 the MIN-X value is adjusted if required and the program proceeds to step 774 whereat the line pointer is decremented to location 774g, to step 776 whereat that new location is stored and to step 778 whereat it is determined if the pixel is normal. Since it is, the program branches to step 778B whereat it is determined if the location X +1,Y +1 (790b) is normal. Since it is not, the program proceed to step 778C whereat the pixel pointer is incremented by one to location 774h, to step 778D whereat that new location is stored and to step 778E whereat it is determined if the pixel is normal. Since it is, the program branches to step 778H whereat it is determined if that X location equal START-X -1.

Since that site is START-X -1, the program branches to step 778I whereat the COUNT_A is multiplied by a factor, the factor being the established pixel size on the web at calibration, which yields the area of the defect. In step 778J that value is stored in the register dedicated for that purpose in shared memory. In step 778K the COUNT_P value is multiplied by the same aforementioned factor which yields the perimeter of the defect. In step 778L that value is stored in a register dedicated for that purpose. In step 778M the defect is windowed using the values MIN-X, MAX-X, MIN-Y AND MAX-Y and in step 778N the window parameters are stored in a section of shared memory with the processor 592.

In step 7780 the windowed defect is transferred to the display board 224 FIFO buffer, as a block the size of the window, over the common bus 228, Fig. 21, for display on monitor 186, Fig. 1 and 4. In step 778P the store registers are cleared, in step 778Q any alarm is reset, and the program returns from the TRACE_EDGE routine ending the search of the area of interest to step 668 in Fig. 25.

The display board 224 is configured, using standard means, to receive the block of data, representing a defect in a window, and center that block within its programmable display buffer of 512 pixels by 480 lines to center the defect in the center of the screen of monitor 186.

This program allows the tracing of the edge of any defect regardless of its shape. Although the majority of defects are circular, some may have various other shapes.

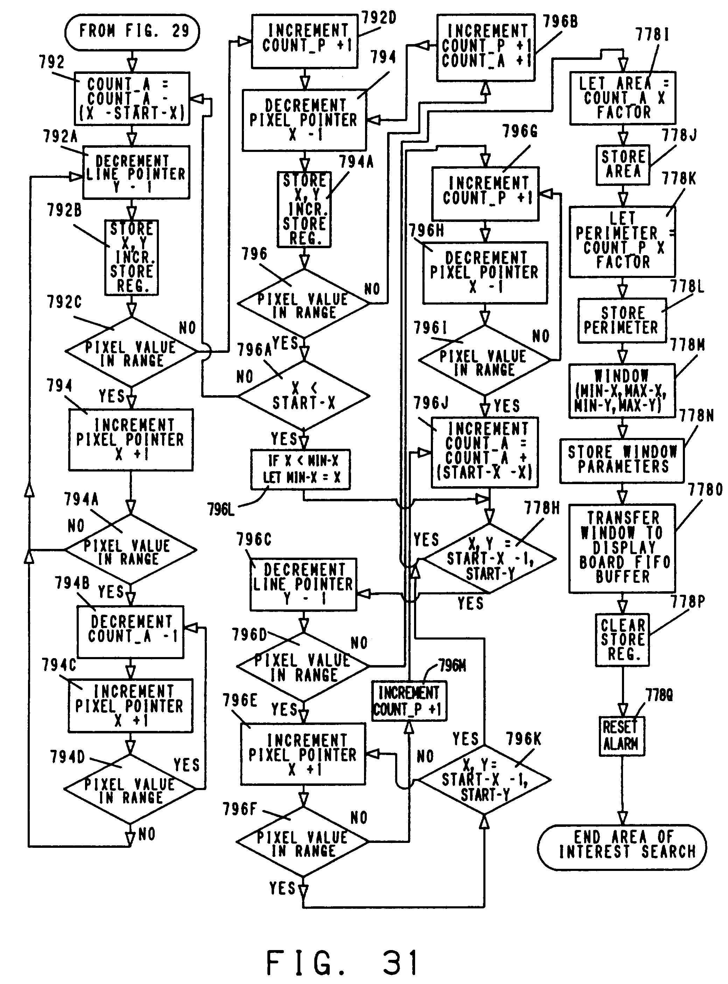

Fig. 33 shows a defect with irregular edges. In this case the TRACE_EDGE,START-X,START-Y,RIGHT program defines the locations 705a to 728a by the procedure of Fig. 28 similar to that described above and similarly defines the locations 740a to 756a as above in Fig. 29. However, at step 762, since the location is less than MAX-Y, the program branches to step 792 of Fig. 31. The outline of the defect is similarly defined except that the pixels from each Y line to START-X which were previously added to COUNT_A are removed from that count until the pixel pointer is less than START-X. At that point, 792i in this case, each pixel found to be abnormal is added to both COUNT_P and COUNT_A by step 796B of FIG. 31 depending on the amount of abnormal pixels found which are positioned prior to START-X on that Y axis line. For other Y lines wherein abnormal pixels are present, loop 796C to 796J increments the COUNT_P and COUNT_A until the pixel prior to the starting point START-X - 1, START-Y, is reached whereat the program, as before, branches to step 778I as in Fig. 30. The alarm in step 680A of Fig. 25 is reset and the program returns for another line search.

Normally, few defects are encountered during an inspection run. The intent is to define the locations of randomly located defects in order to determine which lane or lanes contains defects thereby defining which sections of the web are defect free.

Under alarm free condition, the scanning of a line does not yield ten START-X,START-Y locations. After the end of a defect has been detected, the main program for the processor 586 calls the area of interest procedure similarly as the aforementioned alarm condition as illustrated in Figs. 25, 28, 29, 30, and 31.

Referring to the defect 690 in Fig. 32, as before, the processor 586 accesses the first line after the enable signal goes low as determined by step 670. At step 672 the pixel pointer is located to the first pixel of the line under test and in step 674 it is determined if the pixel is within range. Since it is, the program branches to step 676 whereat the pixel pointer is incremented and to step 678 whereat it is determined if the pixel pointer is past the last pixel of that line. If not, the program will loop within steps 674 to 678, and steps 674A to 674C to compensates for film thickness, until the pixel pointer is past the last pixel of that line and then branches to step 680 whereat the line pointer is incremented and to step 670 for a search of the next line.

As before, the program will loop within steps 674 to 678, and 674A to 674C, until location 705a of defect 690 in Fig. 32 is encountered by step 674. The program then branches through steps 674A and 674B and in step 674C the program branches to step 674D to determine if the pixel in the prior line at the same X value is normal. Since it is, the program branches to step 674E to determine if the pixel in the prior line at X value +1 is normal. Since it is, the program branches to step 677 whereat the initial values for MIN-X and MAX-Y and START-X and START-Y are established, to step 677A whereat the initial value for ABNORMAL_LINE is set, to step 682 whereat that pixel location as START-X,START-Y is stored. The program proceeds to step 682A to determine if that location equals START-X9. Since it doesn't, the programs branches to step 676 whereat the pixel pointer is incremented by one, to step 678 to determine if the pixel pointer is past the last pixel of that line. Since it isn't, the program branches to step 674 whereat it is determined if the new pixel is within range. Since it is not, the program again branches through steps 674A to 674C whereat it is determined if the prior pixel was abnormal. Since it is was, this pixel is ignored and not stored as a START-X,START-Y location and the program branches to step 676. The program will loop within steps 674 through step 676, ignoring the abnormal locations until location 705f is encountered. At that point the program will loop within steps 674 to step 678, and 674A to 675 or 675A, until the pixel pointer on that line is past the last pixel for that line, or another defective pixel is encountered on that line defining the start of another defect. In the latter case the program will similarly proceed as for the prior start of the prior defect. The program then branches to step 680 whereat, as before, the line pointer is incremented by one and to step 670 for a search of the next line.

As before the program will loop within steps 674 to 678, and 674A to 675 or 675A, until location 790b is encountered by step 674. At that point the program branches through steps 674A to 674C whereat the program branches to step 674D since the previous pixel on that line was normal. At step 674D it is determined if the pixel in the prior line for the same X value (X,Y -1 = location 774h) is normal. Since it is, the program branches to step 674E whereat it is determined if the pixel on the prior line at X +1 (X +1,Y -1 = location 705a) is normal. Since it is not, the program branches to step 679 of Fig. 26 whereat the value for X is compared to MIN-X. Since X is less than MIN-X, the latter is adjusted to the value of X. The program then proceeds to step 683 whereat it is determined if Y equals START-Y plus ABNORMAL_LINE. Since it does, the program branches to step 683A where ABNORMAL_LINE is increment to now indicate that we have abnormal pixels on two lines. Then the program proceeds to step 676 of Fig. 25 ignoring this abnormal pixel and not storing it as a START-X,START-Y location and branch to step 678 as before to determine if the pixel pointer is past the last pixel on that line. The program will then loop within steps 674 to 676C and 678, bypassing steps 675 and 675A since the pixels are abnormal, until location 728a is encountered. As before the program will step through the normal pixels to the end of the line, increment the line and step through the same steps until location 774f is encountered. As before, since the pixels in the prior line are abnormal, that location will not be stored as a START-X,START-Y location but ABNORMAL_LINE is incremented.

The program will step through the same steps defining the defect until location two points past 740i is encountered. At that point the program will not automatically return from the procedure of Fig. 27 after the pixel value is found in range in step 674. In step 685 of Fig. 27 it is determined if Y is equal to START-Y + ABNORMAL_LINE. Since it does, the program branches to step 685A to determine if that location is greater than or equal to MIN-X and less than or equal to MAX-X. Since it is, the program branches to step 685B whereat it is determined if the location X,Y -1 (774a) is normal. Since it is, the program branches to step 685C where it is determined if the previous pixel was normal. Because it is, the program branches to step 685D to determine if the present X value equals MAX-X. Since it does the program branches to step 685E whereat it is determined if that location, which is equal to MAX-X, is normal. Since it is, the program branches to step 685F which indicates the end of the defect on the vertical (Y) axis, MAX-Y, and the program branches to step 684 of Fig. 28 whereat an area of interest search is initiated as previously described for a defect.

In normal operation of a web 100 producing facilities, the sideways motion is negligible since the inspection system is normally installed immediately after the web carrying mechanism or no further than after the first guide roll for the web 100. At that point the web cannot move sideways. However, in some applications and for inspection off-line, sideways motion can occur.

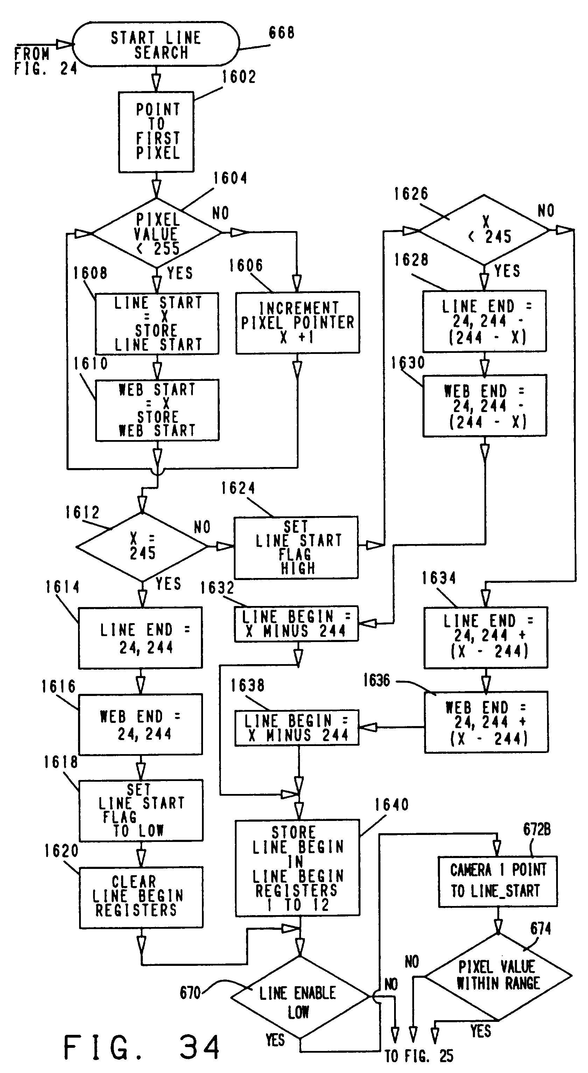

To that effect a modified program contained within processor 586 dedicated to the first camera 104 to monitor the edge portions 368 of the web 100 by the first camera 104 is shown in Fig. 34. At the configuration and calibration of the system the amount of pixels in the edge portions 368 for the first and rightmost cameras 101 has been determined and established. For a web 100 width of 60.0 inches, or 60,000 mils (1.52 meters) using twelve cameras 101 the total amount of pixels available from the cameras 101 is 24,576 (2,048 pixels per camera 101 times 12) for a total width, at 2.5 mils per pixel, of 61,440 mils (1.56 meters). Since the overlap 366 is 8 pixels of 2.5 mils (20 mils) for cameras 2 to 12, the amount of pixels actually available to inspect the web is 24,576 less 88 which equals 24,488 pixels for a width of 24,488 times 2.5 mils or 61,220 (1.56 meters). Since the web 100 is 60,000 mils in width the edge portions 368 will be 61,220 mils minus 60,000 mils equals 1,220 mils or 488 pixels (1,220 mils divided by 2.5 mils). Therefore, each edge portion 368 is 244 pixels (488 divided by 2) of 2.5 mils or 610 mils (1.55 cm). At calibration the system's software is given that value. Hence, the system knows that the edge portion for the first camera 101 should end at an X value of 244 or pixel number 245. Similarly, the system knows that the edge portion for the rightmost, or the twelfth camera 101 should start at an X value of 1804 or pixel 1804 of that camera 101. Since the system is configured and calibrated in such a manner as to allow each camera 101 to inspect its specific area of the web 100 the start of the edge portion for the twelve camera 101 would be more specifically at pixel 24,245 (24,488 minus 245) on the width of the web due to the overlap 366. At point 668 of Fig. 25, the program for the leftmost camera or camera one proceeds to step 1602 of Fig. 34 where a procedure for detecting the leftmost edge of the web is initiated. In step 1602 the pixel pointer is located at the first pixel and in step 1604 it is determined if the pixel value is less than 255. If its not, the program branches to step 1606 whereat the pixel pointer is incremented by one and branches back to step 1604 to evaluate the new pixel. The program will loop within steps 1604 and 1606 until a pixel having a value less than 255 is encountered.

When the latter condition is encountered, the program branches to step 1608 whereat the LINE_START parameter is established to equal the value of X and that LINE_START parameter value stored, to step 1610 whereat the WEB_START parameter is established to equal the value of X and that WEB_START parameter stored, and to step 1612 whereat it is established if the value of X equals 245. If it does, the program branches to step 1614 whereat the LINE_END parameter is established to equal the value 24,244 (the normal LINE_END location) and that LINE_END parameter value stored, to step 1616 whereat the WEB_END parameter is established to equal the value 24,244 (the normal WEB_END location) and that WEB_END parameter stored, to step 1618 whereat the LINE_START flag is set to low, to step 1620 whereat the LINE_BEGIN registers are cleared, and back to step 670 of Fig. 25 to start a line search. Step 672 of Fig. 25 is replaced by step 672B of Fig. 34 so that the pixel pointer for the first camera 104 points to the X value of LINE_START as the first pixel for that line.

If in step 1612 it is established that the X value do not equal 245 the program then branches to step 1624 whereat the LINE_START flag is set to high. The program then branches to step 1626 whereat it is determined if the X value is less than 245. If it is, the program then branches to step 1628 whereat the LINE_END is established to 24,244 minus (244 minus X) and that LINE_END parameter stored, to step 1630 whereat the WEB_END parameter is established to 24,244 minus (244 minus X) and that WEB_END parameter stored, to step 1632 whereat the LINE_BEGIN parameter is set to equal X minus 244 yielding a negative value, to step 1640 whereat the LINE_BEGIN parameter is stored in the video board 208 register dedicated for that purpose, and then the program branches to step 670 of Fig. 25 to start a line search.

If in step 1626 it is established that the X value is not less than 245 the program then branches to step 1634 whereat the LINE_END is established to 24,244 plus (X minus 244) and that LINE_END parameter stored, to step 1636 whereat the WEB_END parameter is established to 24,244 plus (X minus 244) and that WEB_END parameter stored, to step 1638 whereat the LINE_BEGIN parameter is set to equal X minus 244, as an offset, which would produce a positive value, to step 1640 whereat the LINE_BEGIN parameter is stored in the video board 208 register dedicated for that purpose, and then to step 670 of Fig. 25 to start a line search.

In this manner, the program informs the master program of the locations for LINE_START and WEB_START for the first camera 104 and LINE_END and WEB_END for the rightmost or twelfth camera 104. Upon encountering a location in step 1604 of Fig. 34 which has a value less than 255 the program has then established correctly the location of LINE_START, WEB_START, LINE_END and WEB_END.

In the preferred embodiment, the computer 202 reads the values LINE_START, WEB_START, LINE_END and WEB_END. The LINE_END value is transferred to the twelfth camera 104 so that the twelfth camera knows where to expect the end of the web. Alternatively the program for the twelfth camera can contain a modified procedure similar to Fig. 34 but for finding the right edge of the web rather than the left edge.

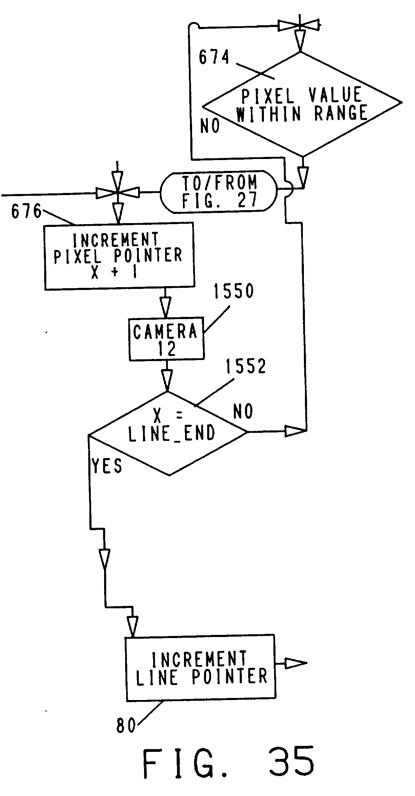

For the twelfth camera 104 the processor 586 of the video processing unit 218 dedicated to that camera contains a modification in the program of Fig. 25 as shown in Fig. 35. In the modification, the program proceeds from step 676 to step 1552 where the program determines if the pixel location equals the value stored in LINE_END. This step 1552 replaces step 678 of the procedure in Fig. 25. If step 1552 is false, the program branches back to step 674. If true, the program branches to step 680 whereat the line pointer is incremented.

The edge regions are empirically determined based upon the normal sideways movement of the web, in either direction, during processing. This information derived from these empirical determinations is used by the master program to maintain the reporting of the location of a defect on the X axis precise and, for pixels contained in successive lines to stay properly aligned.

In order to achieve the compensation for sideways movement of the web, at the configuration and calibration of the system, each camera 104 is allocated a field of view in pixels proportional to the total field of view of all the cameras 101 combined.

Since, as aforementioned, the total amount of available pixels is 24,576 and due to the overlaps 366 of 88 pixels the actual available pixels for cameras 101 one to twelve is 24,488, the actual total field of view is 24,488 pixels or 61,220 mils (1.55 meters).

The available pixels are divided into 120 lanes resulting in 204 pixels per lanes. The first camera 104 is allocated pixels number 1 to 2048 with pixels number 1 to 2040 comprising lanes number 1 to 10 with its last 8 pixels, 2041 to 2048, being common with the next lane. The second camera 104 is allocated pixels number 2041 to 4088 with pixels number 2041 to 4080 comprising lanes number 11 to 20 with its last 8 pixels, 4081 to 4088, being common with the next lane. This allocation is continued until the rightmost, twelfth camera 104 which is allocated pixels number 22,441 to 24,488 with pixels number 22,441 to 24,448 sharing the 110 lane with the prior eleventh camera 104 and with pixels 22,441 to 24,488 comprising lane number 110 to 120. Lane number 120 is comprised of 212 pixels for a width of 0.530 inches or 530 mils (1.3462 cm) as opposed to lane number 1 to 119 having a width of 0.510 inches or 510 mils (1.2954 cm). Although the available pixels are allocated into lanes as mentioned above, each video board 218 also maintains its own pixels allocation from one to two thousand and forty eight.

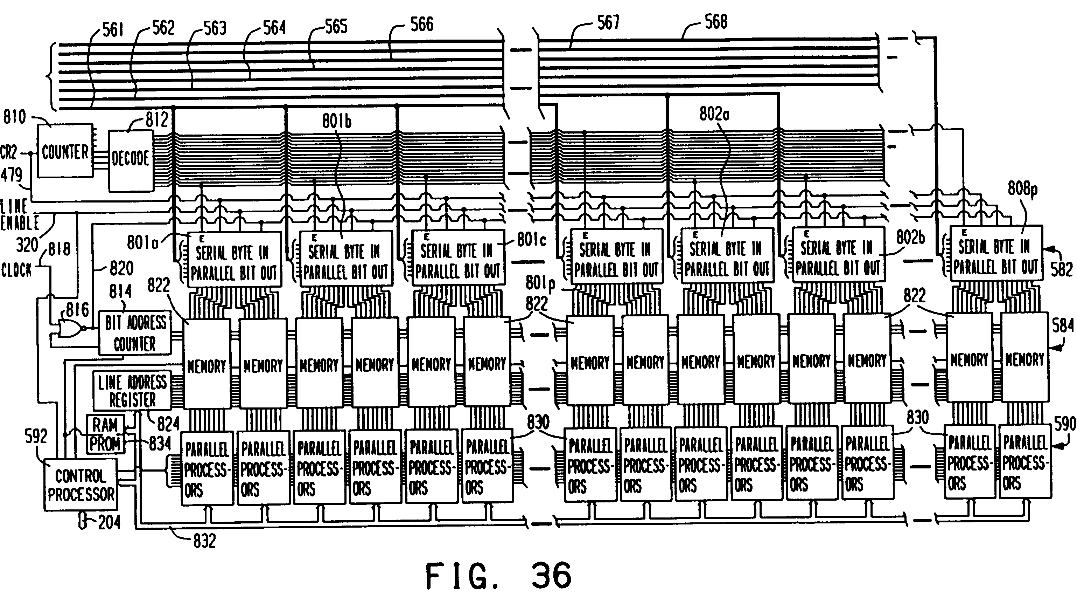

In Fig. 36, the arrangement of the serial byte to parallel bit converter 582, the parallel memory 584, the parallel processors 590, and the processor 592 is shown in detail. The channels 561-568 are connected to inputs of respective sixteen unit groups of one hundred twenty eight serial-byte-in parallel-bit-out units 801a-808p; for sake of brevity only the connection of channel 561 to inputs of units 801a, 801b, 801c, ... 801p; channel 562 to inputs of units 802a, 802b, ...; ...; and channel 568 to inputs of units ... 808p is shown in Fig. 36. Each of the units 801a-808p receive respective sixteen byte groups from the channels 561-568 in shift register fashion when the data valid signal is true on line 268. An eight bit counter 810 is operated by the 256-pulse packet of camera clock pulses CR2 on line 479. The four most-significant outputs of the counter 810 are decoded by decoder 812 which has its outputs connected to enable inputs of respective units in each group of sixteen serial-byte-in parallel-bit-out units 801a-808p; Fig. 36 shows decoder having output 0 connected to unit 801p, ... 808p; ...; output 13 connected to unit 801c, ...; output 14 connected to units 801b, 802b, ...; and output 15 connected to units 801a, 802a to sequentially active units 801p, ..., 801c, 801b and 801a to receive successive sixteen byte groups of the 256 byte line pixel segment on channel 561; to sequentially activate units ..., 802b and 802a to receive successive sixteen byte groups of the 256 byte line pixel segment on channel 562; ...; and to sequentially activate units 808p to receive successive sixteen byte groups of the 256 byte line pixel segment on channel 568. Thus the serial-byte-in parallel-bit-out units 801a-808p receive in proper order the 2048 bytes representing each line of the web being examined.

As an alternative to operation of the units 801a-808p in shift register fashion, these units could be addressed by the least significant outputs of the counter 810 (connected to the units 801a-808p inversely so as to sequentially address the units down) in a manner similar to random access memory.

When the line enable signal on line 320 becomes false, the units 801a-808p are changed from the serial byte input mode to a parallel bit output mode. The processor 592 responds to the data valid signal going low to reset a three-bit address counter 814 which in turn enables NOR gate 816 to pass a series of eight clock pulses from line 818 which are applied over line 820 to inputs of the counter 814 and the units 801a-808p. At the end of the series of eight clock pulses, the counter 814 disables the NOR gate 816. The clock pulses on line 820 simultaneously read out all 2048 pixel bytes in the units 801a-808p, one bit at a time during each clock pulse, onto parallel data lines connected to input/outputs of 256 memory units 822. Address inputs of the memory units 822 are controlled by binary outputs of the address counter 814 and outputs of a line address register 824 which is set by the processor 592. The 2048 parallel bit output of the units 801a-808p are written into the memory units at successive addresses controlled by counter 814 and at a block or line address previously set in the line address register 824. In this manner a plurality of pixel lines, for example 1024 lines, can be stored in the parallel memory 584. The memory 584 is operated as a circular memory buffer, i.e. the next line after the line stored at output 1023 of address register 824 is stored at output 0 of register 824.

The data input/outputs of the memory units 822 are connected to inputs of 256 units 830 which form the parallel processor 590. The control processor 592 sets a line address in the line address register 824 and resets the counter 814 to initiate a transfer of one line to the processor units 596, 2048-pixels being transferred simultaneously with the bits of each pixel being transferred serially. The control processor is connected to control inputs of the parallel processing units in parallel to control the parallel processing of the lines. Registers in the processors 830 are mapped in the memory address of the control processor 592 so that the processor 592 can read test results and pixel bytes from the individual units 830 over bus 832. Memory 834, including both RAM and EEPROM, contains the operating programs and control parameters for processor 592 to operate the units 830 and transfer the test results to the system computer 202.

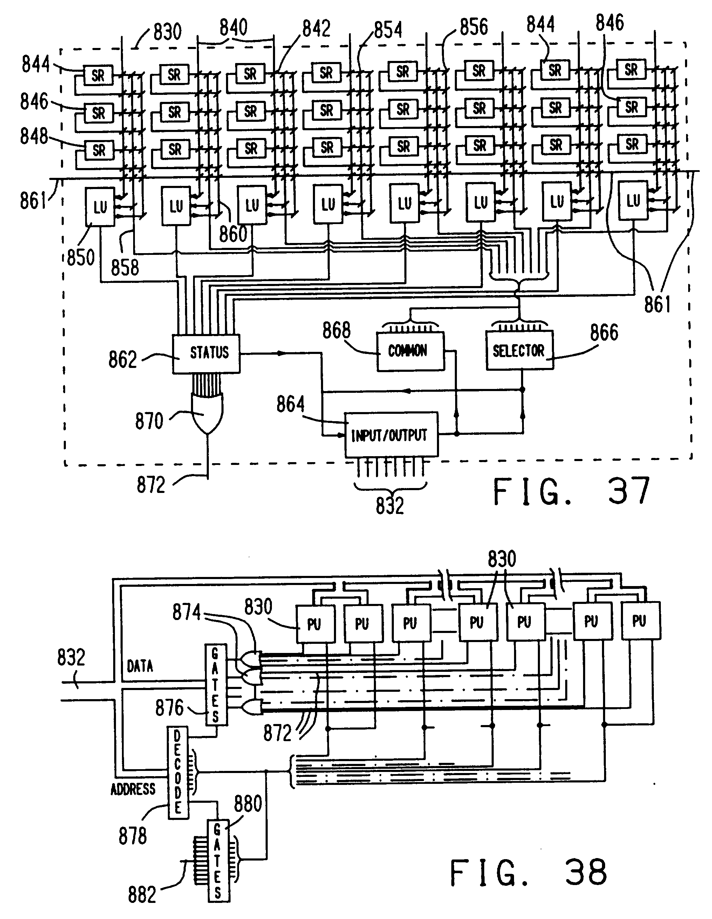

Each processing unit 830, as shown in detail in Fig. 37, has eight serial input/output lines 840 connected to the respective data input/output lines of a corresponding memory unit 822, Fig. 36. The lines 840 are connected by switches 842, under the selective control of the instructions from the processor 592, to inputs or outputs of one of three banks of shift registers 844, 846 and 848 or to inputs of logic units 850. The switches 842 can also selectively connect the inputs or outputs of a bank of shift registers 844, 846 or 848 to corresponding first inputs of the logic unit. Switches 854 and 856 selectively connect inputs or outputs of the banks of shift registers 844, 846 and 848 over lines 858 and 860 to corresponding second inputs or outputs of the logic units 850. Lines 861 provide for shifting of bytes either right or left in a selected bank of registers 844, 846 or 848 and the corresponding end shift registers of the adjacent processing units.

The logic units 850 are conventional serial processing units which are controlled by the control inputs from the processor 592 to perform arithmetic operations such as addition, subtraction and comparison, and Boolean logic operations such as AND and OR on the eight-bit serial words presented to their inputs and to transfer the results of the operations on their outputs back to one bank of the shift registers. Additionally arithmetic and logic operations in the logic units 850 produce a status bit which is stored in an eight bit status register 862. For example the eight bit words in registers 844 can be compared under one comparison instruction to the eight bit words in registers 846 and a corresponding bit is set high in the status register 862 for each word in registers 844 that is less than the corresponding word in registers 846; the corresponding bit in the status register 862 is set low for each word in shift registers 844 which is equal to or greater than the corresponding word in register 846. Under another comparison instruction, a corresponding bit is set high in the status register 862 for each word in registers 844 that is equal to the corresponding word in registers 846; the corresponding bit in the status register 862 is set low for each word in shift registers 844 which less than or greater than the corresponding word in register 846.

An input/output register 864 has parallel input/outputs connected to data lines of the bus 832 of the processor 592, has a serial input connected to outputs of the status register 862 and a common input/output of a selector 866, and has a serial output connected to the common input/output of the selector 866 and an input of a common connector switch 868. The common connector switch 868 can connect, under the control of the processor 592, the serial output of the register to all the lines 858 to enable, for example, the simultaneous transfer of the high limit for acceptable pixel values from the register 864 to all of the shift registers 846 or the simultaneous transfer of the low limit for acceptable pixel values from the register 864 to all of the shift registers 848. The selector switch 866 connects an individual line 858 to the input or output of the shift register 864 so that, for example, individual pixels, one at a time, can be read out from shift registers 844 to the register 864 to enable the processor 592 to read one or more pixels, one pixel at a time, in the parallel memory 584.

An OR gate 870 has inputs connected to outputs of the status register 862 and has an output connected to terminal 872 of the processing unit 830. As shown in Fig. 38, the terminals 872 of each group of sixteen processing units 830 are connected to inputs of a corresponding OR gate of sixteen OR gates 874. The outputs of the OR gates 874 are connected by gating unit 876 to corresponding data lines of the bus 832. Address lines of the bus 832 operate a decoder 878 which, at one address, activates the gating unit 876 so that the processor 592 can read the outputs of the OR gates 874. In this manner the processor 592 can determine with two comparison and two read cycles if an entire line of 2048 pixels contain a defective pixel which is above or below the desired range of pixel values. Under normal conditions the web contains very few defects resulting in very short processing times for each line of 2048 pixels to enable defect testing at relatively high web velocities.

Other outputs of the decoder 878 are connected to enable inputs of the respective processing units 830 so that the processor 592 can read from and write to the input/output register 864 of each processing unit 830. Further, one output of the decoder 878 operates a gating unit 880 which connects the enable inputs of the processing units 830 to a common enable line 882 so that the processor 592 can write in parallel to the input/output registers 864 of all of the processing units 830 simultaneously. This simultaneous write is used to transfer the upper and lower pixel limit values into the processing units 830.

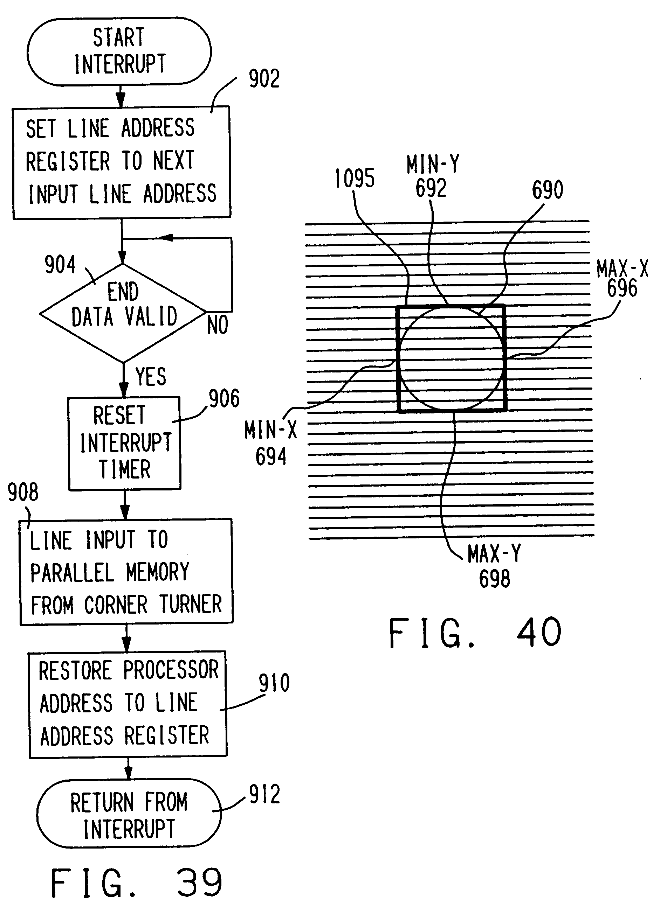

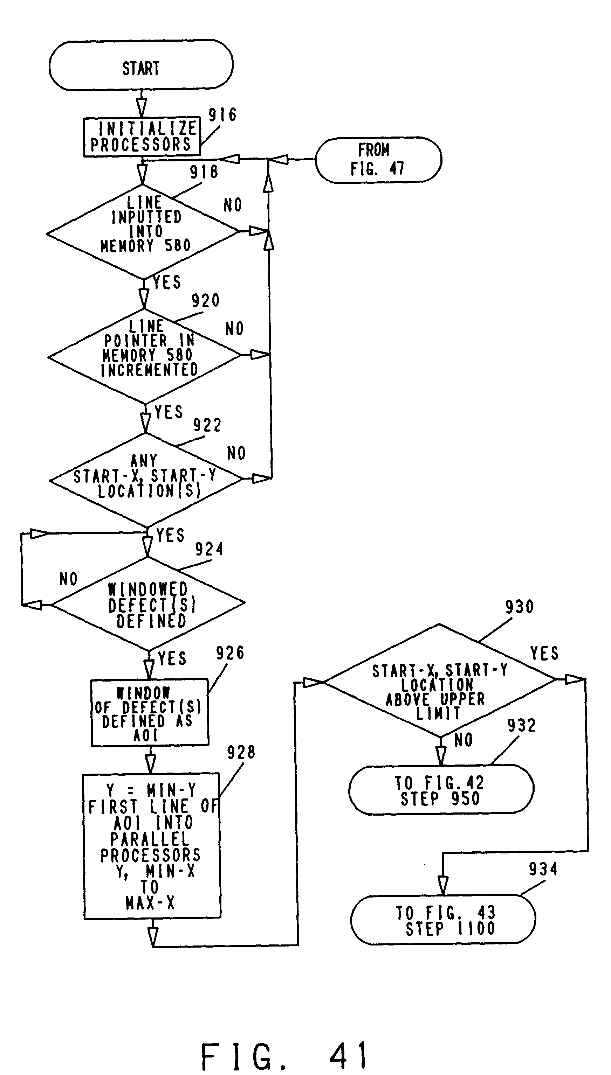

The operating program for the processor 592 includes a timer interrupt procedure illustrated in Fig. 39 which is called at the end of every data valid signal. Alternatively, the termination of the data valid signal can be used to trigger the interrupt rather than using a timer interrupt. In step 902 the line address register 824 is set to the next input line address. Then the program waits in step 904 until the end of the data valid pulse which indicates that all 256 pixels on each channel have been read into the corner turner 582. The timer is reset in step 906 to operate again just before the end of the next data valid pulse. In step 908 the processor 592 resets the bit address counter 814 and initiates the transfer of a line of pixels from the corner turner into the parallel memory 584. All 2048 pixels in a line are transferred simultaneous, the bits of each pixel being transferred serially. Following transfer of a line of pixels, the line address at the time of the interrupt is restored in the line address register in step 910 and the return from interrupt is executed in step 912.

The transfer of a line of pixels from the corner turner 582 into the parallel memory 584 takes a relatively short time, i.e. the time to transfer eight bits serially from each stage of the corner turner into its corresponding location in the parallel memory. The remaining portion of the data valid low cycle is available for processing of the pixels in parallel memory along with the remaining cycle of data valid high. Since this pixel processing time is the majority of the line input time and the majority between line input times, the present defect detecting system can operate on webs which are moving at a relatively fast speed, particularly at a much faster rate than is possible with prior art video camera defect detecting apparatus.

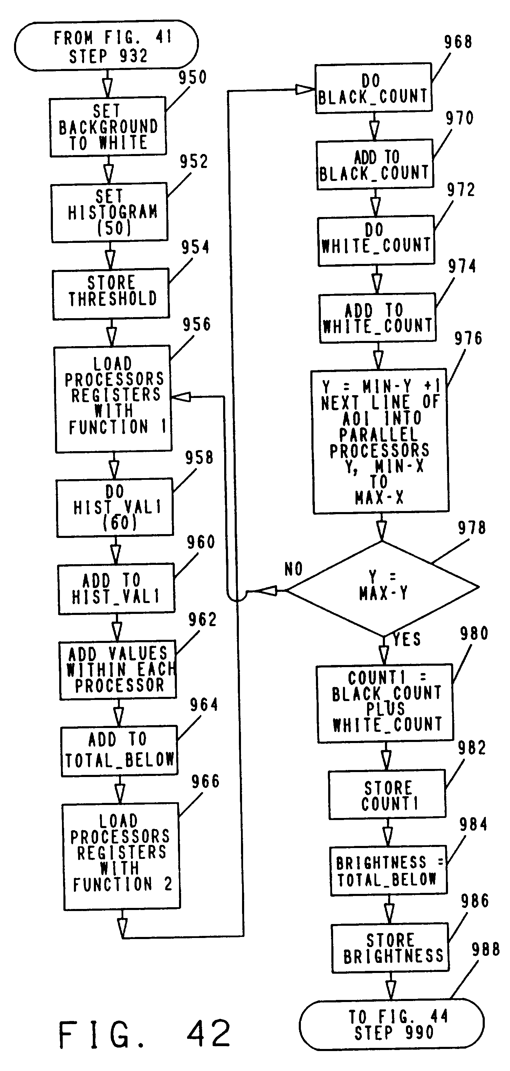

The main operating procedure for processor 592, which is tightly coupled to the program in processor 586, for analyzing a detected defect in the moving web 100 is shown in Fig. 41. In step 916 the processors 830 are initialized. In step 918, it is determined if a line has been inputted into memory 580. If not, the program loops back until step 918 indicates that a line has been inputted. Then in step 920, it is determined if a line pointer in shared memory 587 has been incremented indicating that a line has been analyzed by processor 586. If not, the program loops back until step 920 indicates that the line pointer in memory 587 has been incremented. Then in step 922, it is determined if processor 586 has reported any START-X,START-Y location or locations in shared memory 587 indicating that defect or defects have been detected. If not, the program loops back to step 918 until a location or locations are reported. Then the program proceeds to step 924 to determine if windowed defect or defects parameters are defined. If not, the program loops back until the parameters of at least one windowed defect in memory 580 is reported to processor 592 by processor 586.

Upon the presence of windowed defect or defects being reported in step 924, the program branches to step 926 whereat the windowed defect or defects becomes the area or areas of interest which is defined by MIN-X, MAX-X, MIN-Y, MAX-Y as defined by processor 586 for processor 592 within the parallel memory 584. For example see Fig. 40 and window 1095 defined by MIN-Y 692, MIN-X 694, MAX-X 696 and MAX-Y 698. For each area of interest the processor 592 reads its register whereat the intensity value at START-X,START-Y for each defect, area of interest, was stored by processor 586. This being a first step processing whereby it is defined whether the defect to be analyzed will be in the region of black defects such as specks, spots or similar defects, or, in the region of white defects such as holes, bubbles, gels, heat blisters or similar defects.

The program then proceeds to step 928 where the first line of pixels within the area or areas of interest, MIN-Y, MIN-X TO MAX-X, is read into the shift registers 844 of the processing elements 830. Then in step 930, it is determined if the START-X,START-Y location has a value which is above the upper limit range. If not, the program branches to step 932 and to step 950 of Fig. 42.

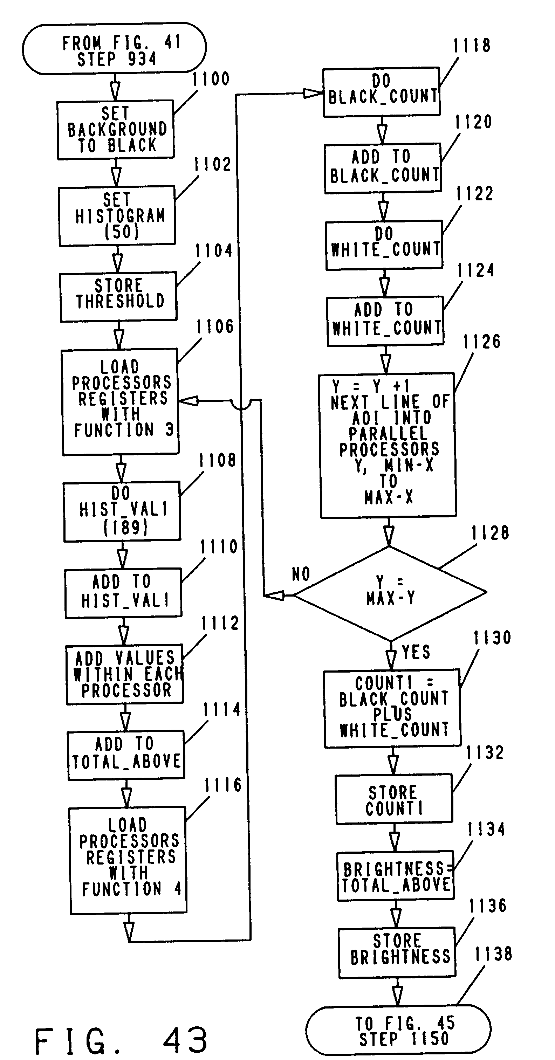

If in step 930 the START-X,START-Y location is above the upper limit range the program then branches to step 934 and to step 1100 of Fig. 43.

Referring to Fig. 42, upon step 930 of Fig. 40 having branched to step 932, in step 950 a background parameter is set to white. The program then proceeds to step 952 whereat an histogram parameter is set to fifty. This fifty value defines a value within the lower range, i.e. one hundred and twenty to zero, which is fifty percent of that range which would be sixty for the aforementioned range. The instruction from processor 592 to the parallel processors 830 is then to consider the pixels having a value less than or equal to sixty on the gray scale as black and the pixels having a value which is greater than sixty on the gray scale as white. This procedure yields in step 954 a THRESHOLD value which would be set, for a normal lower limit of one hundred and twenty, at sixty.

The program then proceeds to step 956 whereat the registers 846 of the parallel processors 830 are loaded with the THRESHOLD value and the registers 848 are loaded with the lower limit. In step 958 the values in registers 844 of parallel processors 830 are compared the values in registers 846 to determine pixels equal to sixty, and then all the compared values which have a value of sixty are summed thereby creating the value HIST_VAL1 which is accumulated in step 960. In step 962 the values in registers 844 are compared with the value in registers 848 to determine pixels having a value less than the lower limit, and the values of all pixels which are below the lower normal value of one hundred and twenty are summed creating the value TOTAL_BELOW which is accumulated in step 964.

The program then proceeds to step 966 whereat the registers 846 and 844 are compared using a function instruction to identify all pixels having a value less than or equal to the THRESHOLD. In step 968 all the pixels having a value less than or equal to the THRESHOLD value of sixty are counted thereby creating the value BLACK_COUNT which is accumulated in step 970. In step 972 all the pixels having a value greater than the THRESHOLD value of sixty are counted thereby creating the value WHITE_COUNT which is accumulated in step 974.

The program then proceeds to step 976 whereat the Y value is incremented and that next line of the AOI is loaded into the registers 844 of parallel processors 830. The program then proceeds to step 978 whereat it is determined if that new line equals the value MAX-Y. If not, the program branches back to step 956 for similar procedures.

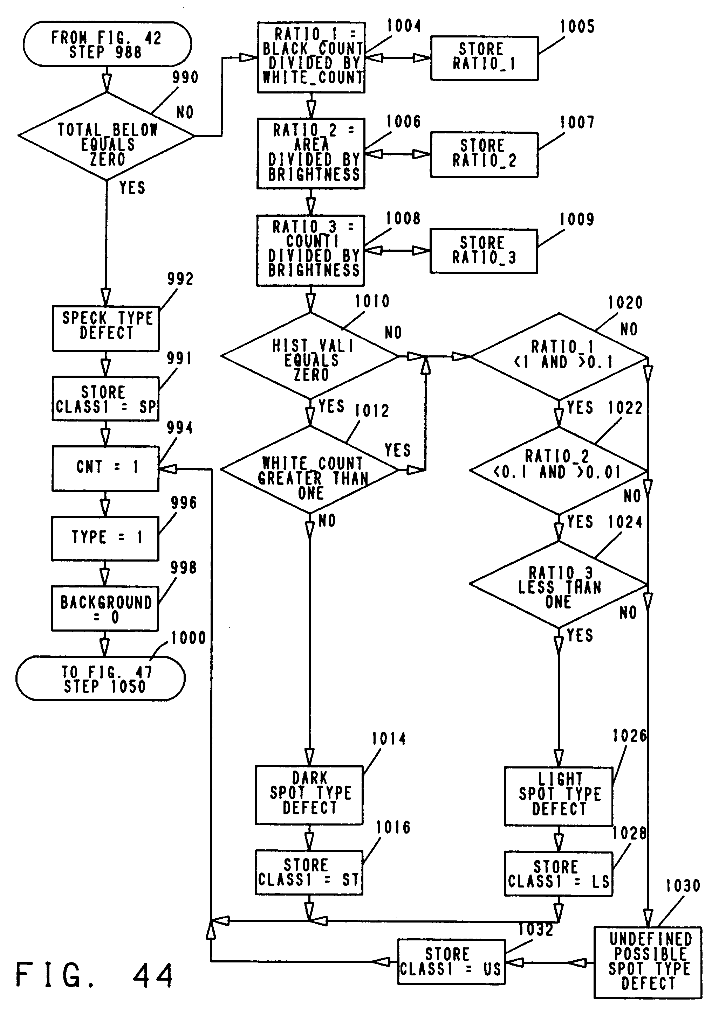

If in step 978 the Y value equals the value MAX-Y the program then branches to step 980 whereat the BLACK_COUNT and the WHITE_COUNT values are added to create the value COUNT1 which defines the total amount of pixels present within the window containing the defect. That COUNT1 value is stored in step 982. The program then proceeds to step 984 whereat the BRIGHTNESS parameter is established by the latter being given the value of TOTAL_BELOW, to step 986 whereat the BRIGHTNESS value is stored, and to step 988 whereat the program proceeds to step 990 of Fig. 44.

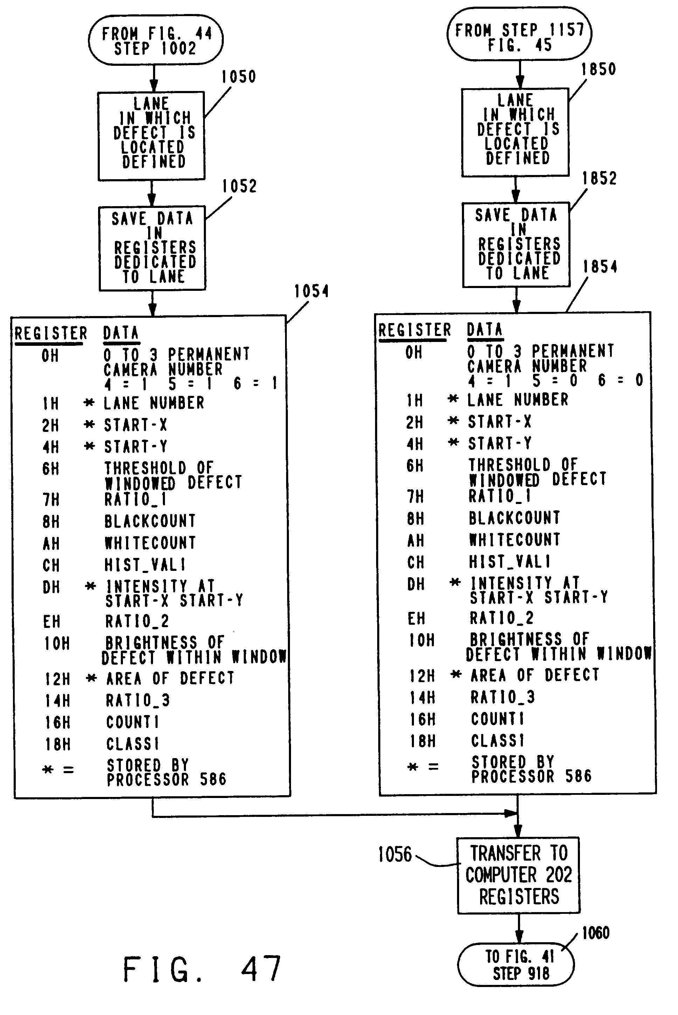

Referring to Fig. 44, in step 990 it is determined if the value TOTAL_BELOW is equal to zero. If all the processors or pixels added had indeed a value of zero (if all the pixels within the defect are totally black thus, having a value of zero creating no light transmission through the sites on the web 100) then the TOTAL_BELOW would be zero. In such a case the program branches to step 992 whereat it is defined that the defect is a speck type defect, to step 991 whereat a first level of classification is made by having the parameter CLASS1 equal SP, to step 994 whereat the parameter CNT is made to equal one since a defect was indeed present, to step 996 whereat the TYPE parameter is made to equal to one since the defect is a black type, to step 998 whereat the BACKGROUND parameter is made to equal zero since the background was set to white, and to step 1000 whereat the program proceeds to step 1050 of Fig. 47 to store or save the data within the registers dedicated to the lane containing the defect.

If in step 990 the parameter TOTAL_BELOW does not equal zero the program branches to step 1004 whereat the RATIO_1 parameter is computed by dividing the BLACK_COUNT by the WHITE_COUNT and that value is stored in step 1005, to step 1006 whereat the RATIO_2 parameter is computed by dividing the AREA parameter of the defect by the BRIGHTNESS parameter and that value is stored in step 1007, and to step 1008 whereat the RATIO_3 parameter is computed by dividing the COUNT1 parameter by the BRIGHTNESS parameter and that value is stored in step 1009. The program then proceeds to step 1010 whereat it is determined if the HIST_VAL1 parameter equals zero defining that no pixel within the defect have the value of sixty on the gray scale. If the HIST_VAL1 parameter equal zero then the program branches to step 101 whereat it is determined if the WHITE_COUNT parameter's value is greater than one. If not, the program branches to step 1014 whereat it is defined that the defect is a dark spot type defect, to step 1016 whereat a first level of classification is made by having the parameter CLASS1 equal ST, and to step 994 for a procedure through steps 994 to 1002 as before.

If in step 1010 the HIST_VAL1 parameter does not equal zero the program branches to step 1020. Similarly, if in step 1010 the HIST_VAL1 parameter does equal zero but in step 1012 the WHITE_COUNT parameter is greater than one the program branches to step 1020. In step 1020 the RATIO_1 parameter is evaluated to determine if it is less than 1 and greater than 0.1. If not the program branches to step 1030 whereat it is defined that the defect is undefined but a possible spot type, to step 1032 whereat a first level of classification is made by having the parameter CLASS1 equal US, and to step 994 for a procedure through steps 994 to 1002 as before. If in step 1020 the RATIO_1 parameter is within the aforementioned range, the program branches to step 1022 whereat the RATIO_2 parameter is evaluated to determine if it is less than 0.1 and greater than 0.01. If not, the program branches to step 1030 as before. If it does, the program branches to step 1024 whereat the RATIO_3 parameter is evaluated to determine if it is less than one. If not, the program branches to step 1030 as before. If it does, the program branches to step 1026 whereat it is defined that the defect is a light spot type defect, to step 1028 whereat a first level of classification is made by having the parameter CLASS1 equal LS, and to step 994 for a procedure through steps 994 to 1002 as before.

Referring to Fig. 41, if in step 930 the START-X,START-Y location is above the upper limit range the program then branches to step 934 and to step 1100 of Fig. 43.

Referring to Fig. 43, step 1100, the background parameter is set to black. This is achieved by an instruction from processor 592 to the parallel processors 830 to consider all pixels within the normal limits as black. The program then branches to step 1102 whereat the histogram parameter is set to fifty. The instruction from processor 592 to the parallel processors 830 is then to consider the pixels having a value less than or equal to the lower normal limit as black, or within the lower fifty percent, and the pixels having a value which is greater or equal to the upper limit as white, or the upper fifty percent. This procedure yields in step 1104 a THRESHOLD range which would be the normal lower limit of one hundred and twenty as the lower part of the range and one hundred and twenty three as the upper part of the range.

The program then proceeds to step 1106 whereat the registers 846 and 848 are loaded with the normal upper and lower limits. In step 1108 the parallel processors 830 compare the value in registers 844 to the values in registers 846 and 848 to determine all pixels within the window and which has a value within the THRESHOLD range thereby creating the value HIST_VAL1 which is accumulated in step 1110. In step 1112 the parallel processors 830 compare the value in registers 844 with registers 848, and the values of pixels which are above the normal value of one hundred and twenty three, or above the upper THRESHOLD range, are summed thereby creating the value TOTAL_ABOVE which is accumulated in step 1114.

The program then proceeds to step 1116 whereat the registers 844 and 846 are compared. In step 1118 all the pixels having a value less than or equal to the lower THRESHOLD value of one hundred and twenty are counted thereby creating the value BLACK_COUNT which is accumulated and stored in step 1120. In step 1122 all the processors having a value greater than the upper THRESHOLD value of one hundred and twenty three are counted thereby creating the value WHITE_COUNT which is accumulated and stored in step 1124.

The program then proceeds to step 1126 whereat the Y value is incremented and that next line of the AOI is loaded into the parallel processors 830. The program then branches to step 1128 whereat it is determined if that new line equals the value MAX-Y. If not, the program branches back to step 1106 for similar procedures.

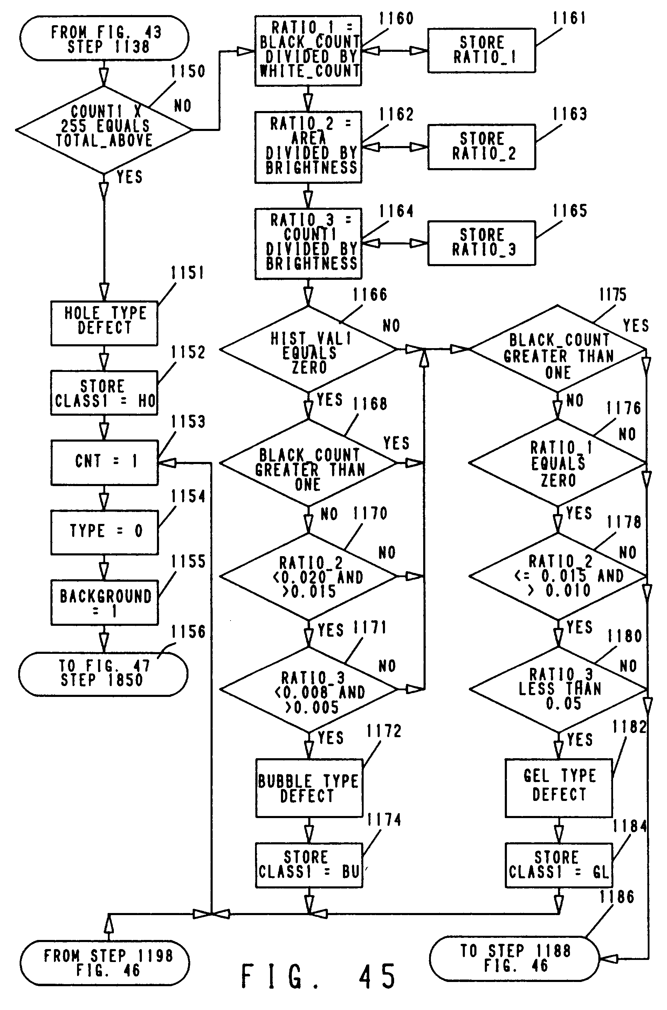

If in step 1128 the Y value equals the value MAX-Y the program then branches to step 1130 whereat the BLACK_COUNT and the WHITE_COUNT values are added to create the value COUNT1 which defines the total amount of abnormal pixels present within the window containing the defect. That COUNT1 value is stored in step 1132. The program then proceeds to step 1134 whereat the BRIGHTNESS parameter is established by the latter being given the value of TOTAL_ABOVE, to step 1136 whereat the BRIGHTNESS value is stored, and to step 1138 whereat the program branches to step 1150 of Fig. 45.

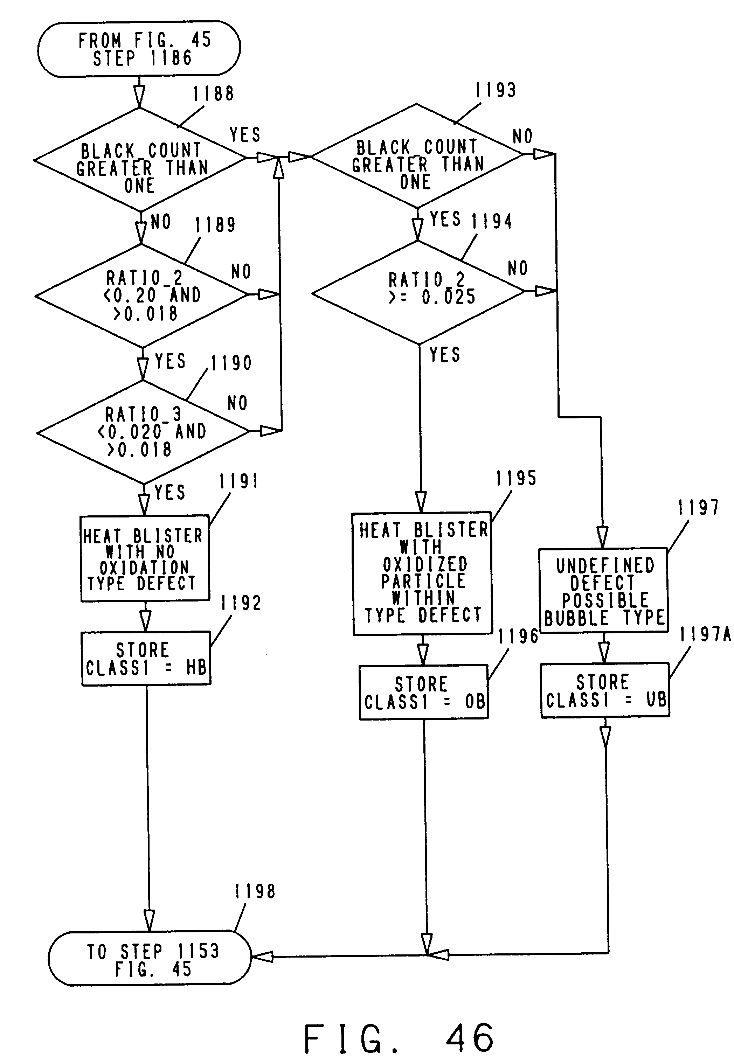

Referring to Fig. 45, in step 1150 it is determined if the value COUNT1 times 255 equals the TOTAL_ABOVE value. If all the processors or pixels added had indeed a value of two hundred and fifty five (all the pixels within the defect are totally white thus, having a value of two hundred and fifty five creating total light transmission through the sites on the web 100) then the TOTAL_ABOVE value would be COUNT1 (the total amount of pixels within the defect) times two hundred and fifty five. In such a case the program branches to step 1151 whereat it is defined that the defect is a hole type defect, to step 1152 whereat a first level of classification is made by having the parameter CLASS1 equal HO, to step 1153 whereat the parameter CNT is made to equal one since a defect is indeed present, to step 1154 whereat the TYPE parameter is made to equal zero since the defect is a white type, to step 1155 whereat the BACKGROUND parameter is made to equal one since the BACKGROUND was set to black, and to step 1156 whereat the program proceeds to step 1850 of Fig. 46 to store or save the data within the registers dedicated to the lane containing the defect.

If in step 1150 the parameter COUNT1 times 255 does not equal the TOTAL_ABOVE parameter's value the program branches to step 1160 whereat the RATIO_1 parameter is computed by dividing the BLACK_COUNT by the WHITE_COUNT and that value is stored in step 1161, to step 1162 whereat the RATIO_2 parameter is computed by dividing the AREA parameter of the defect by the BRIGHTNESS parameter and that value is stored in step 1163, and to step 1164 whereat the RATIO_3 parameter is computed by dividing the COUNT1 parameter by the BRIGHTNESS parameter and that value is stored in step 1165. The program then branches to step 1166 whereat it is determined if the HIST_VAL1 parameter equals zero defining that no pixel within the defect has a value within the THRESHOLD range. If the HIST_VAL1 parameter equals zero then the program branches to step 1168 whereat it is determined if the BLACK_COUNT parameter's value is equal to or greater than one. If not, the program branches to step 1170 whereat it is determined if RATIO_2 is less than 0.1 and greater than 0.01. If it does, the program branches; to step 1171 whereat it is determined if the RATIO_3 is less than 0.008 and greater than 0.005. If it does, the program branches to step 1172 whereat it is defined that the defect is a bubble type defect, to step 1174 whereat a first level of classification is made by having the parameter CLASS1 equal BU, and to step 1153 for similar procedures as for hole type defect.

If in step 1166 the HIST_VAL1 parameter does not equal zero the program branches to step 1175. If in step 1166 the HIST_VAL1 parameter do not equal zero but in step 1168 the BLACK_COUNT parameter is greater than one the program also branches to step 1175. If in steps 1170 and 1171 the result is no, the program also branches to step 1175.

If the program has branched to step 1175 from any of the steps 1166 to 1171, at that step it is determined if the BLACK_COUNT is greater than one. If not, the program branches to step 1176 whereat the RATIO_1 parameter is evaluated to determine if it equals zero. If it does, the program branches to step 1178 whereat the RATIO_2 parameter is evaluated to determine if it is less than or equal to 0.015 and greater than 0.010. If it does, the program branches to step 1180 whereat the RATIO_3 parameter is evaluated to determine if it is less than 0.05. If it is, the program branches to step 1182 whereat it is defined that the defect is a gel type defect, to step 1184 whereat a first level of classification is made by having the parameter CLASS1 equal GL, and to step 1153 for similar procedures as for hole and bubble type defects.

If in step 1175 the condition is true or in any of the steps 1176, 1178, and 1180 the condition is false the program branches to step 1186 and step 1188 of Fig. 46.

Referring to Fig. 46, in step 1188 it is determined if the BLACK_COUNT is greater than one. If not, the program then branches to step 1189 whereat the RATIO_2 parameter is evaluated to determine if it is less than 0.20 and greater than 0.018. If it is, the program branches to step 1190 whereat the RATIO_3 parameter is evaluated to determine if it is less than 0.020 and greater than 0.018. If it is, the program branches to step 1191 whereat it is defined that the defect is a heat blister type defect with no oxidized particles contained within, to step 1192 whereat a first level of classification is made by having the parameter CLASS1 equal HB, and to step 1198 whereat the program branches back to step 1153 of Fig. 45 for similar procedures as for prior white type defects.

If in step 1188 it is determined that the BLACK_COUNT is greater than one or if step 1189 or step 1190 is false, the program branches to step 1193 whereat the program branches to step 1194 whereat the RATIO_2 parameter is evaluated to determine if it is greater than or equal to 0.25. If it is, the program branches to step 1195 whereat it is defined that the defect is a heat blister type defect with oxidized particles contained within, to step 1196 whereat a first level of classification is made by having the parameter CLASS1 equal OB, and to step 1198 whereat the program branches back to step 1153 of Fig. 45 for similar procedures as for prior white type defects.

If in step 1193 or 1194 the condition is false, the program branches to step 1197 whereat it is defined that the defect is an undefined type but possibly a bubble type defect, to step 1197A whereat a first level of classification is made by having the parameter CLASS1 equal UB, and to step 1198 whereat the program branches back to step 1153 of Fig. 45 for similar procedures as for prior white type defects.

Referring to Fig. 47, when the program has branched to step 1050 from step 1002 of Fig. 44, the lane within which the defect is present is determined. The determination is actually performed at the start of the processing whereat processor 592 upon a read function of each register dedicated for each lane has found the lane number as stored by processor 586 according to the START-X position of the defect has an AOI to be processed. Similarly, the data in step 1052 is actually stored during processing of the AOI. Step 1054 reflects the data as stored.

When the program has branched to step 1850 from step 1157 of Fig. 45, the lane within which the defect is present is determined. The determination is actually performed at the start of the processing whereat processor 592 upon a read function of each register dedicated for each lane has found the lane number as stored by processor 586 according to the START-X position of the defect has an AOI to be processed. Similarly, the data in step 1852 is actually stored during processing of the AOI. Step 1854 reflects the data as stored.

Each lane has a set of sixteen registers, for a total of one thousand nine hundred and twenty for the one hundred and twenty lanes, which are mapped within the shared memory. The allocation of pixels per lane is as aforementioned. Similarly, the allocation of the range of pixels for each lane is as aforementioned as allocated by processor 586. However, the registers for lanes 1 and 120 are used for edge tracking of web 100.

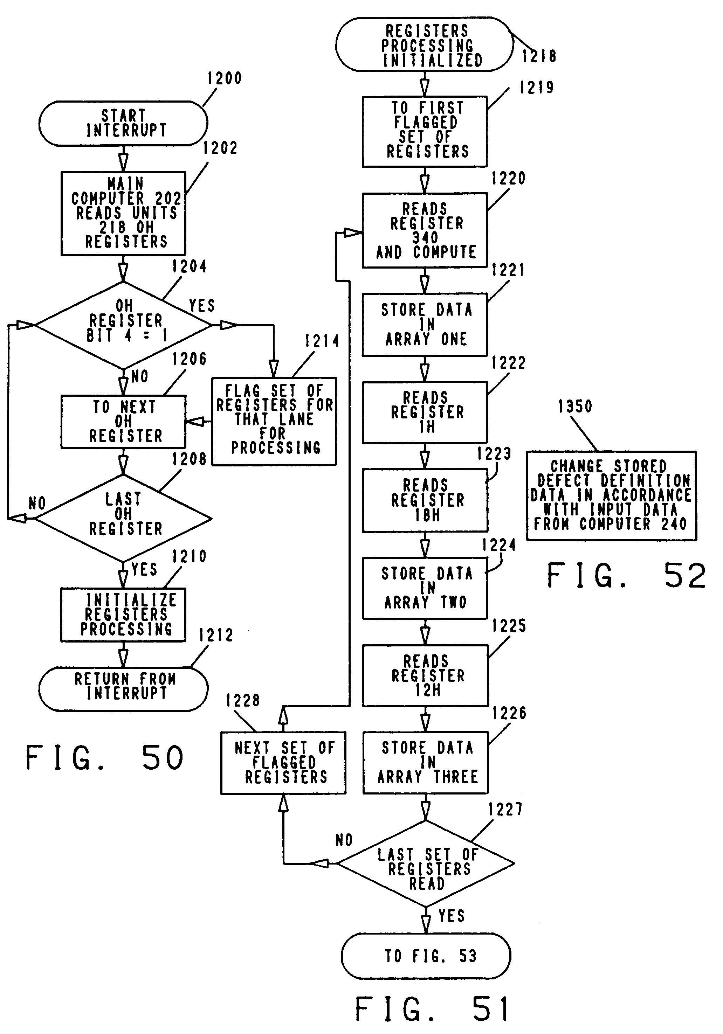

The data stored by units 218 in their dedicated set of registers, as shown in Fig. 47, is transferred to the system computer 202 in step 1056 by transferring the records to registers mapped in the memory space of computer 202 and setting an interrupt of the computer 202. Upon the units 218 writing data to any set of registers for a lane or lanes, an interrupt procedure in the computer 202, beginning at point 1200 in Fig. 50, is triggered. In step 1202 the system computer addresses the registers for units 218 to perform a read function on each of the OH register bit four for each unit 218 to define which unit or units 218 has indicated that a defect is present. In step 1204 upon encountering a 0H register which has a value of one in bit four (CNT1) the procedure branches to step 1214 whereat that set of registers for that lane is flagged for processing and the procedure branches to step 1206 whereat the procedure goes to the next 0H register. The procedure then proceeds to step 1208 to determine if the last 0H register all the units 218 was read. If not, the procedure branches back to step 1204. If in step 1208 it is determined that the last 0H register has been read, the procedure branches to step 1210 whereat the processing of registers is initiated and to step 1212 whereat a return from the interrupt is performed.

Referring to Fig. 51, upon the registers processing having been initiated in step 1218 by step 1210 of Fig. 50, the master program contained in the system computer 202 proceeds to step 1219 whereat the system computer 202 addresses the first set of flagged registers for a given lane, reads the data from the registers, and stores this information in an appropriate location in the memory of the computer 202.

The program then proceeds to step 1220 whereat it reads the longitudinal position data from the longitudinal position register 340 of the master timing and synchronization unit 216. This data was stored in register 340 upon the units 218 memories 580 and 584 having been reset to their first line for data input by the line enable signal. It is determined if register 340 data line address corresponds to the current line address 0 in the memories of the video processing units or to the following page; in the latter case the line address is decremented. To that value the program adds the value START-Y as reported by the unit 218 in register 4H. For example, if the value in register 340 is 100.50 feet and the START-Y location is the line number twenty five within the memories of unit 218 the precise location of that defect on the Y axis will be twenty five times 2.5 mils, which is the pixel size on the web 100, divided by 1000 which will yield 0.06250 inches or 0.005208 feet. This value is added to the value in register 340 producing a new value of 100.50 plus 0.005208 equals 100.505208. Since reporting is within 0.001 feet the longitudinal location will be reported as 100.505 feet. This new value is stored in step 1221 in its proper location within a first conventional report printing, one dimension array FOOTA_COUNTERA(1) wherein the value stored represent the value of a location within the 1,024 lines within the units 218 memories plus the value in register 340.

The program then branches to step 1222 whereat the program reads register 1H for the lane number within which the defect is contained and to step 1223 whereat it reads register 18H for the type of defect (CLASS1) as tentatively defined by the unit 218. The program then branches to step 1224 whereat this data, is stored in its proper location (lane) within a second report printing, two dimensional array TYPE_OF_DEFECT$(1,120) wherein each location represent a location for each of the one hundred and twenty lanes across the web 100.

The program then branches to step 1225 whereat register 12H is read for the size of the defect. The program then branches to step 1226 whereat that value is stored in its proper location (lane) within a third report printing, two dimensions array PRINTOUTA_RESULTA(1,120) wherein each location represents a location for each of the one hundred and twenty lanes across the web 100.

The program then branches to step 1227 whereat it is determined if the last set of flagged registers has been read. If not, the program branches to step 1228 whereat the program goes to the next set of flagged registers and back to step 1220 for a similar procedure until all the flagged set of registers have been read.

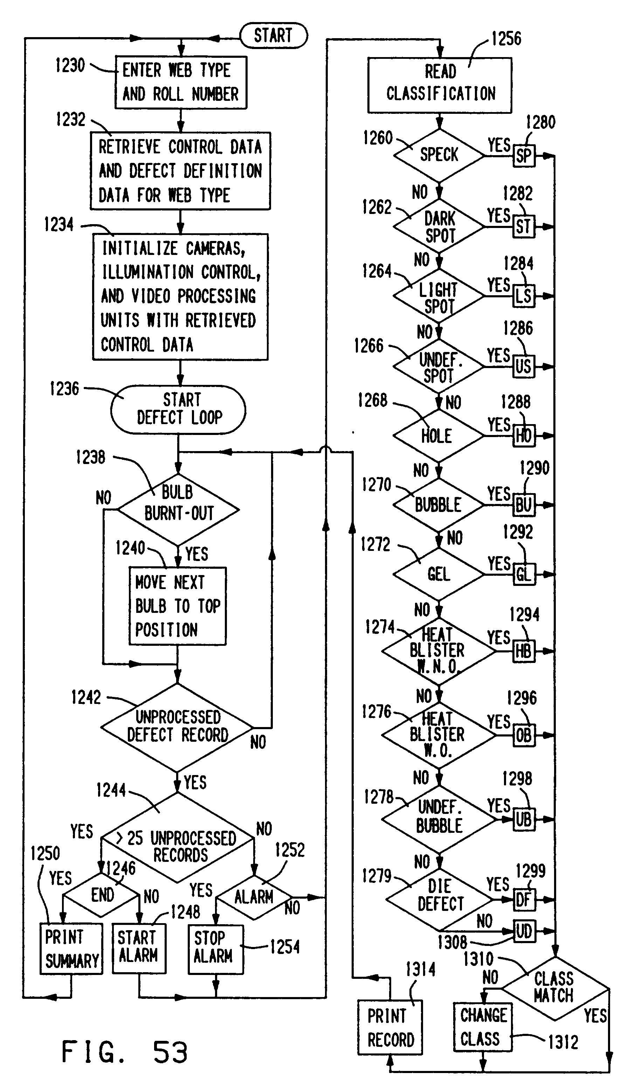

As shown in Fig. 53, the main defect processing program for the computer 202 begins at step 1230 where an operator enters the web type and roll number of the type of film to be processed. In step 1232, the control data and defect definition data for entered web type are retrieved. Then in step 1234, the cameras, illumination control, and video processing units are initialized in accordance with the control data retrieved in step 1232. This includes the setting of the register 426 of the camera control circuit, the setting of upper and lower pixel limits for the processors 586 and 592 of the video processing units 218, and the setting of the illumination value for the input/output control 148 of the illumination control circuit.

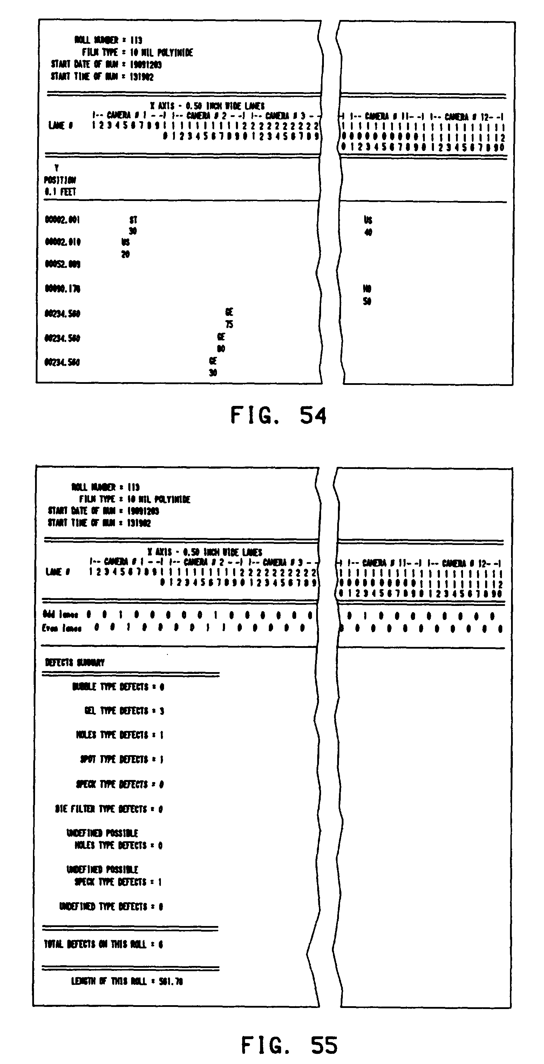

Following initialization, the system computer program is ready to start the main defect processing loop at point 1236. In step 1238, the status of the illumination sensors 154 is detected, and if a burnt-out bulb is detected, the input/output control 148 is operated to rotate the next bulb into the top position. Then in step 1242, the program checks for any unprocessed defect records. Each record created by the steps 1219 to 1226 in Fig. 51 is to be processed by the procedure of Fig. 53 to confirm, deny or replace the tentative classification of the defect by the processors 586 and 592. The program cycles back to step 1238 until new records or unprocessed records are detected in step 1242 (units 218 flagged set or sets of registers). When a new or unprocessed record is detected in step 1242, the program proceeds to step 1244 where the number of unprocessed records, units 218 flagged sets of registers, is determined. If this number is greater than 25, the program branches to step 1246 where it is determined if the end of the run has been selected by the operator, for an on-line system, or if the end of the roll of web has passed the inspection station, for an off-line system. The video processing units 218 may indicate numerous defects (unprocessed records) after the end of the run or after the end of the roll of web has passed the inspection station because it did not have time to process the remaining unprocessed records prior to the operator selecting the function end of run. If step 1246 is false, an alarm is started in step 1248 to indicate a serious problem with the manufacture of the film, and if step 1246 is true, the program in step 1250 prints a summary of defects similar to that shown in Fig. 54.

Normally step 1244 will not detect more than 25 defects (unprocessed records) present and will proceed to step 1252 where the existence of an alarm condition is detected. If true, the alarm is turned off in step 1254. From step 1248, from step 1254 or from step 1252 if false, the program proceeds to steps 1256-1279 where the master program evaluates the tentative conclusions reported by the local processors 586 and 592 on units 218 within their dedicated set of registers by accessing its knowledge modules whereat is stored the various features and characteristics of defects. Such features and characteristics including the parameters are shown in Tables 1, 2 and 3. These features and characteristics have been programmed in such knowledge modules manually, by input from computer 240 or, as amended by the master program itself. In the latter case, upon having been informed by the operator as to how to define an undefined defect in future production runs upon the operator having been shown, by the master program, the undefined defect on monitor 244 along with its specific features and characteristics of such undefined defect stored during a production run. In step 1256 the program accesses the first set of flagged registers, as defined by the procedure in Fig. 51, and reads register 18H to inquire as to the classification (CLASS1) that defect was given by the local processors. In steps 1260-1279 it evaluates the related registers. For a first example, if register 18H (CLASS1) has reported a speck (SP), register 0H bit 6 (TYP1) reported one (black type defect) and register 0H bit 7 (TYP2) reported a zero (white background) the program will, in step 1260, evaluate register 16H (COUNT1) which reports the total amount of abnormal pixels within the windowed defect along with register 8H (BLACK_COUNT) to determine if the same conclusion is reached that is, TOTAL_BELOW equals zero. If the same conclusion is reached the program will not alter the word stored in the report printing array TYPE_OF_DEFECT$ (1,120). For a second example, if register 18H (CLASS1) has reported a dark spot (ST), register 0H bit 6 (TYP1) reported one (black type defect) and register 0H bit 7 (TYP2) reported a zero (white background) the program, in step 1262, will evaluate register 7H (RATIO_1) which reports the BLACK_COUNT divided by the WHITE_COUNT, register EH (RATIO_2) which reports the area divided by the brightness, register 14H, register CH, register AH, register AH and register 8H to determine if the same conclusion is reached. If the same conclusion is reached the program will not alter the word stored in the report printing array TYPE_OF_DEFECT$(1,120).

If a different conclusion is reached by the master program, then tentatively reached by the local processors 586 and 592, the master program proceeds through the steps 1260-1279 and changes the word definition within the array TYPE_OF_DEFECT$(1,120) in the corresponding step 1280-1299 to its own conclusion if it conclusively defines the defect. For example, if the local processor 592 has concluded that it is a dark spot (ST) and the master program has defined the defect to be a light spot (LS) it will replace the entry at the location within TYPE_OF_DEFECT$(1,120) to LS in step 1284. If the master program conclusion is not conclusive, since the processing is performed in synchronization with the defect being within the display buffer of the display board 224, the master program changes the entry to US and stores that defect for recall by the operator.

The steps 1260-1279 constitute a set of rules stored in the knowledge modules for determining the type of defect. Each rule has a combination of data similar to the one contained in the local processors, as shown in Tables 1, 2 and 3, since such rules were downloaded by the master program at system start-up. Except that the master program has more versatile abilities. This data is empirically derived based upon the particular type of film being inspected. Tables 1, 2 and 3 gives typical values for a film of 1.0 mil (0.0254 mm) of polyimide type film.

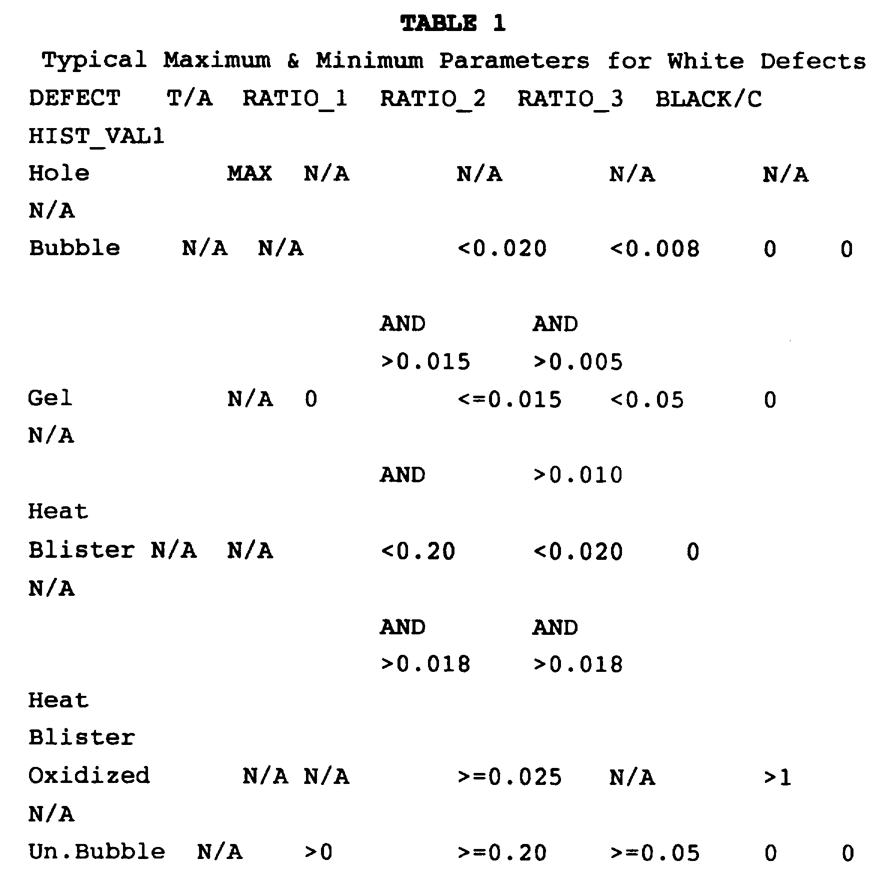

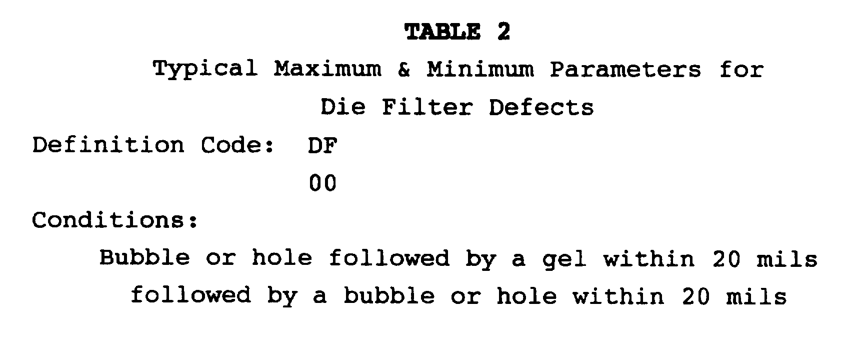

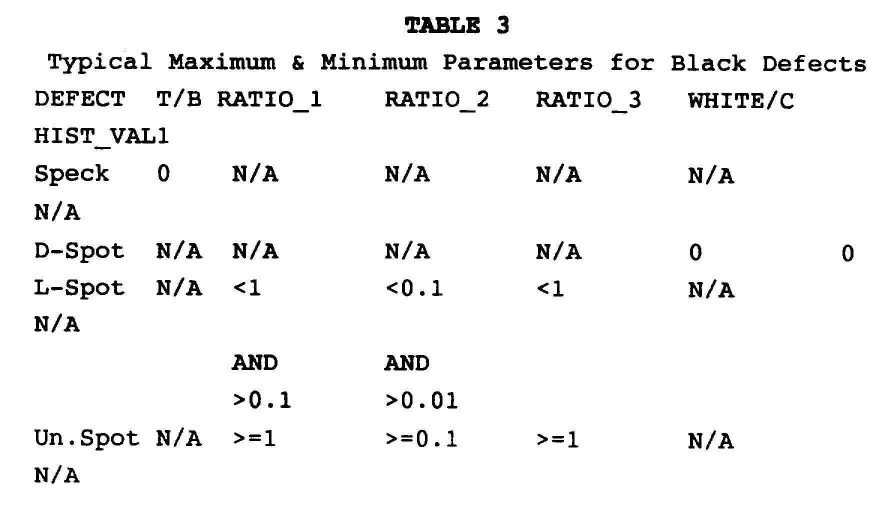

The program proceeds down through steps 1260-1279 until a true condition is found for a defect type which match the condition as reported by the local processors 586 and 592. If a true is found, which matches the condition as reported by the local processors 586 and 592, the program branches to the corresponding step 1280-1299 where the defect is labeled SP, ST, LS, US, HO, BU, GL, HB, OB, UB, and DF, respectively. If all the rules are false, then the defect is labeled UD in step 1308. From the steps 1280-1299, the program proceeds to step 1310 where the above classification as to the type of defect is compared to the tentative classification by the local processor 592 contained in the print record TYPE_OF_DEFECT$(1,120). The classification in the print record remains unchanged if it matches and changed if it do not match as previously described.

The printing of the results is printed on a full, or complete one hundred and twenty lanes basis. That is the conclusions are stored in the aforementioned arrays FOOTA_COUNTERA(1) which represent a location within the one hundred and twenty four line within the memories of units 218, TYPE_OF _DEFECT$(1,120) which represent a location for each of the one hundred and twenty lanes for the type of defect to be reported with the aforementioned code and, PRINTOUTA_RESULTA(1,120) which represent a location for each of the one hundred and twenty lanes for the size of the defect to be reported.

Therefore, the program would first print the first value contained in the array FOOTA_COUNTERA which would be the location of the start of a defect or defects on the Y or vertical axis for a given line, it would then print on the same line the word or words contained in the array TYPE_OF_DEFECT$ in its proper lane and then print the value or values in the array PRINTOUTA_RESULTA in its proper lane under the TYPE_OF_DEFECT$ location or locations.

For example, at the Y axis location 00002.001 this value would be stored within the printing array FOOTA_COUNTERA(1). The word ST would be stored in the printing array TYPE_OF_ DEFECT$(1,6) since it is located in the sixth lane and the word US would be stored in the printing array TYPE_OF_ DEFECTS(1,103) since it is located in lane 103. Similarly, the value 30 and 40 would be stored in the array PRINTOUTA _RESULTA(1,6) and (1,103) respectively. From the printing step 1314, the program cycles to the beginning of the process loop at point 1236.

A typical report printed in step 1314 is shown in Fig. 54. The width of the report is divided into cameras and lanes; each camera having ten lanes. In the left margin the Y position, position along the length of the film, is printed and under the corresponding camera and lane, the defect label and diameter are printed.

The report of Fig. 55 indicates the printing of the number of different types of defects found by the inspection.

As shown in Fig. 52, the computer 202 also contains a program with a procedure 1350 for changing the defect definition data in accordance with input data from the computer 240. The control data and defect definition data for the different types of film are stored in respective knowledge modules, and by the procedure 1350, the data in a selected one of these knowledge modules can be changed. Additionally the computer 202 and 240 contain conventional file transfer programs by which the computer 240 can download files saved in step 1219 of Fig. 51. Using conventional programs, an operator can view the defects on the monitor 246 of the computer 240.

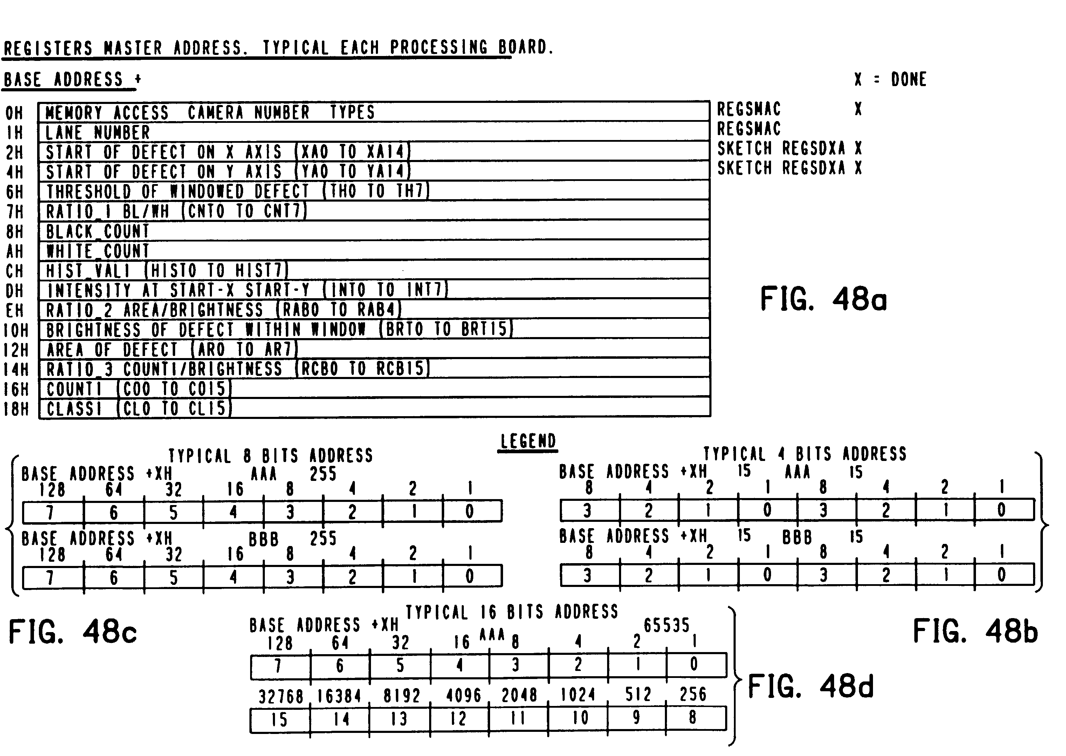

In Fig. 48, typical output register information is shown for the video processing boards 218.

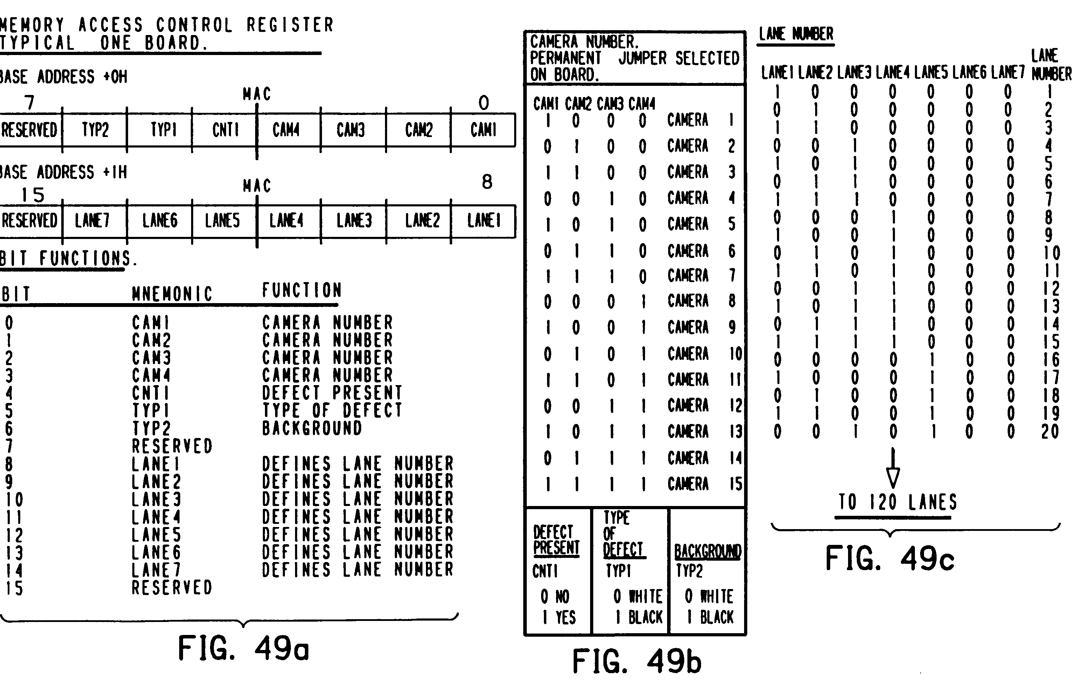

In Fig. 49, typical input and access control register information is shown for the video processing boards 218.

Since many variations, modifications, and changes in detail can be made to the above described embodiment without departing from the spirit of the invention, it is intended that all matter described above and shown in the drawings be interpreted as being only illustrative and not limiting to the scope of the invention as defined in the following claims.

## Claims

1. An apparatus for detecting defects in a moving web (100) comprising an encoder (110, 234) for generating pulses at a frequency proportional to the speed of the moving web, a charge coupled two dimensional array sensor (374) having means (216, 420, 378, 380, 382, 384, 388, 390, 396) for operating in a time-delay-and-integration mode, means (370) for imaging an area of the moving web on the array sensor, said time-delay-and-integration operating means including means (260, 262, 264, 430, 432, 434, 436, 440, 442, 444, 460, 464, 466, 452) responsive to the pulses generated by the encoder for transferring charges in the array to adjacent rows in correspondence with movement of the image across the array, said time-delay-and-integration operating means further including means (422, 472, 474, 482, 484, 486) for outputting an end row of pixel values between the times of the transfer of charge to adjacent rows, and means (218) for analyzing the pixel values to detect defects; characterized in that said means for analyzing the pixel values comprises an area of memory (644) for setting a range of acceptable values to initial values, testing means (674) for determining whether the pixel values lie outside the acceptable range of values, and means (674A, 674B, 675, 675A) responsive to the indication of out of range values for determining whether to redetermine the acceptable range of values based on the out of range values.

2. Apparatus for detecting defects in a moving web as claimed in claim 1, wherein said means (674A, 674B, 675, 675A) responsive to the indication of out of range values comprise means to determine whether the pixel values fall within a broader range of values, and to redetermine the acceptable range if the pixel values fall within this broader range.

3. An apparatus for detecting defects in a moving web (100) as claimed in claim 1 or 2 further characterized in that said time-delay-and-integration operating means includes means (460, 462, 464, 466) responsive to the pulses generated by the encoder for activating the sensor to integrate light induced charge only during a predetermined interval such that the charge integration time does not vary with changes in speed of the moving web.

4. An apparatus for detecting defects in a moving web (100) as claimed in any preceding claim further characterized in that said means for determining whether to redetermine the range of acceptable values includes means (674A, 674B, 674C) responsive to an indication of a defect for maintaining the range of acceptable values unchanged.

5. An apparatus for detecting defects in a moving web as claimed in any preceding claim further characterized by means (972, 112) for determining a white count which consists of the number of pixels in each defect above a predetermined acceptable range of pixel values, means (968, 1118) for determining a black count which consists of the number of pixels in each defect below the predetermined acceptable range, and means (990, 1012, 1020, 1150, 1166, 1175, 1188, 1193) for determining a defect type for each defect from said white count and said black count.

6. An apparatus for detecting defects in a moving web as claimed in any preceding claim further characterized by a plurality of cameras (104) each including a charge coupled two dimensional array sensor (374) having means (216, 420, 378, 380, 382, 384, 388, 390, 396) for operating in a time-delay-and-integration mode and responsive to the pulses generated by the encoder for transferring charges in the array to adjacent rows in correspondence with movement of the image accross the array to output a stream of end row of pixel values between the times of the transfer of charge to adjacent rows; means (360) for mounting the cameras in a row transverse to the moving web such that each camera views a corresponding portion of a line extending transversely across the moving web; and a plurality of processing means (596, 590, 592) for detecting defect pixels within the corresponding stream and for transmitting relative X-position information of the defect pixels.

7. An apparatus as claimed in any preceding claim, further comprising an illumination system for a web inspection station characterized by an elongated rotatable support (126) mounted perpendicular to the pth of movement of the web (100), a plurality of fluorescent tubular lamps (120, 122, 124) mounted longitudinally in spaced relationship about the axis of the rotatable support for being selectively moved by rotation of the support into juxtaposition with the web, means (154) for sensing the illumination of the web to produce a signal when the illumination drops below a predetermined level, and means (202, 148, 160) responsive to the signal from the sensing means for rotating the support to move another lamp into juxtaposition with the web.

8. An apparatus as claimed in claim 7 further characterized by variable power source means (136, 138, 140) responsive to the illumination sensing means (154, 156) for controlling the energization of the lamp in juxtaposition to the web to maintain a predetermined illumination.

9. A apparatus as claimed in claim 7 further characterized by a plurality of variable power source means (136, 138, 140) corresponding to the plurality of lamps (120, 122, 124) and having energization inputs and control inputs for controlling the energization of the corresponding lamp to maintain a predetermined illumination; and switching means (130, 132, 134) responsive to the moving of a lamp into juxtaposition to the web for energizing the energization inputs of the power source means of the juxtapositioned lamp.

## Patentansprüche

1. Vorrichtung zum Erfassen von Defekten in einer sich bewegenden Warenbahn (100), mit einem Codierer (110, 234) zum Erzeugen von Impulsen mit einer Frequenz, die zu der Geschwindigkeit der sich bewegenden Warenbahn proportional ist, einem ladungsgekoppelten zweidimensionalen Matrixsensor (374) mit Einrichtungen (216, 420, 378, 380, 382, 384, 388, 390, 396) zum Arbeiten mit einer Zeitverzögerung-und-Integration-Betriebsart, einer Einrichtung (370) zum Abbilden einer Fläche der sich bewegenden Warenbahn auf dem Matrixsensor, wobei die Zeitverzögerung- und Integration-Betriebseinrichtung Einrichtungen (260, 262, 264, 430, 432, 434, 436, 440, 442, 444, 460, 464, 466, 452) enthält, die auf die Impulse reagieren, die von dem Codierer erzeugt werden, um Ladungen in der Matrix auf benachbarte Zeilen in Übereinstimmung mit der Bewegung des Bildes über die Matrix hinweg zu überführen, wobei die Zeitverzögerung-und-Integration-Betriebseinrichtung weiterhin Einrichtungen (422, 472, 474, 482, 484, 486) zum Ausgeben einer Endreihe von Pixelwerten zwischen den Zeiten der Ladungsüberführung zu benachbarten Reihen und eine Einrichtung (218) zum Analysieren der Pixelwerte zur Erfassung von Defekten enthält; **dadurch gekennzeichnet**, daß
die Einrichtung zum Analysieren der Pixelwerte eine Speicherfläche (644) zum Einstellen eines Bereiches akzeptabler Werte auf Anfangswerte, eine Testeinrichtung (674) zum Bestimmen, ob die Pixelwerte außerhalb des akzeptablen Wertebereiches liegen, sowie Einrichtungen (674A, 674B, 675, 675A), die auf den Hinweis auf außerhalb des Bereiches liegende Werte reagieren, um festzustellen, ob der akzeptable Wertebereich auf der Grundlage der Werte außerhalb des Bereiches neu bestimmt werden muß, aufweist.

2. Vorrichtung zum Erfassen von Defekten in einer sich bewegenden Warenbahn nach Anspruch 1, **dadurch gekennzeichnet**, daß die Einrichtungen (674A, 674b, 675, 675A), die auf den Hinweis aufaußerhalb des Bereiches liegende Werte reagieren, eine Einrichtung zum Bestimmen, ob die Pixelwerte in einen weiteren (größeren) Wertebereich fallen, und um den akzeptablen Bereich erneut zu bestimmen, wenn die Pixelwerte in diesem weiteren Bereich fallen, umfassen.

3. Vorrichtung zum Erfassen von Defekten in einer sich bewegenden Warenbahn (100) nach Anspruch 1 oder 2, **dadurch gekennzeichnet**, daß die Zeitverzögerung-und-Integration-Betriebseinrichtung Einrichtungen (460, 462, 464, 466) enthält, die auf Impulse reagieren, welche durch den Codierer erzeugt werden, um den Sensor zum Integrieren von lichtinduzierter Ladung nur während eines vorbestimmten Intervalls zu aktivieren, so daß die Ladungsintegrationszeit sich mit Änderungen der Geschwindigkeit der sich bewegenden Warenbahn nicht verändert.

4. Vorrichtung zum Erfassen von Defekten in einer sich bewegenden Warenbahn (100) nach einem der vorhergehenden Ansprüche, **dadurch gekennzeichnet**, daß die Einrichtung zum Bestimmen, ob der Bereich akzeptabler Werte erneut zu bestimmen ist, Einrichtungen (674A, 674B, 674C) enthält, die auf einen Hinweis eines Defekts reagieren, um den Bereich akzeptabler Werte unverändert zu lassen.

5. Vorrichtung zum Erfassen von Defekten in einer sich bewegenden Warenbahn nach einem der vorhergehenden Ansprüche, **gekennzeichnet durch** Einrichtungen (972, 112) zum Bestimmen eines weißen Zählwerts, der aus der Anzahl von Pixeln in jedem Defekt oberhalb eines vorbestimmten akzeptablen Bereichs von Pixelwerten besteht, Einrichtungen (968, 118) zum Bestimmen eines schwarzen Zählwerts, der aus der Anzahl von Pixeln in jedem Defekt unterhalb des vorbestimmten akzeptablen Bereichs besteht, und Einrichtungen (990, 1012, 1020, 1150, 1166, 1175, 1188, 1193) zum Bestimmen eines Defekttyps für jeden Defekt von dem weißen Zählwert und dem schwarzen Zählwert.

6. Vorrichtung zum Erfassen von Defekten in einer sich bewegenden Warenbahn nach einem der vorhergehenden Ansprüche, **gekennzeichnet durch** eine Vielzahl von Kameras (104), die jeweils einen ladungsgekoppelten zweidimensionalen Matrixsensor (374) enthalten, der Einrichtungen (216, 420, 378, 380, 382, 384, 388, 390, 396) zum Arbeiten in einer Zeitverzögerung-und-Integration-Betriebsart hat, und auf die Impulse reagiert, die durch den Codierer erzeugt werden, um Ladungen in der Matrix zu benachbarten Reihen in Übereinstimmung mit der Bewegung des Bildes über die Matrix hinweg zu überführen, um einen Fluß von Endreihen- Pixelwerten zwischen den Zeiten der Ladungsüberführung zu benachbarten Reihen auszugeben; eine Einrichtung (360) zum Befestigen der Kameras in einer Reihe in Querrichtung zu der sich bewegenden Warenbahn, so daß jede Kamera einen entsprechenden Abschnitt einer Linie betrachtet, die sich in Querrichtung über die sich bewegende Warenbahn erstreckt; und eine Vielzahl von Verarbeitungseinrichtungen (596, 590, 592) zum Erfassen von Defektpixeln innerhalb des entsprechenden Flusses und zum Übertragen relativer XPosition-Information der Defektpixel.

7. Vorrichtung nach einem der vorhergehenden Ansprüche, mit einem Beleuchtungssystem für eine Warenbahn-Prüfstation, **gekennzeichnet durch** einen länglichen drehbaren Halter (126), der senkrecht zu dem Bewegungspfad der Warenbahn (100) befestigt ist, eine Vielzahl fluoreszierender röhrenförmiger Lampen (120, 122, 124), die in Längsrichtung beabstandet um die Achse des drehbaren Halters befestigt sind, um mittels einer selektiven Drehbewegung des Halters neben die Warenbahn gebracht werden zu können, eine Einrichtung (154) zum Erfassen der Beleuchtung der Warenbahn, um ein Signal zu erzeugen, wenn die Beleuchtung unter einen vorbestimmten Pegel abfällt, und Einrichtungen (202, 148, 160), die auf das Signal von der Erfassungseinrichtung reagieren, um den Halter zu drehen, um eine andere Lampe neben die Warenbahn zu bringen.

8. Vorrichtung nach Anspruch 7, **gekennzeichnet durch** Stromversorgungseinrichtungen (136, 138, 140) mit veränderlicher Leistung, die auf die die Beleuchtung erfassenden Einrichtungen (154, 156) reagieren, um die Energiezufuhr der Lampe neben der Warenbahn zu steuern, um eine vorbestimmte Beleuchtung aufrechtzuerhalten.

9. Vorrichtung nach Anspruch 7, **gekennzeichnet durch** eine Vielzahl von Stromversorgungseinrichtungen (136, 138, 140) mit veränderlicher Leistung entsprechend der Vielzahl von Lampen (120, 122, 124) mit EnergiezuliJhreingängen und Steuereingängen zum Steuern der Energiezufuhr der entsprechenden Lampe, um eine vorbestimmte Beleuchtung aufrecht zu erhalten; und Schalteinrichtungen (130, 132, 134), die auf die Bewegung einer Lampe neben die Warenbahn reagieren, um den EnergiezufiJhreingängen der Stromquelleneinrichtung der neben der Warenbahn positionierten Lampe Energie zuzuführen.

## Revendications

1. Appareil de détection de défauts sur une feuille continue mobile (100) comprenant un codeur (110, 234) pour engendrer des impulsions à une fréquence proportionnelle à la vitesse de la feuille continue mobile, un détecteur matriciel à transfert de charge (374) muni de moyens (216, 420, 378, 380, 382, 384, 388, 390, 396) pour un fonctionnement en mode de retard temporel et d'intégration, des moyens (370) pour constituer une image d'une zone de la feuille continue mobile sur le détecteur matriciel, les moyens de fonctionnement en mode de retard temporel et d'intégration comprenant des moyens (260, 262, 264, 430, 432, 434, 436, 440, 442, 444, 460, 464, 466, 452) réagissant aux impulsions engendrées par le codeur pour transférer des charges dans le détecteur matriciel vers des rangées adjacentes en correspondance avec le mouvement de l'image le long du détecteur matriciel, les moyens de fonctionnement en mode de retard temporel et d'intégration comprenant de plus des moyens (422, 472, 474, 482, 484, 486) pour produire en sortie une rangée finale de valeurs de pixels entre les instants de transfert de charge à des rangées adjacentes, et des moyens (218) pour analyser les valeurs de pixels pour détecter des défauts ; caractérisé en ce que les moyens pour analyser les valeurs de pixels comportent une zone de mémoire (644) pour attribuer des valeurs initiales à une gamme de valeurs acceptables, des moyens de test (674) pour déterminer si les valeurs de pixels se trouvent hors de la gamme acceptable de valeurs, et des moyens (674A, 674B, 675, 675A) réagissant à l'indication de valeurs hors de la gamme pour déterminer s'il faut redéterminer la gamme acceptable de valeurs sur la base des valeurs hors de la gamme.

2. Appareil de détection de défauts sur une feuille continue mobile selon la revendication 1, caractérisé en ce que les moyens (674A, 674B, 675, 675A) réagissant à l'indication de valeurs hors de la gamme comportent des moyens pour déterminer si les valeurs de pixels sont comprises dans une gamme plus étendue de valeurs, et pour redéterminer la gamme acceptable si les valeurs de pixels sont comprises dans cette gamme plus étendue.

3. Appareil de détection de défauts sur une feuille continue mobile (100) selon les revendications 1 et 2, caractérisé en outre en ce que les moyens de fonctionnement en mode de retard temporel et d'intégration comprennent des moyens (460, 462, 464, 466) réagissant aux impulsions engendrées par le codeur pour activer le détecteur afin qu'il n'intègre la charge induite par la lumière que pendant un intervalle prédéterminé tel que le temps d'intégration de charge ne varie pas avec les changements de vitesse de la feuille continue mobile.

4. Appareil de détection de défauts sur une feuille continue mobile (100) selon l'une quelconque des revendications précédentes, caractérisé en outre en ce que les moyens pour déterminer s'il faut redéterminer la gamme de valeurs acceptables comprennent des moyens (674A, 674B, 674C) réagissant à l'indication d'un défaut pour maintenir la gamme de valeurs acceptables inchangée.

5. Appareil de détection de défauts sur une feuille continue mobile selon l'une quelconque des revendications précédentes, caractérisé en outre par des moyens (972, 112) pour déterminer un comptage des blancs qui consiste en le nombre de pixels de chaque défaut au-dessus d'une gamme acceptable prédéterminée de valeurs de pixels, des moyens (968, 1118) pour déterminer un comptage des noirs qui consiste en le nombre de pixels de chaque défaut au-dessous de la gamme acceptable prédéterminée de valeurs de pixels, et des moyens (990, 1012, 1020, 1150, 1166, 1175, 1188, 1193) pour déterminer un type de défaut pour chaque défaut à partir du comptage des blancs et du comptage des noirs.

6. Appareil de détection de défauts sur une feuille continue mobile selon l'une quelconque des revendications précédentes, caractérisé en outre par une pluralité de caméras (104), dont chacune comprend un détecteur matriciel à transfert de charge bidimensionnel (374) muni de moyens (216, 420, 378, 380, 382, 384, 388, 390, 396) pour un fonctionnement en mode de retard temporel et d'intégration et réagissant aux impulsions engendrées par le codeur pour transférer les charges dans le détecteur matriciel vers des rangées adjacentes en correspondance avec le mouvement de l'image le long du détecteur matriciel pour produire en sortie un flux de rangée finale de valeurs de pixels entre les instants de transfert de charge vers des rangées adjacentes ; des moyens (360) pour monter les caméras sur une rangée transversale par rapport à la feuille continue mobile de sorte que chaque caméra observe une partie correspondante d'une ligne s'étendant transversalement à la feuille continue mobile ; et une pluralité de moyens de traitement (596, 590, 592) pour détecter des pixels de défauts dans le flux correspondant et pour transmettre l'information sur la position relative en X des pixels de défauts.

7. Appareil selon l'une quelconque des revendications précédentes, comprenant en outre un système d'éclairement pour un poste d'inspection de feuille continue caractérisé par un support allongé rotatif (126) monté perpendiculairement au chemin du mouvement de la feuille continue (100), une pluralité de lampes tubulaires fluorescentes (120, 122, 124) montées longitudinalement en relation espacée autour de l'axe du support rotatif pour être déplacées sélectivement par rotation du support jusqu'à se trouver en juxtaposition avec la feuille continue, des moyens (154) de détection de l'éclairement de la feuille continue pour produire un signal quand l'éclairement descend au-dessous d'un niveau prédéterminé, et des moyens (202, 148, 160) réagissant au signal en provenance des moyens de détection pour faire tourner le support pour amener une autre lampe en juxtaposition avec la feuille continue.

8. Appareil selon la revendication 7, caractérisé en outre par des moyens de source de puissance variable (136, 138, 140) réagissant aux moyens de détection de l'éclairement (154, 156) pour commander l'excitation de la lampe en juxtaposition avec la feuille continue pour maintenir un éclairement prédéterminé.

9. Appareil selon la revendication 7, caractérisé en outre par une pluralité de moyens de source de puissance variable (136, 138, 140) correspondant à la pluralité de lampes (120, 122, 124) et munis d'entrées d'excitation et de sorties de commande pour commander l'excitation de la lampe correspondante pour maintenir un éclairement prédéterminé ; et des moyens de commutation (130, 132, 134) réagissant au mouvement d'une lampe venant se juxtaposer avec la feuille continue pour exciter les entrées d'excitation des moyens de source de puissance de la lampe juxtaposée.
